# EUROPEAN PATENT APPLICATION

(11) **EP 3 451 675 A1**
(43) Date of publication of application: **06.03.2019**
(21) Application number: 17789898.8
(22) Date of filing: 26.04.2017
(51) Int. Cl.: H04N 21/2343, H04N 21/81, H04N 21/4402, G06T 15/08

(54) **METHOD FOR TRANSMITTING 360-DEGREE VIDEO, METHOD FOR RECEIVING 360-DEGREE VIDEO, APPARATUS FOR TRANSMITTING 360-DEGREE VIDEO, APPARATUS FOR RECEIVING 360-DEGREE VIDEO**

(30) Priority: 26.04.2016 US 201662327450 P; 13.05.2016 US 201662335710 P; 16.05.2016 US 201662337299 P; 23.05.2016 US 201662340487 P; 31.05.2016 US 201662343148 P
(71) Applicant: LG Electronics Inc., Seoul 07336 (KR)
(72) Inventor: LEE, Jangwon, Seoul 06772 (KR); OH, Sejin, Seoul 06772 (KR); LEE, Junwoo, Seoul 06772 (KR); SUH, Jongyeul, Seoul 06772 (KR)
(74) Representative: Frenkel, Matthias Alexander
(86) International application number: PCT/KR2017/004406
(87) International publication number: WO 2017/188714

(57) **Abstract**

According to a feature of the present invention, a method for transmitting a 360-degree video is disclosed. The method for transmitting a 360-degree video according to an embodiment of the present invention comprises the steps of: obtaining 360-degree video data; mapping the 360-degree video data to a 2D image; dividing the 2D image into two or more regions, and encoding each individual region or a plurality of regions; generating signalling information with respect to the 360-degree video data; and transmitting a data signal including the encoded 2D image and the signalling information, wherein the signalling information includes grouping information about grouping of the two or more regions.

## Description

### [Technical Field]

The present invention relates to a 360-degree video transmission method, a 360-degree video reception method, a 360-degree video transmission apparatus, and a 360-degree video reception apparatus.

### [Background Art]

A virtual reality (VR) system provides a user with sensory experiences through which the user may feel as if he/she were in an electronically projected environment. A system for providing VR may be further improved in order to provide higher-quality images and spatial sound. Such a VR system may enable the user to interactively enjoy VR content.

### [Disclosure]

### [Technical Problem]

VR systems need to be improved in order to more efficiently provide a user with a VR environment. To this end, it is necessary to propose plans for data transmission efficiency for transmitting a large amount of data such as VR content, robustness between transmission and reception networks, network flexibility considering a mobile reception apparatus, and efficient reproduction and signaling.

### [Technical Solution]

According to objects of the present invention, the present invention proposes a 360-degree video transmission method, a 360-degree video reception method, a 360-degree video transmission apparatus, and a 360-degree video reception apparatus.

In an aspect of the present invention, a 360-degree video reception apparatus is disclosed.

A 360-degree video reception apparatus according to an embodiment of the present invention includes a reception unit for receiving a data signal including a 2D image including 360-degree video data and signaling information about the 360-degree video data, the 2D image being divided into two or more regions so as to be encoded in individual-region units or in multiple-region units, a data decoder for decoding the 2D image included in the data signal, a signaling decoder for decoding the signaling information included in the data signal, and a renderer for processing the 2D image to render the 360-degree video data in a 3D space, wherein the signaling information may include grouping information enabling grouping of the two or more regions.

The grouping information may include first group information providing grouping information about the individual region or the multiple regions that can be reproduced.

In addition, the grouping information may further include second group information providing grouping information about the individual region or the multiple regions that can be switched.

The signaling information may further include coding dependency information between individual regions, between multiple regions, or between the individual regions and the multiple regions.

The signaling information may further include projection scheme information indicating the projection scheme used to project the 360-degree video data on the 2D image.

The signaling information may further include mapping information between the 2D image and a 360-degree image included in the 360-degree video data.

The signaling information may further include rotation information indicating the rotational angle when at least one of the individual regions of the 2D image is rotated by a predetermined angle so as to be mapped on the 2D image.

The renderer may generate and output user viewport information including at least one region.

In an embodiment, the data decoder may decode data corresponding to the at least one region included in the user viewport information received from the renderer.

In another embodiment, the apparatus may further include a file parser for decapsulating a file format included in the data signal, and the file parser may extract data corresponding to the at least one region included in the user viewport information received from the renderer.

In a further embodiment, the reception unit may receive data corresponding to the at least one region included in the user viewport information received from the renderer.

In another aspect of the present invention, a 360-degree video transmission method is disclosed.

A 360-degree video transmission method according to an embodiment of the present invention includes acquiring 360-degree video data, mapping the 360-degree video data on a 2D image, dividing the 2D image into two or more regions and encoding the regions in individual-region units or in multiple-region units, generating signaling information about the 360-degree video data, processing the encoded 2D image and the signaling information for transmission, and transmitting the processed 2D image and signaling information over a broadcast network, wherein the signaling information includes grouping information enabling grouping of the two or more regions.

The grouping information may include first group information providing grouping information about the individual region or the multiple regions that can be reproduced.

In addition, the grouping information may further include second group information providing grouping information about the individual region or the multiple regions that can be switched.

The signaling information may further include coding dependency information between individual regions, between multiple regions, or between the individual regions and the multiple regions.

The signaling information may further include projection scheme information indicating the projection scheme used to project the 360-degree video data on the 2D image.

The signaling information may further include mapping information between the 2D image and a 360-degree image included in the 360-degree video data.

The signaling information may further include rotation information indicating the rotational angle when at least one of the individual regions of the 2D image is rotated by a predetermined angle so as to be mapped on the 2D image.

In other aspects of the present invention, a 360-degree video transmission apparatus and a 360-degree video reception method are disclosed.

### [Advantageous Effects]

According to the present invention, it is possible to efficiently transmit 360-degree content in an environment that supports next-generation hybrid broadcasting using a terrestrial broadcast network and the Internet.

According to the present invention, it is possible to propose a method of providing interactive experiences when a user enjoys 360-degree content.

According to the present invention, it is possible to propose a method of performing signaling such that the intention of a 360-degree content author is accurately conveyed when a user enjoys 360-degree content.

According to the present invention, it is possible to propose a method of efficiently increasing transmission capacity and transmitting necessary information at the time of transmitting 360-degree content.

### [Description of Drawings]

FIG. 1 is a view showing the entire architecture for providing a 360-degree video according to the present invention;
FIG. 2 is a view showing a 360-degree video transmission apparatus according to an aspect of the present invention;
FIG. 3 is a view showing a 360-degree video reception apparatus according to another aspect of the present invention;
FIG. 4 is a view showing a 360-degree video transmission apparatus/360-degree video reception apparatus according to another embodiment of the present invention;
FIG. 5 is a view showing the concept of principal aircraft axes for describing 3D space in connection with the present invention;
FIG. 6 is a view showing projection schemes according to an embodiment of the present invention;
FIG. 7 is a view showing a tile according to an embodiment of the present invention;
FIG. 8 is a view showing 360-degree-video-related metadata according to an embodiment of the present invention;
FIG. 9 is a view showing the structure of a media file according to an embodiment of the present invention;
FIG. 10 is a view showing the hierarchical structure of boxes in ISO BMFF according to an embodiment of the present invention;
FIG. 11 is a view showing the overall operation of a DASH-based adaptive streaming model according to an embodiment of the present invention;
FIG. 12 is a view showing a 360-degree video processing method according to an embodiment of the present invention;
FIG. 13 is a view showing a track header box according to an embodiment of the present invention;
FIG. 14 is a view showing a track selection box according to an embodiment of the present invention;
FIG. 15 is a view showing a track group box according to an embodiment of the present invention;
FIG. 16 is a view showing a track reference box according to an embodiment of the present invention;
FIG. 17 is a view showing a full picture sequence according to an embodiment of the present invention;
FIGs. 18 and 19 are views showing the structure of an ISO BMFF file in an embodiment in which 360-degree video includes four tile tracks and one non-tile track and in which no extractor is used;
FIGs. 20 and 21 are views showing the structure of an ISO BMFF file in an embodiment in which 360-degree video includes four tile tracks and one non-tile track and in which an extractor is used;
FIGs. 22 and 23 are views showing the structure of an ISO BMFF file in an embodiment in which 360-degree video includes one full picture track and four tile tracks and in which each tile track refers to a full picture using an extractor;
FIG. 24 is a view showing a full picture sequence according to another embodiment of the present invention;
FIGs. 25 and 26 are views showing the structure of an ISO BMFF file in an embodiment in which 360-degree video includes a non-tile track, a tile region track, and a tile set track for a base layer and a non-tile track, a tile region track, and a tile set track for an enhancement layer and in which no extractor is used;
FIGs. 27 and 28 are views showing the structure of an ISO BMFF file in an embodiment in which 360-degree video includes a non-tile track, a tile region track, and a tile set track for a base layer and a non-tile track, a tile region track, and a tile set track for an enhancement layer and in which an extractor is used;
FIG. 29 is a view showing a 360-degree video acquisition space and/or a user viewport space;
FIG. 30 is a view showing signaling information for 360-degree video data selection, transmission, and reproduction based on a user viewport according to an embodiment of the present invention;
FIG. 31 is a view showing signaling information for 360-degree video data selection, transmission, and reproduction based on a user viewport according to another embodiment of the present invention;
FIG. 32 is a view showing the state in which 360-degree video according to an embodiment of the present invention is mapped in a 2D frame;
FIGs. 33 and 34 are views showing signaling information for 360-degree video data selection, transmission, and reproduction based on a user viewport according to another embodiment of the present invention;
FIG. 35 is a view showing signaling information for 360-degree video data selection, transmission, and reproduction based on a user viewport according to another embodiment of the present invention;
FIG. 36 is a view showing signaling information for 360-degree video data selection, transmission, and reproduction based on a user viewport according to another embodiment of the present invention;
FIG. 37 is a view showing a VR video region box according to another embodiment of the present invention;
FIG. 38 is a view showing signaling information for 360-degree video data selection, transmission, and reproduction based on a user viewport according to another embodiment of the present invention;
FIG. 39 is a view showing the relationship between regions and tile regions using VR video region info group entry;
FIG. 40 is a view showing signaling information for 360-degree video data selection, transmission, and reproduction based on a user viewport according to a further embodiment of the present invention;
FIG. 41 is a view showing the syntax of @value for indicating an area range or a user viewport support range in an acquisition space of VR video transmitted through DASH;
FIG. 42 is a view showing a full picture frame and a full picture frame partitioned into regions, and FIG. 43 is a view showing MPD including signaling information related to FIG. 42;
FIG. 44 is a view showing a full picture frame and a full picture frame partitioned into regions, and FIG. 45 is a view showing MPD including signaling information related to FIG. 44;
FIG. 46 is a view showing the operation of a receiver according to an embodiment of the present invention;
FIG. 47 is a view showing the operation of a receiver according to another embodiment of the present invention;
FIG. 48 is a view showing the operation of a receiver according to a further embodiment of the present invention;
FIG. 49 is a view showing a 360-degree video transmission method according to an embodiment of the present invention; and
FIG. 50 is a view showing a 360-degree video reception apparatus according to an embodiment of the present invention.

### [Best Mode]

Reference will now be made in detail to the preferred embodiments of the present invention with reference to the accompanying drawings. The detailed description, which will be given below with reference to the accompanying drawings, is intended to explain exemplary embodiments of the present invention, rather than to show the only embodiments that can be implemented according to the invention. The following detailed description includes specific details in order to provide a thorough understanding of the present invention. However, it will be apparent to those skilled in the art that the present invention may be practiced without such specific details.

Although most terms used in the present invention have been selected from general ones widely used in the art, some terms have been arbitrarily selected by the applicant and their meanings are explained in detail in the following description as needed. Thus, the present invention should be understood according to the intended meanings of the terms rather than their simple names or meanings.

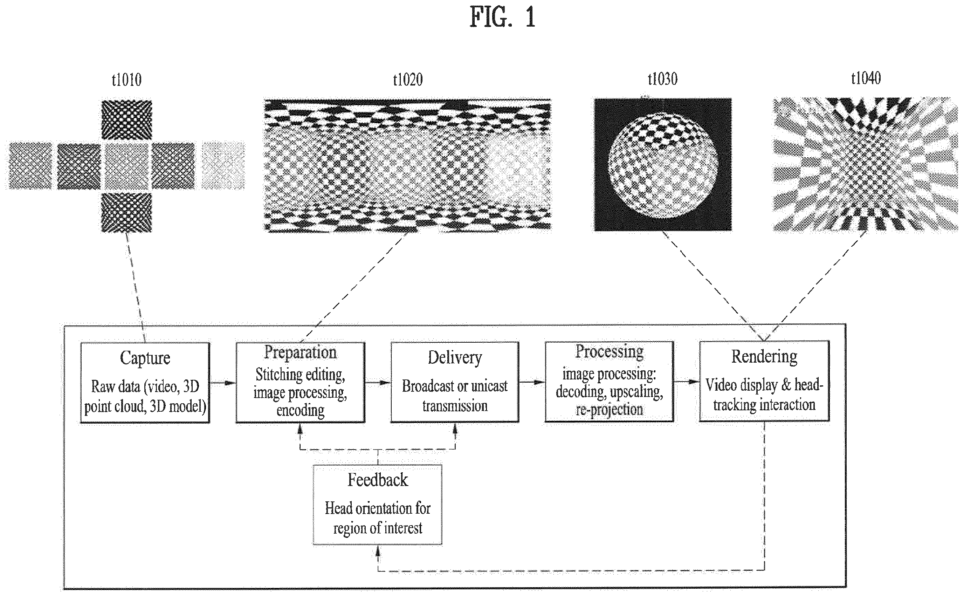

FIG. 1 is a view showing the entire architecture for providing 360-degree video according to the present invention.

The present invention proposes a scheme for 360-degree content provision in order to provide a user with virtual reality (VR). VR may mean technology or an environment for replicating an actual or virtual environment. VR artificially provides a user with sensual experiences through which the user may feel as if he/she were in an electronically projected environment.

The term "360-degree content" means all content for realizing and providing VR, and may include 360-degree video and/or 360-degree audio. The term "360-degree video" may mean video or image content that is captured or reproduced in all directions (360 degrees) at the same time, which is necessary to provide VR. Such 360-degree video may be a video or an image that appears in various kinds of 3D spaces depending on 3D models. For example, the 360-degree video may appear on a spherical surface. The term "360-degree audio", which is audio content for providing VR, may mean spatial audio content in which the origin of a sound is recognized as being located in a specific 3D space. The 360-degree content may be generated, processed, and transmitted to users, who may enjoy a VR experience using the 360-degree content. Hereinafter, 360-degree content/video/image/audio may be called "360 content/video/image/audio" with the unit (degrees) omitted or "VR content/video/image/audio".

The present invention proposes a method of effectively providing 360-degree video in particular. In order to provide 360-degree video, the 360-degree video may be captured using at least one camera. The captured 360-degree video may be transmitted through a series of processes, and a reception side may process and render the received data into the original 360-degree video. As a result, the 360-degree video may be provided to a user.

Specifically, the overall processes of providing the 360-degree video may include a capturing process, a preparation process, a delivery process, a processing process, a rendering process, and/or a feedback process.

The capturing process may be a process of capturing an image or a video at each of a plurality of viewports using at least one camera. At the capturing process, image/video data may be generated, as shown (t1010). Each plane that is shown (t1010) may mean an image/video at each viewport. A plurality of captured images/videos may be raw data. At the capturing process, capturing-related metadata may be generated.

A special camera for VR may be used for capturing. In some embodiments, in the case in which 360-degree video for a virtual space generated by a computer is provided, capturing may not be performed using an actual camera. In this case, a process of simply generating related data may replace the capturing process.

The preparation process may be a process of processing the captured images/videos and the metadata generated at the capturing process. At the preparation process, the captured images/videos may undergo a stitching process, a projection process, a region-wise packing process, and/or an encoding process.

First, each image/video may undergo the stitching process. The stitching process may be a process of connecting the captured images/videos to generate a panoramic image/video or a spherical image/video.

Subsequently, the stitched image/video may undergo the projection process. At the projection process, the stitched image/video may be projected on a 2D image. Depending on the context, the 2D image may be called a 2D image frame. 2D image projection may be expressed as 2D image mapping. The projected image/video data may have the form of a 2D image, as shown (t1020).

The video data projected on the 2D image may undergo the region-wise packing process in order to improve video coding efficiency. The region-wise packing process may be a process of individually processing the video data projected on the 2D image for each region. Here, the term "regions" may indicate divided parts of the 2D image on which the video data are projected. In some embodiments, regions may be partitioned by uniformly or arbitrarily dividing the 2D image. Also, in some embodiments, regions may be partitioned depending on a projection scheme. The region-wise packing process is optional, and thus may be omitted from the preparation process.

In some embodiments, this process may include a process of rotating each region or rearranging the regions on the 2D image in order to improve video coding efficiency. For example, the regions may be rotated such that specific sides of the regions are located so as to be adjacent to each other, whereby coding efficiency may be improved.

In some embodiments, this process may include a process of increasing or decreasing the resolution of a specific region in order to change the resolution for areas on the 360-degree video. For example, regions corresponding to relatively important areas in the 360-degree video may have higher resolution than other regions. The video data projected on the 2D image or the region-wise packed video data may undergo the encoding process via a video codec.

In some embodiments, the preparation process may further include an editing process. At the editing process, image/video data before and after projection may be edited. At the preparation process, metadata related to stitching/projection/encoding/editing may be generated in the same manner. In addition, metadata related to the initial viewport of the video data projected on the 2D image or a region of interest (ROI) may be generated.

The delivery process may be a process of processing and delivering the image/video data that have undergone the preparation process and the metadata. Processing may be performed based on an arbitrary transport protocol for delivery. The data that have been processed for delivery may be delivered through a broadcast network and/or a broadband connection. The data may be delivered to the reception side in an on-demand manner. The reception side may receive the data through various paths.

The processing process may be a process of decoding the received data and re-projecting the projected image/video data on a 3D model. In this process, the image/video data projected on the 2D image may be re-projected in a 3D space. Depending on the context, this process may be called mapping or projection. At this time, the mapped 3D space may have different forms depending on the 3D model. For example, the 3D model may be a sphere, a cube, a cylinder, or a pyramid.

In some embodiments, the processing process may further include an editing process and an up-scaling process. At the editing process, the image/video data before and after re-projection may be edited. In the case in which the image/video data are down-scaled, the size of the image/video data may be increased through up-scaling at the up-scaling process. As needed, the size of the image/video data may be decreased through down-scaling.

The rendering process may be a process of rendering and displaying the image/video data re-projected in the 3D space. Depending on the context, a combination of re-projection and rendering may be expressed as rendering on the 3D model. The image/video re-projected on the 3D model (or rendered on the 3D model) may have the form that is shown (t1030). The image/video is re-projected on a spherical 3D model, as shown (t1030). The user may view a portion of the rendered image/video through a VR display. At this time, the portion of the image/video that is viewed by the user may have the form that is shown (t1040).

The feedback process may be a process of transmitting various kinds of feedback information that may be acquired at a display process to a transmission side. Interactivity may be provided in enjoying the 360-degree video through the feedback process. In some embodiments, head orientation information, information about a viewport, which indicates the area that is being viewed by the user, etc. may be transmitted to the transmission side at the feedback process. In some embodiments, the user may interact with what is realized in the VR environment. In this case, information related to the interactivity may be provided to the transmission side or to a service provider side at the feedback process. In some embodiments, the feedback process may not be performed.

The head orientation information may be information about the position, angle, and movement of the head of the user. Information about the area that is being viewed by the user in the 360-degree video, i.e. the viewport information, may be calculated based on this information.

The viewport information may be information about the area that is being viewed by the user in the 360-degree video. Gaze analysis may be performed therethrough, and therefore it is possible to check the manner in which the user enjoys the 360-degree video, the area of the 360-degree video at which the user gazes, and the amount of time during which the user gazes at the 360-degree video. The gaze analysis may be performed at the reception side and may be delivered to the transmission side through a feedback channel. An apparatus, such as a VR display, may extract a viewport area based on the position/orientation of the head of the user, a vertical or horizontal FOV that is supported by the apparatus, etc.

In some embodiments, the feedback information may not only be delivered to the transmission side, but may also be used at the reception side. That is, the decoding, re-projection, and rendering processes may be performed at the reception side using the feedback information. For example, only the portion of the 360-degree video that is being viewed by the user may be decoded and rendered first using the head orientation information and/or the viewport information.

Here, the viewport or the viewport area may be the portion of the 360-degree video that is being viewed by the user. The viewport, which is the point in the 360-degree video that is being viewed by the user, may be the very center of the viewport area. That is, the viewport is an area based on the viewport. The size or shape of the area may be set by a field of view (FOV), a description of which will follow.

In the entire architecture for 360-degree video provision, the image/video data that undergo a series of capturing/projection/encoding/delivery/decoding/re-projection/rendering processes may be called 360-degree video data. The term "360-degree video data" may be used to conceptually include metadata or signaling information related to the image/video data.

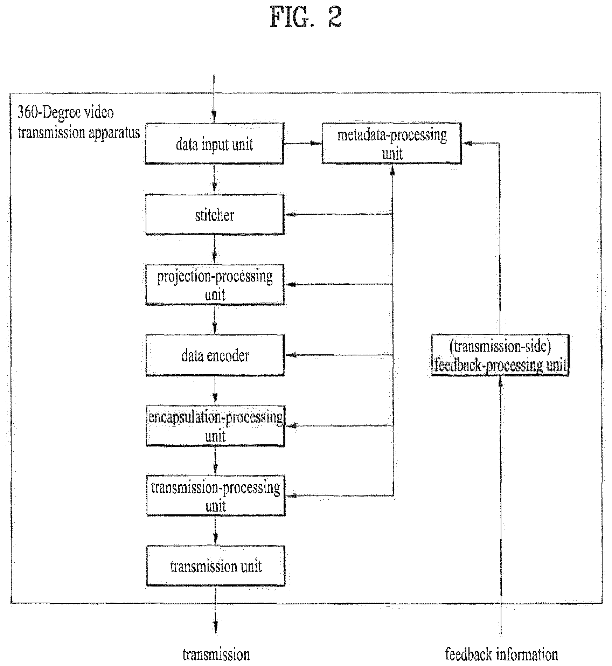

FIG. 2 is a view showing a 360-degree video transmission apparatus according to an aspect of the present invention.

According to an aspect of the present invention, the present invention may be related to a 360-degree video transmission apparatus. The 360-degree video transmission apparatus according to the present invention may perform operations related to the preparation process and the delivery process. The 360-degree video transmission apparatus according to the present invention may include a data input unit, a stitcher, a projection-processing unit, a region-wise packing processing unit (not shown), a metadata-processing unit, a (transmission-side) feedback-processing unit, a data encoder, an encapsulation-processing unit, a transmission-processing unit, and/or a transmission unit as internal/external elements.

The data input unit may allow captured viewport-wise images/videos to be input. The viewport-wise image/videos may be images/videos captured using at least one camera. In addition, the data input unit may allow metadata generated at the capturing process to be input. The data input unit may deliver the input viewport-wise images/videos to the stitcher, and may deliver the metadata generated at the capturing process to a signaling processing unit.

The stitcher may stitch the captured viewport-wise images/videos. The stitcher may deliver the stitched 360-degree video data to the projection-processing unit. As needed, the stitcher may receive necessary metadata from the metadata-processing unit in order to use the received metadata at the stitching process. The stitcher may deliver metadata generated at the stitching process to the metadata-processing unit. The metadata generated at the stitching process may include information about whether stitching has been performed and the stitching type.

The projection-processing unit may project the stitched 360-degree video data on a 2D image. The projection-processing unit may perform projection according to various schemes, which will be described below. The projection-processing unit may perform mapping in consideration of the depth of the viewport-wise 360-degree video data. As needed, the projection-processing unit may receive metadata necessary for projection from the metadata-processing unit in order to use the received metadata for projection. The projection-processing unit may deliver metadata generated at the projection process to the metadata-processing unit. The metadata of the projection-processing unit may include information about the kind of projection scheme.

The region-wise packing processing unit (not shown) may perform the region-wise packing process. That is, the region-wise packing processing unit may divide the projected 360-degree video data into regions, and may rotate or re-arrange each region, or may change the resolution of each region. As previously described, the region-wise packing process is optional. In the case in which the region-wise packing process is not performed, the region-wise packing processing unit may be omitted. As needed, the region-wise packing processing unit may receive metadata necessary for region-wise packing from the metadata-processing unit in order to use the received metadata for region-wise packing. The region-wise packing processing unit may deliver metadata generated at the region-wise packing process to the metadata-processing unit. The metadata of the region-wise packing processing unit may include the extent of rotation and the size of each region.

In some embodiments, the stitcher, the projection-processing unit, and/or the region-wise packing processing unit may be incorporated into a single hardware component.

The metadata-processing unit may process metadata that may be generated at the capturing process, the stitching process, the projection process, the region-wise packing process, the encoding process, the encapsulation process, and/or the processing process for delivery. The metadata-processing unit may generate 360-degree-video-related metadata using the above-mentioned metadata. In some embodiments, the metadata-processing unit may generate the 360-degree-video-related metadata in the form of a signaling table. Depending on the context, the 360-degree-video-related metadata may be called metadata or signaling information related to the 360-degree video. In addition, the metadata-processing unit may deliver the acquired or generated metadata to the internal elements of the 360-degree video transmission apparatus, as needed. The metadata-processing unit may deliver the 360-degree-video-related metadata to the data encoder, the encapsulation-processing unit, and/or the transmission-processing unit such that the 360-degree-video-related metadata can be transmitted to the reception side.

The data encoder may encode the 360-degree video data projected on the 2D image and/or the region-wise packed 360-degree video data. The 360-degree video data may be encoded in various formats.

The encapsulation-processing unit may encapsulate the encoded 360-degree video data and/or the 360-degree-video-related metadata in the form of a file. Here, the 360-degree-video-related metadata may be metadata received from the metadata-processing unit. The encapsulation-processing unit may encapsulate the data in a file format of ISOBMFF or CFF, or may process the data in the form of a DASH segment. In some embodiments, the encapsulation-processing unit may include the 360-degree-video-related metadata on the file format. For example, the 360-degree-video-related metadata may be included in various levels of boxes in the ISOBMFF file format, or may be included as data in a separate track within the file. In some embodiments, the encapsulation-processing unit may encapsulate the 360-degree-video-related metadata itself as a file. The transmission-processing unit may perform processing for transmission on the encapsulated 360-degree video data according to the file format. The transmission-processing unit may process the 360-degree video data according to an arbitrary transport protocol. Processing for transmission may include processing for delivery through a broadcast network and processing for delivery through a broadband connection. In some embodiments, the transmission-processing unit may receive 360-degree-video-related metadata from the metadata-processing unit, in addition to the 360-degree video data, and may perform processing for transmission thereon.

The transmission unit may transmit the transmission-processed 360-degree video data and/or the 360-degree-video-related metadata through the broadcast network and/or the broadband connection. The transmission unit may include an element for transmission through the broadcast network and/or an element for transmission through the broadband connection.

In an embodiment of the 360-degree video transmission apparatus according to the present invention, the 360-degree video transmission apparatus may further include a data storage unit (not shown) as an internal/external element. The data storage unit may store the encoded 360-degree video data and/or the 360-degree-video-related metadata before delivery to the transmission-processing unit. The data may be stored in a file format of ISOBMFF. In the case in which the 360-degree video is transmitted in real time, no data storage unit is needed. In the case in which the 360-degree video is transmitted on demand, in non-real time (NRT), or through a broadband connection, however, the encapsulated 360-degree data may be transmitted after being stored in the data storage unit for a predetermined period of time.

In another embodiment of the 360-degree video transmission apparatus according to the present invention, the 360-degree video transmission apparatus may further include a (transmission-side) feedback-processing unit and/or a network interface (not shown) as an internal/external element. The network interface may receive feedback information from a 360-degree video reception apparatus according to the present invention, and may deliver the received feedback information to the transmission-side feedback-processing unit. The transmission-side feedback-processing unit may deliver the feedback information to the stitcher, the projection-processing unit, the region-wise packing processing unit, the data encoder, the encapsulation-processing unit, the metadata-processing unit, and/or the transmission-processing unit. In some embodiments, the feedback information may be delivered to the metadata-processing unit, and may then be delivered to the respective internal elements. After receiving the feedback information, the internal elements may reflect the feedback information when subsequently processing the 360-degree video data.

In another embodiment of the 360-degree video transmission apparatus according to the present invention, the region-wise packing processing unit may rotate each region, and may map the rotated region on the 2D image. At this time, the regions may be rotated in different directions and at different angles, and may be mapped on the 2D image. The rotation of the regions may be performed in consideration of the portions of the 360-degree video data that were adjacent to each other on the spherical surface before projection and the stitched portions thereof. Information about the rotation of the regions, i.e. the rotational direction and the rotational angle, may be signaled by the 360-degree-video-related metadata. In another embodiment of the 360-degree video transmission apparatus according to the present invention, the data encoder may differently encode the regions. The data encoder may encode some regions at high quality, and may encode some regions at low quality. The transmission-side feedback-processing unit may deliver the feedback information, received from the 360-degree video reception apparatus, to the data encoder, which may differently encode the regions. For example, the transmission-side feedback-processing unit may deliver the viewport information, received from the reception side, to the data encoder. The data encoder may encode regions including the areas indicated by the viewport information at higher quality (UHD, etc.) than other regions.

In a further embodiment of the 360-degree video transmission apparatus according to the present invention, the transmission-processing unit may differently perform processing for transmission on the regions. The transmission-processing unit may apply different transport parameters (modulation order, code rate, etc.) to the regions such that robustness of data delivered for each region is changed.

At this time, the transmission-side feedback-processing unit may deliver the feedback information, received from the 360-degree video reception apparatus, to the transmission-processing unit, which may differently perform transmission processing for the regions. For example, the transmission-side feedback-processing unit may deliver the viewport information, received from the reception side, to the transmission-processing unit. The transmission-processing unit may perform transmission processing on regions including the areas indicated by the viewport information so as to have higher robustness than other regions.

The internal/external elements of the 360-degree video transmission apparatus according to the present invention may be hardware elements that are realized as hardware. In some embodiments, however, the internal/external elements may be changed, omitted, replaced, or incorporated. In some embodiments, additional elements may be added to the 360-degree video transmission apparatus.

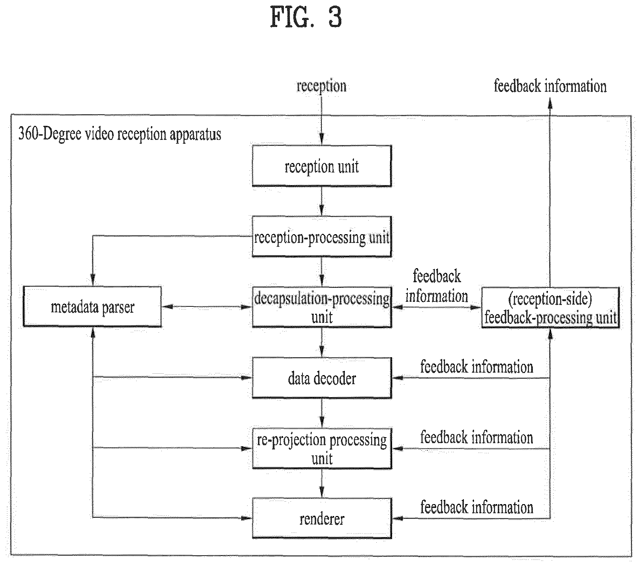

FIG. 3 is a view showing a 360-degree video reception apparatus according to another aspect of the present invention.

According to another aspect of the present invention, the present invention may be related to a 360-degree video reception apparatus. The 360-degree video reception apparatus according to the present invention may perform operations related to the processing process and/or the rendering process. The 360-degree video reception apparatus according to the present invention may include a reception unit, a reception-processing unit, a decapsulation-processing unit, a data decoder, a metadata parser, a (reception-side) feedback-processing unit, a re-projection processing unit, and/or a renderer as internal/external elements.

The reception unit may receive 360-degree video data transmitted by the 360-degree video transmission apparatus. Depending on the channel through which the 360-degree video data are transmitted, the reception unit may receive the 360-degree video data through a broadcast network, or may receive the 360-degree video data through a broadband connection.

The reception-processing unit may process the received 360-degree video data according to a transport protocol. In order to correspond to processing for transmission at the transmission side, the reception-processing unit may perform the reverse process of the transmission-processing unit. The reception-processing unit may deliver the acquired 360-degree video data to the decapsulation-processing unit, and may deliver the acquired 360-degree-video-related metadata to the metadata parser. The 360-degree-video-related metadata, acquired by the reception-processing unit, may have the form of a signaling table.

The decapsulation-processing unit may decapsulate the 360-degree video data, received in file form from the reception-processing unit. The decapsulation-processing unit may decapsulate the files based on ISOBMFF, etc. to acquire 360-degree video data and 360-degree-video-related metadata. The acquired 360-degree video data may be delivered to the data decoder, and the acquired 360-degree-video-related metadata may be delivered to the metadata parser. The 360-degree-video-related metadata, acquired by the decapsulation-processing unit, may have the form of a box or a track in a file format. As needed, the decapsulation-processing unit may receive metadata necessary for decapsulation from the metadata parser.

The data decoder may decode the 360-degree video data. The data decoder may receive metadata necessary for decoding from the metadata parser. The 360-degree-video-related metadata, acquired at the data decoding process, may be delivered to the metadata parser.

The metadata parser may parse/decode the 360-degree-video-related metadata. The metadata parser may deliver the acquired metadata to the decapsulation-processing unit, the data decoder, the re-projection processing unit, and/or the renderer.

The re-projection processing unit may re-project the decoded 360-degree video data. The re-projection processing unit may re-project the 360-degree video data in a 3D space. The 3D space may have different forms depending on the 3D models that are used. The re-projection processing unit may receive metadata for re-projection from the metadata parser. For example, the re-projection processing unit may receive information about the type of 3D model that is used and the details thereof from the metadata parser. In some embodiments, the re-projection processing unit may re-project, in the 3D space, only the portion of 360-degree video data that corresponds to a specific area in the 3D space using the metadata for re-projection.

The renderer may render the re-projected 360-degree video data. As previously described, the 360-degree video data may be expressed as being rendered in the 3D space. In the case in which two processes are performed simultaneously, the re-projection processing unit and the renderer may be incorporated such that the renderer can perform these processes. In some embodiments, the renderer may render only the portion that is being viewed by a user according to user's viewport information.

The user may view a portion of the rendered 360-degree video through a VR display. The VR display, which is a device that reproduces the 360-degree video, may be included in the 360-degree video reception apparatus (tethered), or may be connected to the 360-degree video reception apparatus (untethered).

In an embodiment of the 360-degree video reception apparatus according to the present invention, the 360-degree video reception apparatus may further include a (reception-side) feedback-processing unit and/or a network interface (not shown) as an internal/external element. The reception-side feedback-processing unit may acquire and process feedback information from the renderer, the re-projection processing unit, the data decoder, the decapsulation-processing unit, and/or the VR display. The feedback information may include viewport information, head orientation information, and gaze information. The network interface may receive the feedback information from the reception-side feedback-processing unit, and may transmit the same to the 360-degree video transmission apparatus.

As previously described, the feedback information may not only be delivered to the transmission side but may also be used at the reception side. The reception-side feedback-processing unit may deliver the acquired feedback information to the internal elements of the 360-degree video reception apparatus so as to be reflected at the rendering process. The reception-side feedback-processing unit may deliver the feedback information to the renderer, the re-projection processing unit, the data decoder, and/or the decapsulation-processing unit. For example, the renderer may first render the area that is being viewed by the user using the feedback information. In addition, the decapsulation-processing unit and the data decoder may first decapsulate and decode the area that is being viewed by the user or the area that will be viewed by the user.

The internal/external elements of the 360-degree video reception apparatus according to the present invention described above may be hardware elements that are realized as hardware. In some embodiments, the internal/external elements may be changed, omitted, replaced, or incorporated. In some embodiments, additional elements may be added to the 360-degree video reception apparatus.

According to another aspect of the present invention, the present invention may be related to a 360-degree video transmission method and a 360-degree video reception method. The 360-degree video transmission/reception method according to the present invention may be performed by the 360-degree video transmission/reception apparatus according to the present invention described above or embodiments of the apparatus.

Embodiments of the 360-degree video transmission/reception apparatus and transmission/reception method according to the present invention and embodiments of the internal/external elements thereof may be combined. For example, embodiments of the projection-processing unit and embodiments of the data encoder may be combined in order to provide a number of possible embodiments of the 360-degree video transmission apparatus. Such combined embodiments also fall within the scope of the present invention.

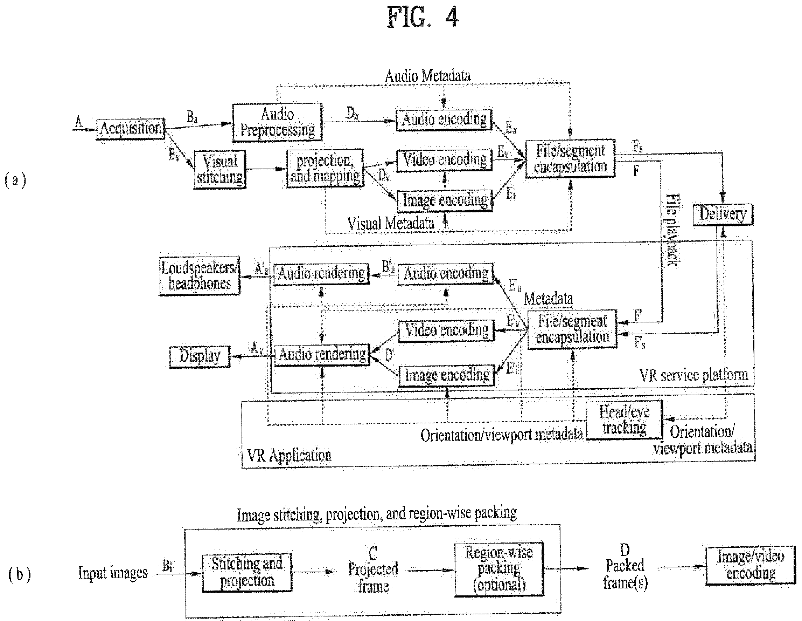

FIG. 4 is a view showing a 360-degree video transmission apparatus/360-degree video reception apparatus according to another embodiment of the present invention.

As previously described, 360-degree content may be provided through the architecture shown in FIG. 4(a). The 360-degree content may be provided in the form of a file, or may be provided in the form of segment-based download or streaming service, such as DASH. Here, the 360-degree content may be called VR content.

As previously described, 360-degree video data and/or 360-degree audio data may be acquired (Acquisition).

The 360-degree audio data may undergo an audio preprocessing process and an audio encoding process. In these processes, audio-related metadata may be generated. The encoded audio and the audio-related metadata may undergo processing for transmission (file/segment encapsulation).

The 360-degree video data may undergo the same processes as previously described. The stitcher of the 360-degree video transmission apparatus may perform stitching on the 360-degree video data (Visual stitching). In some embodiments, this process may be omitted, and may be performed at the reception side. The projection-processing unit of the 360-degree video transmission apparatus may project the 360-degree video data on a 2D image (Projection and mapping (packing)).

The stitching and projection processes are shown in detail in FIG. 4(b). As shown in FIG. 4(b), when the 360-degree video data (input image) is received, stitching and projection may be performed. Specifically, at the projection process, the stitched 360-degree video data may be projected in a 3D space, and the projected 360-degree video data may be arranged on the 2D image. In this specification, this process may be expressed as projecting the 360-degree video data on the 2D image. Here, the 3D space may be a sphere or a cube. The 3D space may be the same as the 3D space used for re-projection at the reception side.

The 2D image may be called a projected frame C. Region-wise packing may be selectively performed on the 2D image. When region-wise packing is performed, the position, shape, and size of each region may be indicated such that the regions on the 2D image can be mapped on a packed frame D. When region-wise packing is not performed, the projected frame may be the same as the packed frame. The regions will be described below. The projection process and the region-wise packing process may be expressed as projecting the regions of the 360-degree video data on the 2D image. Depending on the design, the 360-degree video data may be directly converted into the packed frame without undergoing intermediate processes.

As shown in FIG. 4(a), the projected 360-degree video data may be image-encoded or video-encoded. Since even the same content may have different viewports, the same content may be encoded in different bit streams. The encoded 360-degree video data may be processed in a file format of ISOBMFF by the encapsulation-processing unit. Alternatively, the encapsulation-processing unit may process the encoded 360-degree video data into segments. The segments may be included in an individual track for transmission based on DASH.

When the 360-degree video data are processed, 360-degree-video-related metadata may be generated, as previously described. The metadata may be delivered while being included in a video stream or a file format. The metadata may also be used at the encoding process, file format encapsulation, or processing for transmission.

The 360-degree audio/video data may undergo processing for transmission according to the transport protocol, and may then be transmitted. The 360-degree video reception apparatus may receive the same through a broadcast network or a broadband connection.

In FIG. 4(a), a VR service platform may correspond to one embodiment of the 360-degree video reception apparatus. In FIG. 4(a), Loudspeaker/headphone, display, and head/eye tracking components are shown as being performed by an external device of the 360-degree video reception apparatus or VR application. In some embodiments, the 360-degree video reception apparatus may include these components. In some embodiments, the head/eye tracking component may correspond to the reception-side feedback-processing unit.

The 360-degree video reception apparatus may perform file/segment decapsulation for reception on the 360-degree audio/video data. The 360-degree audio data may undergo audio decoding and audio rendering, and may then be provided to a user through the loudspeaker/headphone component.

The 360-degree video data may undergo image decoding or video decoding and visual rendering, and may then be provided to the user through the display component. Here, the display component may be a display that supports VR or a general display.

As previously described, specifically, the rendering process may be expressed as re-projecting the 360-degree video data in the 3D space and rendering the re-projected 360-degree video data. This may also be expressed as rendering the 360-degree video data in the 3D space.

The head/eye tracking component may acquire and process head orientation information, gaze information, and viewport information of the user, which have been described previously.

A VR application that communicates with the reception-side processes may be provided at the reception side.

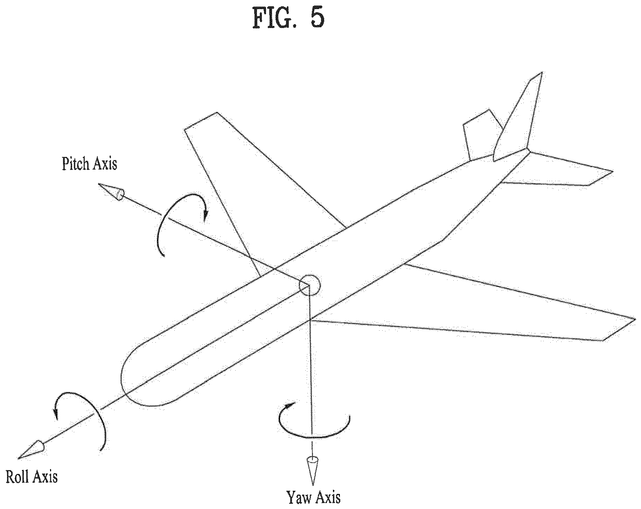

FIG. 5 is a view showing the concept of principal aircraft axes for describing 3D space in connection with the present invention.

In the present invention, the concept of principal aircraft axes may be used in order to express a specific point, position, direction, distance, area, etc. in the 3D space.

That is, in the present invention, the 3D space before projection or after re-projection may be described, and the concept of principal aircraft axes may be used in order to perform signaling thereon. In some embodiments, a method of using X, Y, and Z-axis concepts or a spherical coordinate system may be used.

An aircraft may freely rotate in three dimensions. Axes constituting the three dimensions are referred to as a pitch axis, a yaw axis, and a roll axis. In this specification, these terms may also be expressed either as pitch, yaw, and roll or as a pitch direction, a yaw direction, and a roll direction.

The pitch axis may be an axis about which the forward portion of the aircraft is rotated upwards/downwards. In the shown concept of principal aircraft axes, the pitch axis may be an axis extending from one wing to another wing of the aircraft.

The yaw axis may be an axis about which the forward portion of the aircraft is rotated leftwards/rightwards. In the shown concept of principal aircraft axes, the yaw axis may be an axis extending from the top to the bottom of the aircraft.

In the shown concept of principal aircraft axes, the roll axis may be an axis extending from the forward portion to the tail of the aircraft. Rotation in the roll direction may be rotation performed about the roll axis.

As previously described, the 3D space in the present invention may be described using the pitch, yaw, and roll concept.

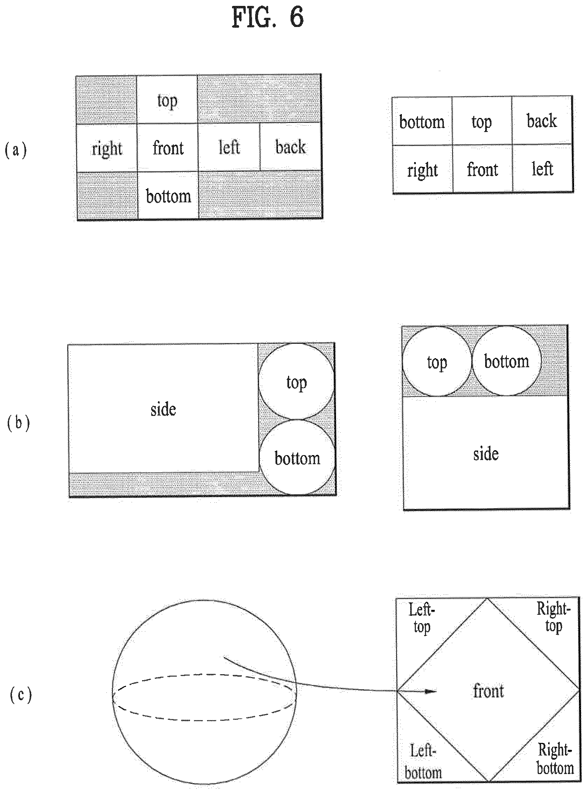

FIG. 6 is a view showing projection schemes according to an embodiment of the present invention.

As previously described, the projection-processing unit of the 360-degree video transmission apparatus according to the present invention may project the stitched 360-degree video data on the 2D image. In this process, various projection schemes may be used.

In another embodiment of the 360-degree video transmission apparatus according to the present invention, the projection-processing unit may perform projection using a cubic projection scheme. For example, the stitched 360-degree video data may appear on a spherical surface. The projection-processing unit may project the 360-degree video data on the 2D image in the form of a cube. The 360-degree video data on the spherical surface may correspond to respective surfaces of the cube. As a result, the 360-degree video data may be projected on the 2D image, as shown at the left side or the right side of FIG. 6(a).

In another embodiment of the 360-degree video transmission apparatus according to the present invention, the projection-processing unit may perform projection using a cylindrical projection scheme. In the same manner, on the assumption that the stitched 360-degree video data appear on a spherical surface, the projection-processing unit may project the 360-degree video data on the 2D image in the form of a cylinder. The 360-degree video data on the spherical surface may correspond to the side, the top, and the bottom of the cylinder. As a result, the 360-degree video data may be projected on the 2D image, as shown at the left side or the right side of FIG. 6(b).

In a further embodiment of the 360-degree video transmission apparatus according to the present invention, the projection-processing unit may perform projection using a pyramidal projection scheme. In the same manner, on the assumption that the stitched 360-degree video data appears on a spherical surface, the projection-processing unit may project the 360-degree video data on the 2D image in the form of a pyramid. The 360-degree video data on the spherical surface may correspond to the front, the left top, the left bottom, the right top, and the right bottom of the pyramid. As a result, the 360-degree video data may be projected on the 2D image, as shown at the left side or the right side of FIG. 6(c).

In some embodiments, the projection-processing unit may perform projection using an equirectangular projection scheme or a panoramic projection scheme, in addition to the above-mentioned schemes.

As previously described, the regions may be divided parts of the 2D image on which the 360-degree video data are projected. The regions do not necessarily coincide with respective surfaces on the 2D image projected according to the projection scheme. In some embodiments, however, the regions may be partitioned so as to correspond to the projected surfaces on the 2D image such that region-wise packing can be performed. In some embodiments, a plurality of surfaces may correspond to a single region, and a single surface corresponds to a plurality of regions. In this case, the regions may be changed depending on the projection scheme. For example, in FIG. 6(a), the respective surfaces (top, bottom, front, left, right, and back) of the cube may be respective regions. In FIG. 6(b), the side, the top, and the bottom of the cylinder may be respective regions. In FIG. 6(c), the front and the four-directional lateral surfaces (left top, left bottom, right top, and right bottom) of the pyramid may be respective regions.

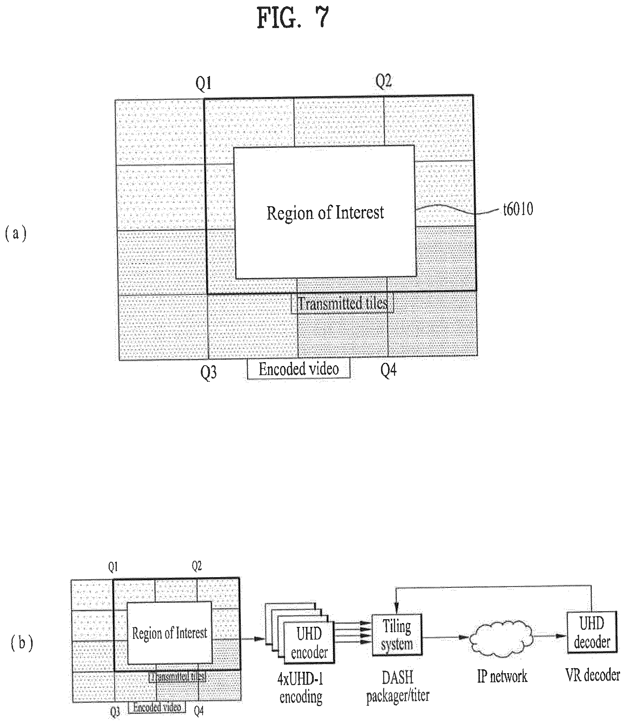

FIG. 7 is a view showing a tile according to an embodiment of the present invention.

The 360-degree video data projected on the 2D image or the 360-degree video data that have undergone region-wise packing may be partitioned into one or more tiles. FIG. 7(a) shows a 2D image divided into 16 tiles. Here, the 2D image may be the projected frame or the packed frame. In another embodiment of the 360-degree video transmission apparatus according to the present invention, the data encoder may independently encode the tiles.

Region-wise packing and tiling may be different from each other. Region-wise packing may be processing each region of the 360-degree video data projected on the 2D image in order to improve coding efficiency or to adjust resolution. Tiling may be the data encoder dividing the projected frame or the packed frame into tiles and independently encoding the tiles. When the 360-degree video data are provided, the user does not simultaneously enjoy all parts of the 360-degree video data. Tiling may enable the user to enjoy or transmit only tiles corresponding to an important part or a predetermined part, such as the viewport that is being viewed by the user, to the reception side within a limited bandwidth. The limited bandwidth may be more efficiently utilized through tiling, and calculation load may be reduced because the reception side does not process the entire 360-degree video data at once.

Since the regions and the tiles are different from each other, the two areas are not necessarily the same. In some embodiments, however, the regions and the tiles may indicate the same areas. In some embodiments, region-wise packing may be performed based on the tiles, whereby the regions and the tiles may become the same. Also, in some embodiments, in the case in which the surfaces according to the projection scheme and the regions are the same, the surface according to the projection scheme, the regions, and the tiles may indicate the same areas. Depending on the context, the regions may be called VR regions, and the tiles may be called tile regions.

A region of interest (ROI) may be an area in which users are interested, proposed by a 360-degree content provider. The 360-degree content provider may produce a 360-degree video in consideration of the area of the 360-degree video in which users are interested. In some embodiments, the ROI may correspond to an area of the 360-degree video in which an important portion of the 360-degree video is shown.

In another embodiment of the 360-degree video transmission/reception apparatus according to the present invention, the reception-side feedback-processing unit may extract and collect viewport information, and may deliver the same to the transmission-side feedback-processing unit. At this process, the viewport information may be delivered using the network interfaces of both sides. FIG. 7(a) shows a viewport t6010 displayed on the 2D image. Here, the viewport may be located over 9 tiles on the 2D image.

In this case, the 360-degree video transmission apparatus may further include a tiling system. In some embodiments, the tiling system may be disposed after the data encoder (see FIG. 7(b)), may be included in the data encoder or the transmission-processing unit, or may be included in the 360-degree video transmission apparatus as a separate internal/external element.

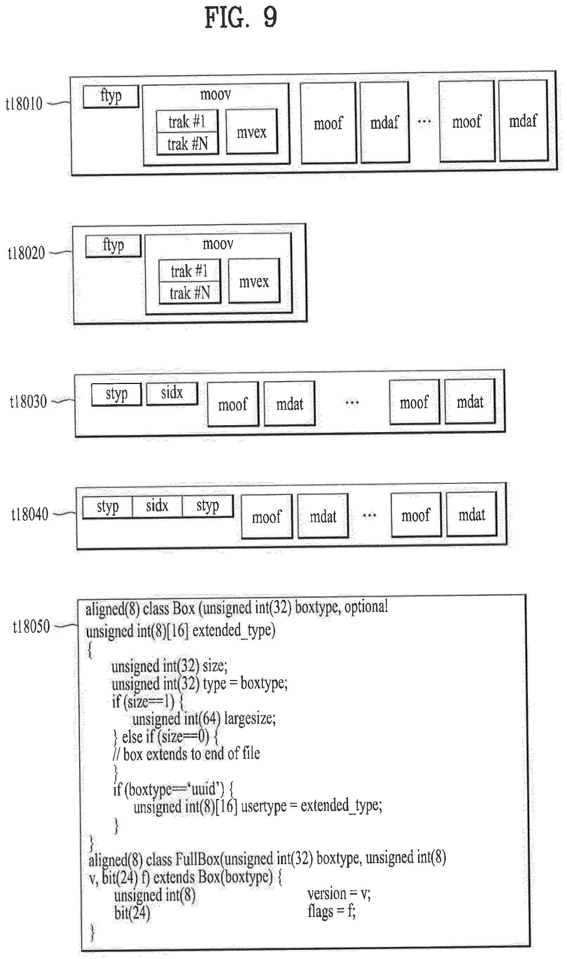

The tiling system may receive the viewport information from the transmission-side feedback-processing unit. The tiling system may select and transmit only tiles including the viewport area. In the FIG. 7(a), 9 tiles including the viewport area t6010, among a total of 16 tiles of the 2D image, may be transmitted. Here, the tiling system may transmit the tiles in a unicast manner over a broadband connection. The reason for this is that the viewport area may be changed for respective people.

Also, in this case, the transmission-side feedback-processing unit may deliver the viewport information to the data encoder. The data encoder may encode the tiles including the viewport area at higher quality than other tiles.

Also, in this case, the transmission-side feedback-processing unit may deliver the viewport information to the metadata-processing unit. The metadata-processing unit may deliver metadata related to the viewport area to the internal elements of the 360-degree video transmission apparatus, or may include the same in the 360-degree-video-related metadata.

By using this tiling system, it is possible to save transmission bandwidth and to differently perform processing for each tile, whereby efficient data processing/transmission is possible.

Embodiments related to the viewport area may be similarly applied to specific areas other than the viewport area. For example, processing performed on the viewport area may be equally performed on an area in which users are determined to be interested through the gaze analysis, ROI, and an area that is reproduced first when a user views the 360-degree video through the VR display (initial viewport).

In another embodiment of the 360-degree video transmission apparatus according to the present invention, the transmission-processing unit may perform transmission processing differently for respective tiles. The transmission-processing unit may apply different transport parameters (modulation order, code rate, etc.) to the tiles such that robustness of data delivered for each region is changed.

At this time, the transmission-side feedback-processing unit may deliver the feedback information, received from the 360-degree video reception apparatus, to the transmission-processing unit, which may perform transmission processing differently for respective tiles. For example, the transmission-side feedback-processing unit may deliver the viewport information, received from the reception side, to the transmission-processing unit. The transmission-processing unit may perform transmission processing on tiles including the viewport area so as to have higher robustness than for the other tiles.

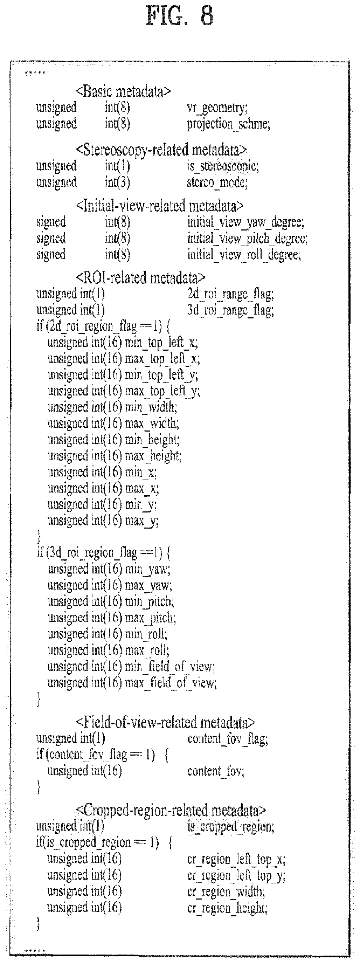

FIG. 8 is a view showing 360-degree-video-related metadata according to an embodiment of the present invention.

The 360-degree-video-related metadata may include various metadata for the 360-degree video. Depending on the context, the 360-degree-video-related metadata may be called 360-degree-video-related signaling information. The 360-degree-video-related metadata may be transmitted while being included in a separate signaling table, or may be transmitted while being included in DASH MPD, or may be transmitted while being included in the form of a box in a file format of ISOBMFF. In the case in which the 360-degree-video-related metadata are included in the form of a box, the metadata may be included in a variety of levels, such as a file, a fragment, a track, a sample entry, and a sample, and may include metadata related to data of a corresponding level.

In some embodiments, a portion of the metadata, a description of which will follow, may be transmitted while being configured in the form of a signaling table, and the remaining portion of the metadata may be included in the form of a box or a track in a file format.

In an embodiment of the 360-degree-video-related metadata according to the present invention, the 360-degree-video-related metadata may include basic metadata about projection schemes, stereoscopy-related metadata, initial-view/initial-viewport-related metadata, ROI-related metadata, field-of-view (FOV)-related metadata, and/or cropped-region-related metadata. In some embodiments, the 360-degree-video-related metadata may further include metadata other than the above metadata.

Embodiments of the 360-degree-video-related metadata according to the present invention may include at least one of the basic metadata, the stereoscopy-related metadata, the initial-view-related metadata, the ROI-related metadata, the FOV-related metadata, the cropped-region-related metadata, and/or additional possible metadata. Embodiments of the 360-degree-video-related metadata according to the present invention may be variously configured depending on possible number of metadata included therein. In some embodiments, the 360-degree-video-related metadata may further include additional information.

The basic metadata may include 3D-model-related information and projection-scheme-related information. The basic metadata may include a vr_geometry field and a projection_scheme field. In some embodiments, the basic metadata may include additional information.

The vr_geometry field may indicate the type of 3D model supported by the 360-degree video data. In the case in which the 360-degree video data is re-projected in a 3D space, as previously described, the 3D space may have a form based on the 3D model indicated by the vr_geometry field. In some embodiments, a 3D model used for rendering may be different from a 3D model used for re-projection indicated by the vr_geometry field. In this case, the basic metadata may further include a field indicating the 3D model used for rendering. In the case in which the field has a value of 0, 1, 2, or 3, the 3D space may follow a 3D model of a sphere, a cube, a cylinder, or a pyramid. In the case in which the field has additional values, the values may be reserved for future use. In some embodiments, the 360-degree-video-related metadata may further include detailed information about the 3D model indicated by the field. Here, the detailed information about the 3D model may be radius information of the sphere or the height information of the cylinder. This field may be omitted.

The projection_scheme field may indicate the projection scheme used when the 360-degree video data is projected on a 2D image. In the case in which the field has a value of 0, 1, 2, 3, 4, or 5, this may indicate that an equirectangular projection scheme, a cubic projection scheme, a cylindrical projection scheme, a tile-based projection scheme, a pyramidal projection scheme, or a panoramic projection scheme has been used. In the case in which the field has a value of 6, this may indicate that the 360-degree video data has been projected on a 2D image without stitching. In the case in which the field has additional values, the values may be reserved for future use. In some embodiments, the 360-degree-video-related metadata may further include detailed information about regions generated by the projection scheme specified by the field. Here, the detailed information about the regions may be rotation of the regions or radius information of the top region of the cylinder.

The stereoscopy-related metadata may include information about 3D-related attributes of the 360-degree video data. The stereoscopy-related metadata may include an is_stereoscopic field and/or a stereo_mode field. In some embodiments, the stereoscopy-related metadata may further include additional information.

The is_stereoscopic field may indicate whether the 360-degree video data support 3D. When the field is 1, this may mean 3D support. When the field is 0, this may mean 3D non-support. This field may be omitted.

The stereo_mode field may indicate a 3D layout supported by the 360-degree video. It is possible to indicate whether the 360-degree video supports 3D using only this field. In this case, the is_stereoscopic field may be omitted. When the field has a value of 0, the 360-degree video may have a mono mode. That is, the 2D image, on which the 360-degree video is projected, may include only one mono view. In this case, the 360-degree video may not support 3D.

When the field has a value of 1 or 2, the 360-degree video may follow a left-right layout or a top-bottom layout. The left-right layout and the top-bottom layout may be called a side-by-side format and a top-bottom format, respectively. In the left-right layout, 2D images on which a left image/a right image are projected may be located at the left/right side on an image frame. In the top-bottom layout, 2D images on which a left image/a right image are projected may be located at the top/bottom side on the image frame. In the case in which the field has additional values, the values may be reserved for future use.

The initial-view-related metadata may include information about the time at which a user views the 360-degree video when the 360-degree video is reproduced first (an initial viewport). The initial-view-related metadata may include an initial_view_yaw_degree field, an initial_view_pitch_degree field, and/or an initial_view_roll_degree field. In some embodiments, the initial-view-related metadata may further include additional information.

The initial_view _yaw_degree field, the initial_view_pitch_degree field, and the initial_view_roll_degree field may indicate an initial viewport when the 360-degree video is reproduced. That is, the very center point of the viewport that is viewed first at the time of reproduction may be indicated by these three fields. The fields may indicate the position of the right center point as the rotational direction (symbol) and the extent of rotation (angle) about the yaw, pitch, and roll axes. At this time, the viewport that is viewed when the video is reproduced first according to the FOV may be determined. The horizontal length and the vertical length (width and height) of an initial viewport based on the indicated initial viewport through the FOV may be determined. That is, the 360-degree video reception apparatus may provide a user with a predetermined area of the 360-degree video as an initial viewport using these three fields and the FOV information.

In some embodiments, the initial viewport indicated by the initial-view-related metadata may be changed for each scene. That is, the scenes of the 360-degree video may be changed over time. An initial viewport or an initial viewport at which the user views the video first may be changed for every scene of the 360-degree video. In this case, the initial-view-related metadata may indicate the initial viewport for each scene. To this end, the initial-view-related metadata may further include a scene identifier identifying the scene to which the initial viewport is applied. In addition, the FOV may be changed for each scene. The initial-view-related metadata may further include scene-wise FOV information indicating the FOV corresponding to the scene.

The ROI-related metadata may include information related to the ROI. The ROI-related metadata may a 2d_roi_range_flag field and/or a 3d_roi_range_flag field. Each of the two fields may indicate whether the ROI-related metadata includes fields expressing the ROI based on the 2D image or whether the ROI-related metadata includes fields expressing the ROI based on the 3D space. In some embodiments, the ROI-related metadata may further include additional information, such as differential encoding information based on the ROI and differential transmission processing information based on the ROI.

In the case in which the ROI-related metadata includes fields expressing the ROI based on the 2D image, the ROI-related metadata may include a min_top_left_x field, a max_top_left_x field, a min_top_left_y field, a max_top_left_y field, a min_width field, a max_width field, a min_height field, a max_height field, a min_x field, a max_x field, a min_y field, and/or a max_y field.

The min_top_left_x field, the max_top_left_x field, the min_top_left_y field, and the max_top_left_y field may indicate the minimum/maximum values of the coordinates of the left top end of the ROI. These fields may indicate the minimum x coordinate, the maximum x coordinate, the minimum y coordinate, and the maximum y coordinate of the left top end, respectively.

The min_width field, the max_width field, the min_height field, and the max_height field may indicate the minimum/maximum values of the horizontal size (width) and the vertical size (height) of the ROI. These fields may indicate the minimum value of the horizontal size, the maximum value of the horizontal size, the minimum value of the vertical size, and the maximum value of the vertical size, respectively.

The min_x field, the max_x field, the min_y field, and the max_y field may indicate the minimum/maximum values of the coordinates in the ROI. These fields may indicate the minimum x coordinate, the maximum x coordinate, the minimum y coordinate, and the maximum y coordinate of the coordinates in the ROI, respectively. These fields may be omitted.

In the case in which the ROI-related metadata includes fields expressing the ROI based on the coordinates in the 3D rendering space, the ROI-related metadata may include a min_yaw field, a max_yaw field, a min_pitch field, a max_pitch field, a min_roll field, a max_roll field, a min_field_of_view field, and/or a max_field_of_view field.

The min_yaw field, the max_yaw field, the min_pitch field, the max_pitch field, the min_roll field, and the max_roll field may indicate the area that the ROI occupies in 3D space as the minimum/maximum values of yaw, pitch, and roll. These fields may indicate the minimum value of the amount of rotation about the yaw axis, the maximum value of the amount of rotation about the yaw axis, the minimum value of the amount of rotation about the pitch axis, the maximum value of the amount of rotation about the pitch axis, the minimum value of the amount of rotation about the roll axis, and the maximum value of the amount of rotation about the roll axis, respectively.

The min_field_of_view field and the max_field_of_view field may indicate the minimum/maximum values of the FOV of the 360-degree video data. The FOV may be a range of vision within which the 360-degree video is displayed at once when the video is reproduced. The min_field_of_view field and the max_field_of_view field may indicate the minimum value and the maximum value of the FOV, respectively. These fields may be omitted. These fields may be included in FOV-related metadata, a description of which will follow.

The FOV-related metadata may include the above information related to the FOV. The FOV-related metadata may include a content_fov_flag field and/or a content_fov field. In some embodiments, the FOV-related metadata may further include additional information, such as information related to the minimum/maximum values of the FOV.

The content_fov_flag field may indicate whether information about the FOV of the 360-degree video intended at the time of production exists. When the value of this field is 1, the content_fov field may exist.

The content_fov field may indicate information about the FOV of the 360-degree video intended at the time of production. In some embodiments, the portion of the 360-degree video that is displayed to a user at once may be determined based on the vertical or horizontal FOV of the 360-degree video reception apparatus. Alternatively, in some embodiments, the portion of the 360-degree video that is displayed to the user at once may be determined in consideration of the FOV information of this field.

The cropped-region-related metadata may include information about the area of an image frame that includes actual 360-degree video data. The image frame may include an active video area, in which actual 360-degree video data is projected, and an inactive video area. Here, the active video area may be called a cropped area or a default display area. The active video area is an area that is seen as the 360-degree video in an actual VR display. The 360-degree video reception apparatus or the VR display may process/display only the active video area. For example, in the case in which the aspect ratio of the image frame is 4:3, only the remaining area of the image frame, excluding a portion of the upper part and a portion of the lower part of the image frame, may include the 360-degree video data. The remaining area of the image frame may be the active video area.

The cropped-region-related metadata may include an is_cropped_region field, a cr_region_left_top_x field, a cr_region_left_top_y field, a cr_region_width field, and/or a cr_region_height field. In some embodiments, the cropped-region-related metadata may further include additional information.

The is_cropped_region field may be a flag indicating whether the entire area of the image frame is used by the 360-degree video reception apparatus or the VR display. That is, this field may indicate whether the entire image frame is the active video area. In the case in which only a portion of the image frame is the active video area, the following four fields may be further included.

The cr_region_left_top_x field, the cr_region_left_top_y field, the cr_region_width field, and the cr_region_height field may indicate the active video area in the image frame. These fields may indicate the x coordinate of the left top of the active video area, the y coordinate of the left top of the active video area, the horizontal length (width) of the active video area, and the vertical length (height) of the active video area, respectively. The horizontal length and the vertical length may be expressed using pixels.

As previously described, 360-degree-video-related signaling information or metadata may be included in an arbitrarily defined signaling table, may be included in the form of a box in a file format of ISOBMFF or Common File Format, or may be transmitted while being included in DASH MPD. In addition, 360-degree media data may be transmitted while being included in such a file format of a DASH segment.

Hereinafter, ISOBMFF and DASH MPD will be described sequentially.

FIG. 9 is a view showing the structure of a media file according to an embodiment of the present invention.

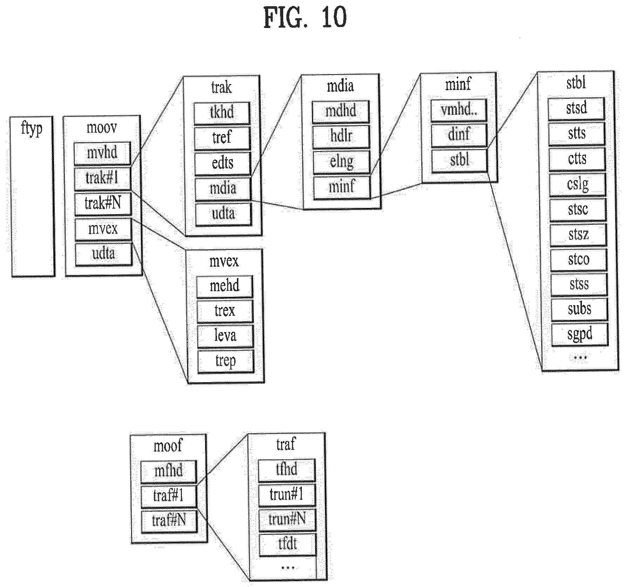

FIG. 10 is a view showing the hierarchical structure of boxes in ISOBMFF according to an embodiment of the present invention.

A standardized media file format may be defined to store and transmit media data, such as audio or video. In some embodiments, the media file may have a file format based on ISO base media file format (ISO BMFF).

The media file according to the present invention may include at least one box. Here, the term "box" may be a data block or object including media data or metadata related to the media data. Boxes may have a hierarchical structure, based on which data are sorted such that the media file has a form suitable for storing and/or transmitting large-capacity media data. In addition, the media file may have a structure enabling a user to easily access media information, e.g. enabling the user to move to a specific point in media content.

The media file according to the present invention may include an ftyp box, an moov box, and/or an mdat box.

The ftyp box (file type box) may provide the file type of the media file or information related to the compatibility thereof. The ftyp box may include configuration version information about media data of the media file. A decoder may sort the media file with reference to the ftyp box.

The moov box (movie box) may be a box including metadata about media data of the media file. The moov box may serve as a container for all metadata. The moov box may be the uppermost-level one of the metadata-related boxes. In some embodiments, only one moov box may exist in the media file.

The mdat box (media data box) may be a box containing actual media data of the media file. The media data may include audio samples and/or video samples. The mdat box may serve as a container containing such media samples.

In some embodiments, the moov box may further include an mvhd box, a trak box, and/or an mvex box as lower boxes.

The mvhd box (movie header box) may include information related to media presentation of media data included in the media file. That is, the mvhd box may include information, such as a media production time, change time, time standard, and period of the media presentation.

The trak box (track box) may provide information related to a track of the media data. The trak box may include information, such as stream-related information, presentation-related information, and access-related information about an audio track or a video track. A plurality of trak boxes may exist depending on the number of tracks.

In some embodiments, the trak box may further include a tkhd box (track heater box) as a lower box. The tkhd box may include information about the track indicated by the trak box. The tkhd box may include information, such as production time, change time, and identifier of the track.

The mvex box (move extended box) may indicate that a moof box, a description of which will follow, may be included in the media file. moof boxes may be scanned in order to know all media samples of a specific track.

In some embodiments, the media file according to the present invention may be divided into a plurality of fragments (t18010). As a result, the media file may be stored or transmitted in the state of being divided. Media data (mdat box) of the media file may be divided into a plurality of fragments, and each fragment may include one moof box and one divided part of the mdat box. In some embodiments, information of the ftyp box and/or the moov box may be needed in order to utilize the fragments.

The moof box (movie fragment box) may provide metadata about media data of the fragment. The moof box may be the uppermost-level one of the metadata-related boxes of the fragment.

The mdat box (media data box) may include actual media data, as previously described. The mdat box may include media samples of the media data corresponding to the fragment.

In some embodiments, the moof box may further include an mfhd box and/or a traf box as lower boxes.

The mfhd box (movie fragment header box) may include information related to correlation between the divided fragments. The mfhd box may indicate the sequence number of the media data of the fragment. In addition, it is possible to check whether there are omitted parts of the divided data using the mfhd box.

The traf box (track fragment box) may include information about the track fragment. The traf box may provide metadata related to the divided track fragment included in the fragment. The traf box may provide metadata in order to decode/reproduce media samples in the track fragment. A plurality of traf boxes may exist depending on the number of track fragments.

In some embodiments, the traf box may further include a tfhd box and/or a trun box as lower boxes.

The tfhd box (track fragment header box) may include header information of the track fragment. The tfhd box may provide information, such as a basic sample size, period, offset, and identifier, for media samples of the track fragment indicated by the traf box.

The trun box (track fragment run box) may include information related to the track fragment. The trun box may include information, such as a period, size, and reproduction start time for each media sample.

The media file or the fragments of the media file may be processed and transmitted as segments. The segments may include an initialization segment and/or a media segment.

The file of the embodiment shown (t18020) may be a file including information related to initialization of a media decoder, excluding a media file. For example, this file may correspond to the initialization segment. The initialization segment may include the ftyp box and/or the moov box.

The file of the embodiment shown (t18030) may be a file including the fragment. For example, this file may correspond to the media segment. The media segment may include the moof box and/or the mdat box. In addition, the media segment may further include an styp box and/or an sidx box.

The styp box (segment type box) may provide information for identifying media data of the divided fragment. The styp box may perform the same function as the ftyp box for the divided fragment. In some embodiments, the styp box may have the same format as the ftyp box.

The sidx box (segment index box) may provide information indicating the index for the divided fragment, through which it is possible to indicate the sequence number of the divided fragment.

In some embodiments (t18040), an ssix box may be further included. In the case in which the segment is divided into sub-segments, the ssix box (sub-segment index box) may provide information indicating the index of the sub-segment.

The boxes in the media file may include further extended information based on the form of a box shown in the embodiment (t18050) or FullBox. In this embodiment, a size field and a largesize field may indicate the length of the box in byte units. A version field may indicate the version of the box format. A type field may indicate the type or identifier of the box. A flags field may indicate a flag related to the box.

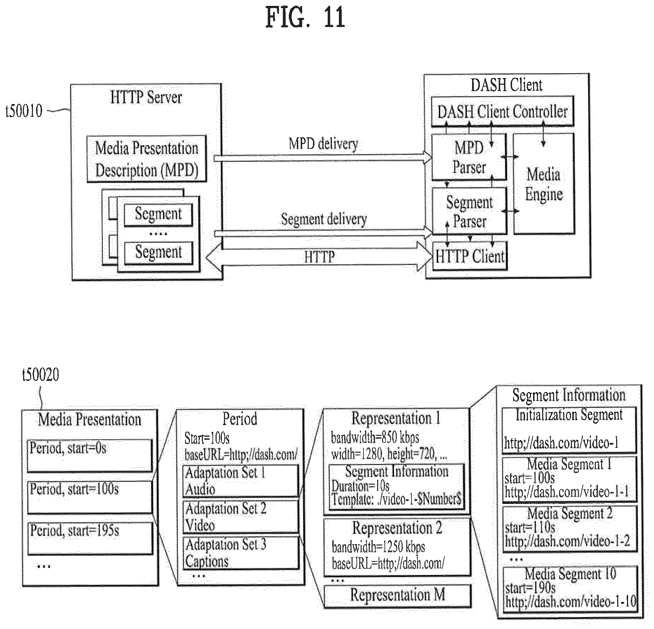

FIG. 11 is a view showing the overall operation of a DASH-based adaptive streaming model according to an embodiment of the present invention.

A DASH-based adaptive streaming model according to the embodiment shown (t50010) describes the operation between an HTTP server and a DASH client. Here, Dynamic Adaptive Streaming over HTTP (HTTP), which is a protocol for supporting HTTP-based adaptive streaming, may dynamically support streaming depending on network conditions. As a result, AV content may be reproduced without interruption.

First, the DASH client may acquire MPD. The MPD may be delivered from a service provider such as an HTTP server. The DASH client may request a segment described in the MPD from the server using information about access to the segment. Here, this request may be performed in consideration of network conditions.

After acquiring the segment, the DASH client may process the segment using a media engine, and may display the segment on a screen. The DASH client may request and acquire a necessary segment in real-time consideration of reproduction time and/or network conditions (Adaptive Streaming). As a result, content may be reproduced without interruption.

Media Presentation Description (MPD) is a file including detailed information enabling the DASH client to dynamically acquire a segment, and may be expressed in the form of XML.

A DASH client controller may generate a command for requesting MPD and/or a segment in consideration of network conditions. In addition, this controller may perform control such that the acquired information can be used in an internal block such as the media engine.

An MPD parser may parse the acquired MPD in real time. As a result, the DASH client controller may generate a command for acquiring a necessary segment.

A segment parser may parse the acquired segment in real time. The internal block such as the media engine may perform a specific operation depending on information included in the segment.

An HTTP client may request necessary MPD and/or a necessary segment from the HTTP server. In addition, the HTTP client may deliver the MPD and/or segment acquired from the server to the MPD parser or the segment parser.

The media engine may display content using media data included in the segment. At this time, information of the MPD may be used.

A DASH data model may have a hierarchical structure (t50020). Media presentation may be described by the MPD. The MPD may describe the temporal sequence of a plurality of periods making media presentation. One period may indicate one section of the media content.

In one period, data may be included in an adaptation set. The adaptation set may be a set of media content components that can be exchanged with each other. Adaptation may include a set of representations. One representation may correspond to a media content component. In one representation, content may be temporarily divided into a plurality of segments. This may be for appropriate access and delivery. A URL of each segment may be provided in order to access each segment.

The MPD may provide information related to media presentation. A period element, an adaptation set element, and a representation element may describe a corresponding period, adaptation set, and representation, respectively. One representation may be divided into sub-representations. A sub-representation element may describe a corresponding sub-representation.

Here, common attributes/elements may be defined. These may be applied to (included in) the adaptation set, the representation, and the sub-representation. EssentialProperty and/or SupplementalProperty may be included in the common attributes/elements.

EssentialProperty may be information including elements considered to be essential to process data related to the media presentation. SupplementalProperty may be information including elements that may be used to process data related to the media presentation. In some embodiments, in the case in which signaling information, a description of which will follow, is delivered through the MPD, the signaling information may be delivered while being defined in EssentialProperty and/or SupplementalProperty.

The DASH-based descriptor may include a @schemeIdUri field, a @value field, and/or a @id field. The @schemeIdUri field may provide a URI for identifying the scheme of the descriptor. The @value field may have values, the meanings of which are defined by the scheme indicated by the @schemeIdUri field. That is, the @value field may have the values of descriptor elements based on the scheme, which may be called parameters. These may be delimited using ','. The @id field may indicate the identifier of the descriptor. In the case in which this field has the same identifier, the field may include the same scheme ID, value, and parameter.

Each embodiment of the 360-degree-video-related metadata may be rewritten in the form of a DASH-based descriptor. In the case in which 360-degree video data are delivered according to DASH, the 360-degree-video-related metadata may be described in the form of a DASH-based descriptor, and may be delivered to the reception side while being included in the MPD, etc. These descriptors may be delivered in the form of the EssentialProperty descriptor and/or the SupplementalProperty descriptor. These descriptors may be delivered while being included in the adaptation set, representation, and sub-representation of the MPD.

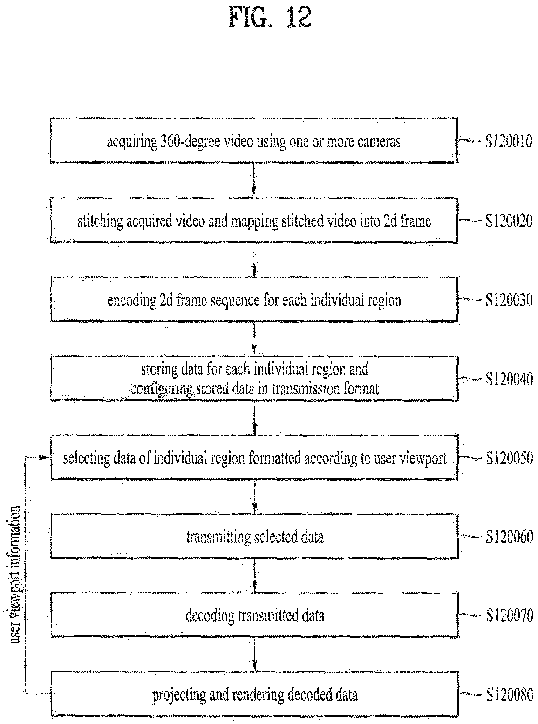

FIG. 12 is a view showing a 360-degree video processing method according to an embodiment of the present invention.

A 360-degree video processing method according to an embodiment includes a step of acquiring 360-degree video (S120010), a step of stitching the acquired video and mapping the stitched video into a 2D frame (S120020), a step of encoding the 2D frame for each individual region (S120030), a step of storing data for each individual region and configuring the stored data in a transmission format (S 120040), a step of selecting data formatted according to a user viewport (S120050), a step of transmitting the selected data (S120060), a step of decoding the transmitted data (S120070), and a step of projecting and rendering the decoded data (S120080).

The step of acquiring the 360-degree video (S120010) may be a step of acquiring video in all directions (360 degrees) using one or more cameras. In an alternative embodiment, the step of acquiring the 360-degree video (S120010) may be a step of acquiring video encompassing less than 360 degrees using one or more cameras. In another aspect, the step of acquiring the 360-degree video (S120010) may be a step of generating data corresponding to 360-degree video to acquire 360-degree video instead of acquiring 360-degree video using an actual camera.

The step of stitching the acquired video and mapping the stitched video into the 2D frame (S120020) may include a process of stitching the acquired video in a three-dimensional (3D) geometry and a process of mapping the stitched video in the 2D frame using a predetermined mapping method. In the stitching process, the 360-degree video may be stitched in the 3D geometry through compensatory work such as removal of overlapping regions. The process of mapping the stitched video in the 2D frame may include a process of projecting the stitched video according to a projection scheme and a process of mapping at least one two-dimensional surface generated through the projection in the 2D frame.

The step of encoding the 2D frame for each region (S120030) may include a process of dividing a 2D frame sequence generated through the 2D frame mapping process into individual regions and a process of encoding the divided individual regions. Here, the individual regions conceptually correspond to the above-described regions. Since tiles may be used equally with the regions, however, the individual regions may be identical to the tiles. In an embodiment, the process of dividing the 2D frame sequence into the individual regions may be a process of dividing the 2D frame sequence into independently usable regions using HEVC tiles.

The step of storing data for each individual region and configuring the stored data in the transmission format (S120040) may be a step of configuring data encoded for each individual region in a storage format and/or a transmission format in which the data can be accessed and used for each individual region.

The data generated through the above steps may be transmitted to a reception side (S120060). The transmitted data may undergo the decoding step (S120070) and the step of projecting and rendering the decoded data (S120080) so as to be consumed at the reception side, i.e. a reception apparatus. At this time, the reception apparatus may sense a user viewport, may decode data coinciding with the user viewport (S120070), and may project and render the decoded data (S120080). The process of decoding, projecting, and rendering the data coinciding with the user viewport may be repeatedly performed over time, Meanwhile, the projection at the reception side may be a process of restoring the data mapped in the 2D frame according to the projection scheme. That is, the projection at the reception side may be called re-projection.

In an embodiment, the 360-degree data consumption process at the reception side may be performed through interactive operation between the reception side and the transmission side. That is, the 360-degree data consumption process may include a process of the reception apparatus transmitting information about the user viewport sensed by the reception apparatus to the transmission side. The transmission side may select data corresponding to the user viewport using the user viewport information transmitted by the reception apparatus (S120050), and may transmit the selected data to the reception side (S120060). The transmitted data may undergo the decoding step (S120070) and the step of projecting and rendering the decoded data (S120080) so as to be consumed at the reception side.

In another embodiment, the 360-degree data consumption process at the reception side may be performed through a series of operations in the reception side. That is, the 360-degree data consumption process may include a step of the reception apparatus selecting data corresponding to the user viewport from among the received data using the user viewport information sensed by the reception apparatus (S120050). The selected data may undergo the decoding step (S120070) and the step of projecting and rendering the decoded data (S120080) so as to be consumed at the reception side.

The user viewport information at the reception side may be parameter information related to a 3D model for rendering.

Hereinafter, a data format configuration method according to an embodiment of the present invention will be described.

The data format configuration method described below may be a concrete embodiment of the step of storing data for each individual region and configuring the stored data in the transmission format (S120040) among the steps included in the 360-degree video processing method described above.

360-degree video may be stored and transmitted while being mapped in a 2D video frame. At this time, video processing based on a user viewport may be realized based on a tile.

All tiles constituting one frame sequence may be stored in one track of a file, or may be stored in one track for each tile. Alternatively, a tile region or a tile set including one or more tiles may be stored in a track. Here, the tile region may be a quadrangular region including one or more tiles, and the tile set may be a set of one or more tiles constituting a non-quadrangular region. The tile region or the tile set may be called multiple regions to distinguish the same from individual regions.

In an embodiment, 360-degree video may be formatted in the form of a 2D video frame using HEVC. At this time, video processing based on a user viewport may be realized through an HEVC tile. The HEVC tile is a tile defined in an HEVC standard, and is a partial quadrangular region in an HEVC frame that can be independently processed. All HEVC tiles constituting one frame sequence may be stored in one track of a file, or may be stored in one track for each HEVC tile. Alternatively, an HEVC tile region or an HEVC tile set including one or more HEVC tiles may be stored in a track.

In the case in which each region is stored in one track or in the case in which a tile region or a tile set including one or more tiles is stored in a track, a plurality of tracks for a full picture sequence may exist in a file. One of the tracks may be selectively reproduced or streamed. In the case in which 360-degree video is stored in the form of tracks, only a track including a user viewport area may be selectively reproduced or streamed. Consequently, resources for reproducing the other unselected tracks may be saved.

In an embodiment of the present invention, an alternate_group field of a track header box ('tkhd') of ISO BMFF may be used for selective reproduction/streaming for each individual region.

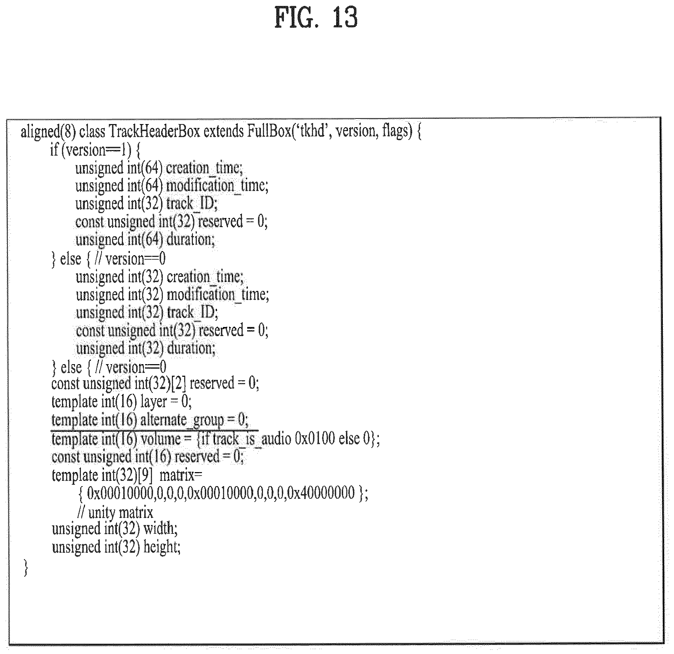

FIG. 13 is a view showing a track header box according to an embodiment of the present invention.

Referring to the figure, there is shown the syntax of a track header box (tkhd) of ISO BMFF. In the figure, version, flags, creation_time, modification_time, track_ID, layer, alternate_group, volume, matrix, width, and height are shown as concrete semantics.
version describes the version information of the box in the form of an integer.
flags may be a 24-bit integer defined by the following value.
creation_time is an integer declaring the creation time of track (from midnight of January 1, 1904 (UTC time) in seconds).
modification_time is an integer declaring the latest time at which the track is modified (from midnight of January 1, 1904 (UTC time) in seconds).
track_ID is an integer inherently identifying a track during the total life time of the presentation. track_ID cannot be reused, and cannot be 0.
duration is an integer indicating the running time of the track (a time scale indicated in a Movie Header Box). The value of this field is identical to the total amount of all track edit durations. In the case in which there is no edit list, the duration is identical to the total sample duration, and is converted into the time scale indicated in the Movie Header Box. In the case in which the duration of this track is not determined, the duration is set to 1 (32 bit maxint).
layer describes the sequence of a video track. A track having a lower number is closer to a viewer. 0 is a normal value, and -1 is located before track 0.
alternate_group is an integer describing a group or set of tracks. In the case in which the value of this field is 0, there is no information about the relationship with other tracks. In the case in which the value of this field is not 0, the track has the same value as the other tracks including alternate data and has different values than tracks belonging to another group. Only one track in the alternate group must be reproduced or streamed at an arbitrary time, and may be distinguished from other tracks of the group in terms of various attributes such as bit transfer rate, codec, language, and packet size. The group may include only one member.
volume, which is a value fixed to 8.8, describes the relative audio volume of a track. The full volume is 1.0, which is a normal volume. This value is not related to a visual track. Tracks may be combined depending on the volume, and may be configured using all Movie Header Box volume settings. Alternatively, more complicated audio composition (e.g. MPEG-4 BIFS) may be used.
matrix provides a transformation matrix for video. Here, (u, v, w) is limited to (0, 0, 1), hex(0,0, 0x40000000).
width and height describe the visual presentation size of a track as a fixed decimal point 16.16. This may not necessarily be equal to the pixel size of an image recoded in sample description. All images of a sequence may be scaled to this size before overall conversion for a track represented by a matrix. The pixel sizes of the image are default values.

In an embodiment of the present invention, an alternate_group field may be used for selective reproduction/streaming for each individual region. That is, in the case in which one video frame is divided into individual regions and the individual regions are stored in respective tracks, alternate_group of tkhd corresponding to each track may be configured so as to have the same nonzero value. In other words, alternate_group of tkhd corresponding to tracks that can perform selective reproduction or streaming for individual regions may be configured so as to have the same nonzero value. As a result, it may be indicated that tracks that can perform selective reproduction or streaming for individual regions may be grouped and that the grouped tracks can be selectively used. alternate_group having a value that is not 0 may be called grouping information for selective reproduction (or streaming).

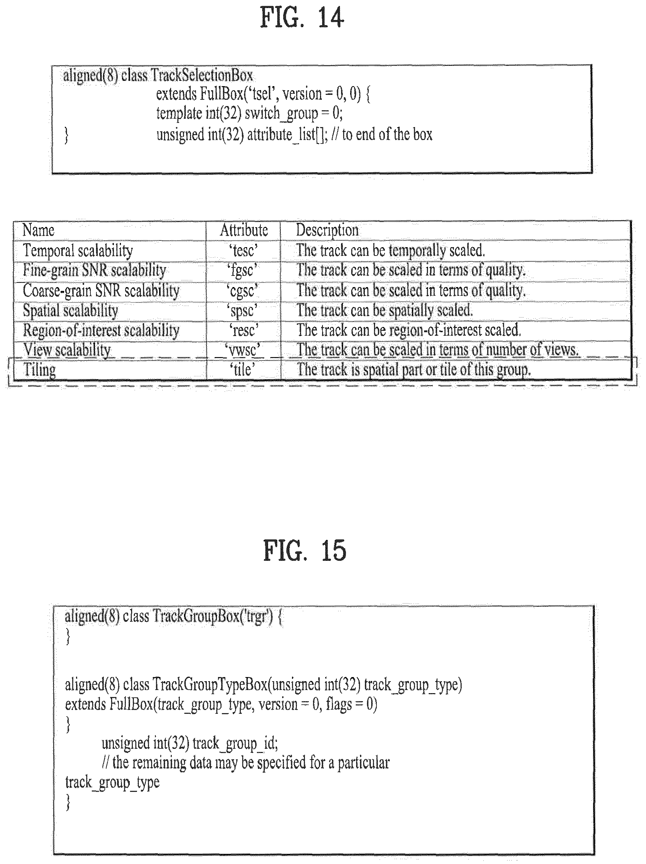

FIG. 14 is a view showing a track selection box according to an embodiment of the present invention.

The track selection box (tsel) shown in the figure may indicate a group that can be switched mutually among the tracks grouped by alternate_group of tkh, i.e. a switching group.

Referring to the figure, switch_group and attribute_list are shown in the upper end and the lower end of the figure, respectively.
switch_group may provide grouping information for tracks that can be switched mutually during reproduction/streaming. That is, switch_group may provide grouping information for tracks that can be switched mutually using a method similar to the method by which alternate_group of 'tkhd' groups tracks that can be selectively reproduced or streamed. The switch group of 'tsel' included in a track box corresponding to tracks that can be switched mutually may have the same switch_group value that is not 0. That switch group of 'tsel' has the same switch_group value that is not 0 may mean that the tracks are tracks that can be switched mutually. That tracks can be switched mutually during reproduction/streaming must be based on the ability to selectively reproduce or stream tracks. Consequently, tracks belonging to the same switch group may have a restriction in which the tracks must belong to the same alternate group. In other words, tracks having the same switch_group value may have a restriction in which the tracks must have the same alternate_group value. Meanwhile, a switch group having a value that is not 0 may be called grouping information for switching between tracks.
attribute_list is a field indicating description or differentiation for the relationship between tracks belonging to the switch group or the alternate group. The names and descriptions of attributes are as shown. attribute_list according to an embodiment of the present invention may further include an attribute 'tile'. The name of the attribute 'tile' is 'tiling'. The attribute 'tile' may indicate the relationship between tiles constituting a partial region or tile of a full picture. The attribute 'tile' may be duplicated with other attributes described in attribute_list.

Meanwhile, the value of 'tile' of attribute_list of a tsel box may indicate that the above alternate grouping is based on region division of a video frame.

The method of grouping individual regions that can be selectively reproduced using the alternate group and the method of grouping individual regions that can be switched among individual regions that can be selectively reproduced using the switch group were described previously.

The above-described methods relate to selective reproduction and switching for individual regions, and the selective reproduction and switching may be limited to a single region. Hereinafter, a method of selecting together a plurality of regions (one or more regions) generated from the same source without such a restriction and of switching to another plurality of regions (one or more other regions) during representation will be described.

In an embodiment, track_group_type 'ttgr' may be defined in order to define a track group in which a plurality of regions can be simultaneously selected for reproduction or streaming or in which a plurality of regions can be switched to another plurality of regions during reproduction or streaming.

ttgr indicates that the track belongs to a tile track group. Tracks having the same value of track_group_id in a group type box having track_group_type 'ttgr' originate from the same complete picture sequence (full picture sequence), and each track includes a tile region or a tile set of the complete picture sequence. The subsets in this group can be reproduced or streamed at any time, and the subsets can be switched mutually during reproduction or streaming.

FIG. 15 is a view showing a track group box according to an embodiment of the present invention.

As shown, the track group box (trgr) may indicate a track group in which a plurality of regions can be simultaneously selected for reproduction (or streaming) using track_group_type as tile track group (ttgr) and in which a plurality of regions can be switched to another plurality of regions. That is, in the case in which the track box includes a track group box (trgr), the value of track_group_type of the track group box is 'ttgr', and track_group_id has a value that is not 0, this may mean that the tracks belong to a tile track group. One or more of the tracks belonging to the tile track group may be selected for reproduction or streaming, and switching from one track to another track or from a plurality of tracks to another plurality of tracks may be performed during reproduction or streaming.

Meanwhile, one or more of the tracks belonging to the tile track group (ttgr) may be selected for reproduction/streaming. Whether switching to another track is possible during reproduction/streaming may be signaled through new track_group_type. In an embodiment, new track_group_type may be track_group_type as a tile track switch group (tsgr). tsgr may indicate a group of tile tracks that can be switched while a track including a plurality of regions (one or more regions) is reproduced/streamed. Here, the tile tracks that can be switched may be tracks including a plurality of regions (one or more regions).

In selective reproduction and switching for individual regions, tracks belonging to the same switch group may have a restriction in which the tracks must belong to the same alternate group, as previously described. In the same manner, tracks having the same value of track_group_id of tsgr that is not 0 may have a restriction in which the tracks must have the same value of track_group_id of ttgr that is not 0.

Meanwhile, coding dependency between tiles included in one picture may be changed depending on the screen prediction method. In the case in which encoding is performed according to intra prediction, only samples belonging to the tile are referred to, whereby no coding dependency exists between tiles included in one picture. For example, in the case in which encoding is performed using an HEVC tile, only samples belonging to the tile are referred to according to intra prediction, whereby no coding dependency exists between tiles included in one picture. In the case in which encoding is performed according to inter prediction, however, samples belonging to tiles other than the tile may be referred to, whereby coding dependency may exist between tiles.

In the case in which coding dependency exists between tiles, the coding dependency between the tiles may be signaled through sample group description of TileRegionGroup Entry (trif) or TileSetGroupEntry (tsif).

Meanwhile, a track may include a tile region or a tile set as well as a unit tile (a single tile). As previously described, tile regions or tile sets may be included. Consequently, a tile region or a tile set included in the track may have coding dependency with a tile region or a tile set included in another track. In the case in which coding dependency exists between a tile region and another tile region, between a tile set and another tile set, or between a tile region and a tile set, as described above, coding dependency may exist between tracks. Consequently, it is necessary to provide a method of signaling that coding dependency exists between tracks.

Hereinafter, a method of signaling coding dependency between tracks using a Track Reference Box will be described.

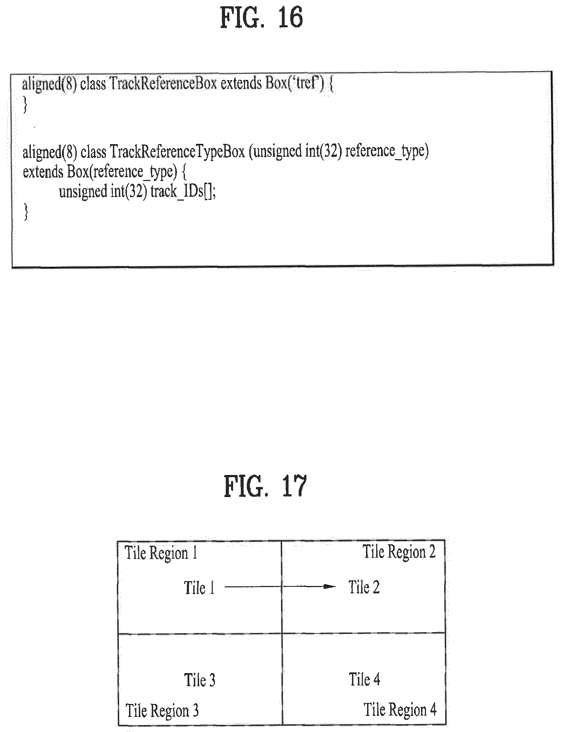

FIG. 16 is a view showing a track reference box according to an embodiment of the present invention.

The track reference box (tref) shown in the figure may use tile dependency (tdep) as a reference type. tdep indicates that a tile region or a tile set included in the track has coding dependency with a tile region or a tile set included in another track. tdep may signal a reference relationship between tracks depending on coding dependency between a tile region and another tile region, between a tile set and another tile set, or between a tile region and a tile set. In addition, a tref box having 'tdep' reference_type may provide track information that is referred to through track_IDs of the tdep. Consequently, a file reader may recognize that a tile track including a tref box having 'tdep' reference_type must reproduce video while referring to a track indicated through track_IDs of the 'tdep'.

The above method may be applied to DASH. For example, in the case in which tracks having coding dependency are described in MPD while each of tracks includes Representation, 'tdep' may be given as the value of Representation@associationType. As a result, the relationship between Representations having coding dependency may be signaled, in the same manner as in the relationship between tracks having coding dependency, and @id of Representation to be referred to is given through @associationId, whereby reference Representation may be indicated. In addition, when a DASH client requests Segments of Representation having associationType of 'tdep' for reproduction, associationId may indicate that Segments of Representation indicated through associationId must also be requested. In some embodiments, Representation@dependencyId may be used instead of Representation@associationId.

Hereinafter, a concrete embodiment of a method of performing selective reproduction/streaming and switching for individual regions, performing selective reproduction/streaming and switching for a plurality of regions, and signaling coding dependency between tracks will be described.

FIG. 17 is a view showing a full picture sequence according to an embodiment of the present invention.

In the embodiment shown, the full picture sequence includes four tiles. In addition, the full picture sequence includes four tile regions. That is, each tile region includes one tile. In other words, tile region 1 includes tile 1, tile region 2 includes tile 2, tile region 3 includes tile 3, and tile region 4 includes tile 4.

The configuration of the full picture sequence according to this embodiment may be easily understood with reference to the previous description of the tile, tile region, and the tile set and the following illustration of a full picture sequence according to another embodiment of the present invention.

Meanwhile, in this embodiment, tile region 1 and tile region 2 have coding dependency therebetween. The coding dependency relationship is indicated by an arrow.

Hereinafter, a more concrete embodiment will be described with reference to a full picture sequence according to an embodiment of the present invention.

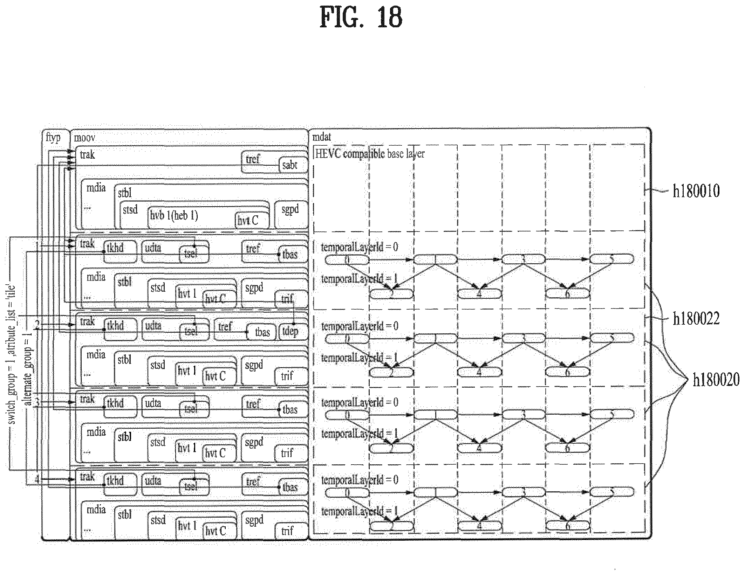

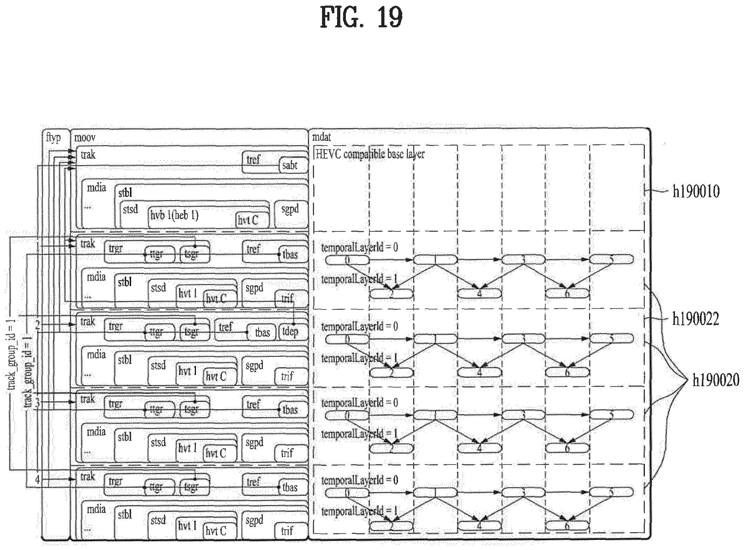

FIGs. 18 and 19 are views showing the structure of an ISO BMFF file in an embodiment in which 360-degree video includes four tile tracks and one non-tile track and in which no extractor is used.

FIG. 18 shows an embodiment using the tkhd box and the tsel box, and FIG. 19 shows an embodiment using the ttgr box and the tsgr box.

Here, a non-tile track h180010 or h190010 stores configuration information of HEVC corresponding to a full picture sequence such that a file parser transmits a bitstream compatible with an HEVC stream to an HEVC decoder. The track uses 'hvb1' or 'heb1' for sample description. In the case of 'hvb1', parameter set information such as VPS, SPS, and PPS may be included in an HEVC Configuration Box ('hvcC'). In the case of 'heb1', the parameter set information may be included in 'hvcC', or may be included in an 'mdat' box in the form of an NAL unit. A VCL NAL unit corresponding to this track may not exist in the 'mdat' box. In this case, the size of each sample may be recorded as 0. 'sabt' may be included in a Track Reference Box in order to refer to a tile track. Consequently, VCL NAL units may be arranged in the sequence of respective samples and the reference sequence of 'sabt' in order to configure a full picture sequence stream.

In addition, a tile track h180020 or h190020 describes VCL NAL units corresponding to respective tile regions existing in the 'mdat' box as a track for a VCL NAL unit corresponding to a tile region or sample data, as shown. 'hvt1' may be used for sample description, and 'tbas' may be included in the Track Reference Box in order to refer to the non-tile track, whereby a stream corresponding to each tile may be configured through such reference. In addition, a second tile track h180022 or h190022 may include the above-described 'tdep', whereby it is possible to recognize that this tile track has a reference relationship with the first tile track based on coding dependency between tile regions. 'trif included in 'sgpd' describes individual tile region information.

In the embodiment of FIG. 18, the value of alternate_group included in the tkhd box is 1. This indicates that tracks including alternate_group having the same nonzero value can be selectively reproduced or streamed. In addition, in an embodiment using the tkhd box and the tsel box, the value of switch_group included in the tsel box is 1. This indicates that tracks including switch_group having the same nonzero value can be switched during reproduction or streaming. In addition, attribute_list included in the tsel box is set to tile in order to indicate that the track is a tile or a portion of a full picture.

In the embodiment of FIG. 19, the value of track_group_id included in the ttgr box is 1. This indicates that tracks including track_group_id having the same nonzero value can be selectively reproduced or streamed. In addition, in an embodiment using the ttgr box and the tsgr box, the value of track_group_id included in the tsgr box is 1. This indicates that tracks including track_group_id having the same nonzero value can be switched during reproduction or streaming.

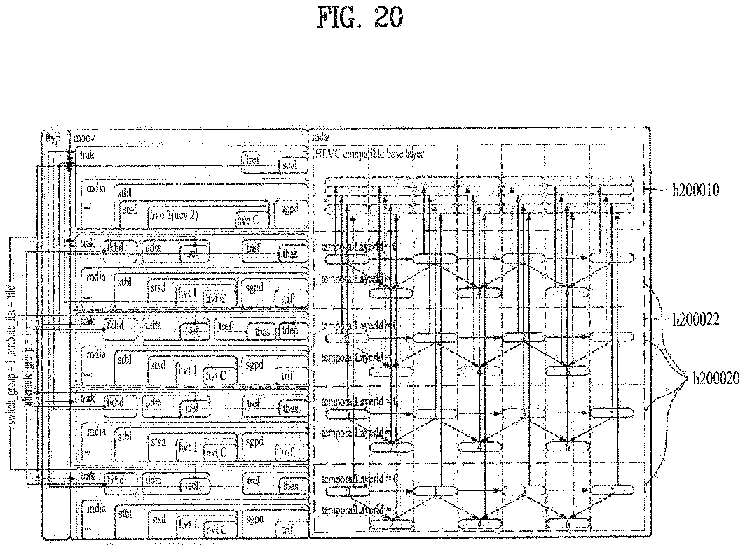

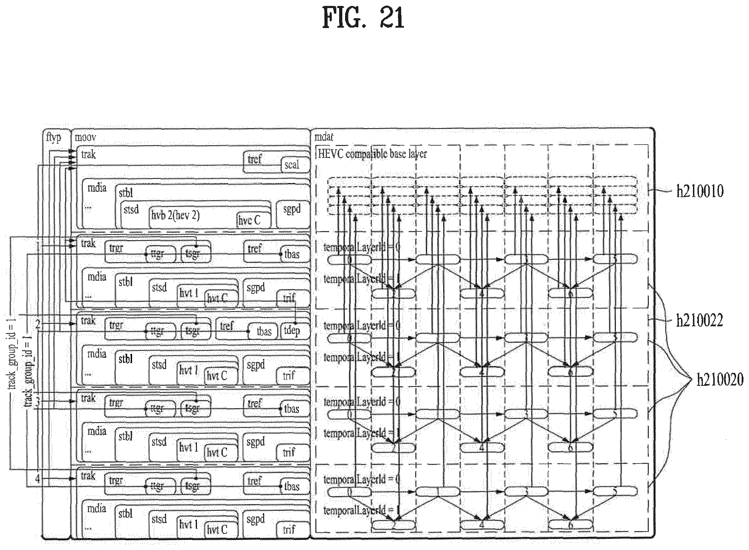

FIGs. 20 and 21 are views showing the structure of an ISO BMFF file in an embodiment in which 360-degree video includes four tile tracks and one non-tile track and in which an extractor is used.

FIG. 20 shows an embodiment using the tkhd box and the tsel box, and FIG. 21 shows an embodiment using the ttgr box and the tsgr box.

The descriptions of the previous embodiment may be equally applied to the non-tile track, tile tracks, alternate_group, switch_group, and 'tile' attribute list, and only differences will be described.

A non-tile track h200010 or h210010 stores configuration information of HEVC corresponding to a full picture sequence such that a file parser transmits a bitstream compatible with an HEVC stream to an HEVC decoder. The track uses 'hvb2' or 'heb2' for sample description. In the case of 'hvb2', parameter set information such as VPS, SPS, and PPS may be included in an HEVC Configuration Box ('hvcC'). In the case of 'heb2', the parameter set information may be included in 'hvcC', or may be included in an 'mdat' box in the form of an NAL unit. Sample data or a VCL NAL unit described by this track may not exist in the 'mdat' box, or extractors may exist to refer to individual VCL NAL units or sample data. 'scal' may be included in a Track Reference Box in order to refer to a tile track. Consequently, the sample data may be copied through the extractors, whereby the extractors may be replaced in order to configure a full picture sequence stream.

A tile track h200020 or h210020 describes VCL NAL units corresponding to respective tile regions existing in the 'mdat' box as a track for a VCL NAL unit corresponding to a tile region or sample data, as shown.

In addition, a second tile track h200022 or h210022 may include the above-described 'tdep', whereby it is possible to recognize that this tile track has a reference relationship with the first tile track based on coding dependency between tile regions. 'trif included in 'sgpd' describes individual tile region information.

In the embodiment of FIG. 20, the value of alternate_group included in the tkhd box is 1. This indicates that tracks including alternate_group having the same nonzero value can be selectively reproduced or streamed. In addition, in an embodiment using the tkhd box and the tsel box, the value of switch_group included in the tsel box is 1. This indicates that tracks including switch_group having the same nonzero value can be switched during reproduction or streaming. In addition, attribute_list included in the tsel box is set to "tile" in order to indicate that the track is a tile or a portion of a full picture.

In the embodiment of FIG. 21, the value of track_group_id included in the ttgr box is 1. This indicates that tracks including track_group_id having the same nonzero value can be selectively reproduced or streamed. In addition, in an embodiment using the ttgr box and the tsgr box, the value of track_group_id included in the tsgr box is 1. This indicates that tracks including track_group_id having the same nonzero value can be switched during reproduction or streaming.

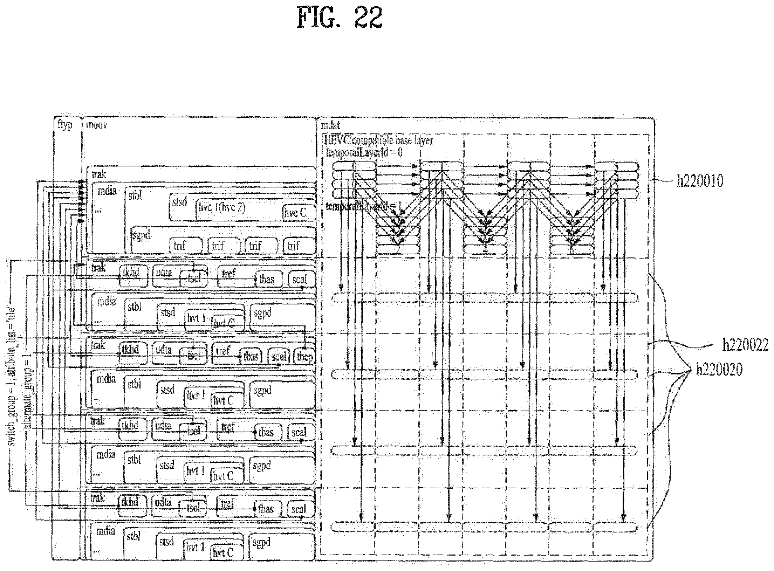

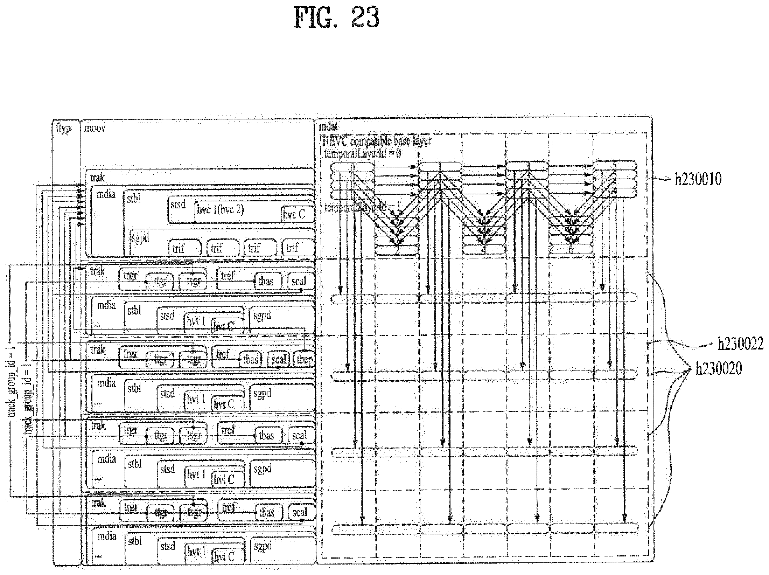

FIGs. 22 and 23 are views showing the structure of an ISO BMFF file in an embodiment in which 360-degree video includes one full picture track and four tile tracks and in which each tile track refers to a full picture using an extractor.

FIG. 22 shows an embodiment using the tkhd box and the tsel box, and FIG. 23 shows an embodiment using the ttgr box and the tsgr box.

The descriptions of the previous embodiment may be equally applied to the non-tile track, tile tracks, alternate_group, switch_group, and 'tile' attribute list, and only differences will be described.

A full picture track h220010 or h230010 stores configuration information of HEVC and a bitstream of a full picture in a form compatible with an HEVC stream. The track uses 'hvc1' or 'hvc2' for sample description. In the case of 'hvc1', parameter set information such as VPS, SPS, and PPS may be included in an HEVC Configuration Box ('hvcC'). In the case of 'hvc2', the parameter set information may be included in 'hvcC', or may be included in an 'mdat' box in the form of an NAL unit. 'trif included in 'sgpd' describes individual tile region information.

A tile track h220020 or h230020 describes VCL NAL units corresponding to respective tile regions existing in the 'mdat' box as a track for a tile region, as shown. Sample data or a VCL NAL unit described by this track may not exist in the 'mdat' box, or extractors may exist to refer to individual VCL NAL units or sample data. 'hvt1' may be used for sample description, and 'tbas' may be included in a Track Reference Box in order to refer to the full picture track, whereby a stream corresponding to each tile may be configured through such reference. In addition, 'sca1' may be included in the Track Reference Box in order to refer to sample data through extractors, whereby it is possible to indicate a full picture track.

In addition, a second tile track h220022 or h230022 may include the above-described 'tdep', whereby it is possible to recognize that this tile track has a reference relationship with the first tile track based on coding dependency between tile regions.

In the embodiment of FIG. 22, the value of alternate_group included in the tkhd box is 1. This indicates that tracks including alternate_group having the same nonzero value can be selectively reproduced or streamed. In addition, in an embodiment using the tkhd box and the tsel box, the value of switch_group included in the tsel box is 1. This indicates that tracks including switch_group having the same nonzero value can be switched during reproduction or streaming. In addition, attribute_list included in the tsel box is set to "tile" in order to indicate that the track is a tile or a portion of a full picture.

In the embodiment of FIG. 23, the value of track_group_id included in the ttgr box is 1. This indicates that tracks including track_group_id having the same nonzero value can be selectively reproduced or streamed. In addition, in an embodiment using the ttgr box and the tsgr box, the value of track_group_id included in the tsgr box is 1. This indicates that tracks including track_group_id having the same nonzero value can be switched during reproduction or streaming.

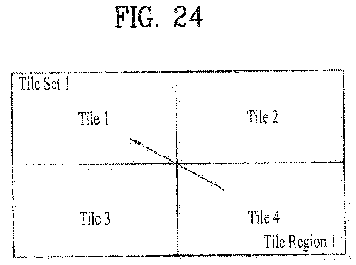

FIG. 24 is a view showing a full picture sequence according to another embodiment of the present invention.

In the embodiment shown, the full picture sequence includes four tiles. Among the four tiles, tile 1, tile 2, and tile 3 constitute a tile set, and tile 4 constitutes a tile region.

The configuration of the full picture sequence according to this embodiment may be easily understood with reference to the previous description of the tile, tile region, and the tile set and the illustration of the full picture sequence according to the previous embodiment of the present invention.

Meanwhile, in this embodiment, tile region 1 and tile set 1 have coding dependency therebetween. The coding dependency relationship is indicated by an arrow.

Also, in this embodiment, each of the two regions, such as the tile set and the tile region, includes layers. That is, 360-degree video according to this embodiment includes a base layer and an enhancement layer. Each layer may include a tile region track and a tile set track.

Hereinafter, a more concrete embodiment will be described with reference to a full picture sequence according to an embodiment of the present invention.

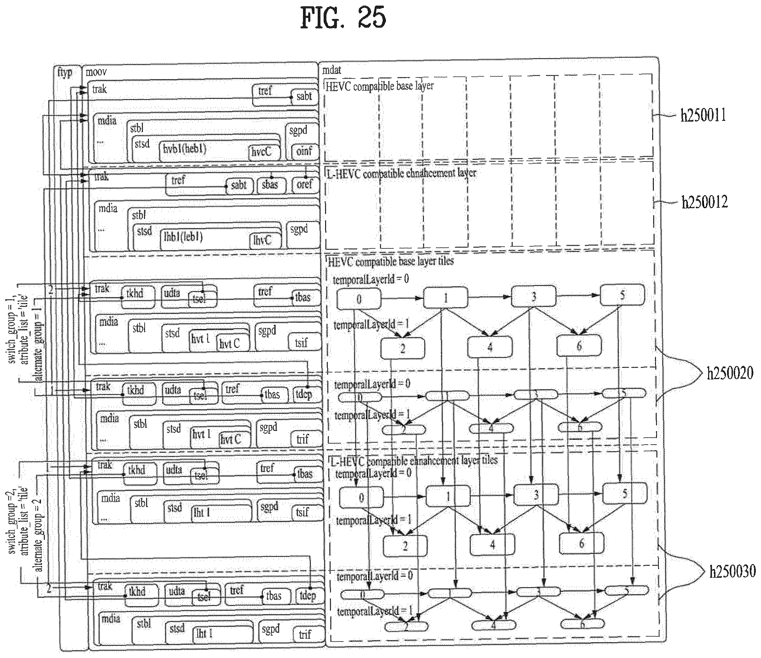

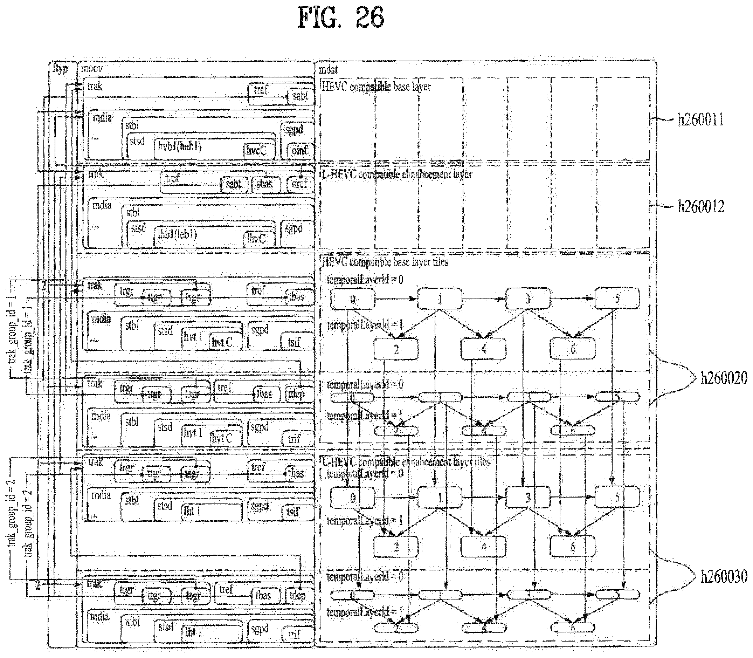

FIGs. 25 and 26 are views showing the structure of an ISO BMFF file in an embodiment in which 360-degree video includes a non-tile track, a tile region track, and a tile set track for a base layer and a non-tile track, a tile region track, and a tile set track for an enhancement layer and in which no extractor is used.

FIG. 25 shows an embodiment using the tkhd box and the tsel box, and FIG. 26 shows an embodiment using the ttgr box and the tsgr box.

The description made with reference to FIG. 18 may be applied to the configuration of a non-tile track h250011 or h260011 of the base layer and relevant description thereof. A non-tile track h250012 or h260012 of the enhancement layer stores configuration information of LHEVC corresponding to a full picture sequence of a target operating point. The track uses 'lhb1' or 'leb1' for sample description. In the case of 'lhb1', parameter set information such as VPS, SPS, and PPS may be included in an LHEVC Configuration Box ('lhvC'). In the case of 'leb1', the parameter set information may be included in 'lhvC', or may be included in an 'mdat' box in the form of an NAL unit. A VCL NAL unit corresponding to this track may not exist in the 'mdat' box. In this case, the size of each sample may be recorded as 0. 'sabt' may be included in a Track Reference Box in order to refer to a tile track. Consequently, VCL NAL units may be arranged in the sequence of respective samples and the reference sequence of 'sabt' in order to configure a full picture sequence stream. In addition, 'sbas' may be included in the Track Reference Box in order to refer to the non-tile track of the base layer, whereby it is possible to designate a track corresponding to the base layer of the current track. 'oref' may designate a track including 'oinf' corresponding to operating point information in order to indicate that the name space of the ID that is used is shared with the designated track.

A tile track h250020 or h260020 of the base layer describes VCL NAL units of the base layer corresponding to respective tile regions or tile sets existing in the 'mdat' box as a track for a VCL NAL unit or sample data of the base layer corresponding to a tile region or a tile set, as shown. 'hvt1' may be used for sample description, and 'tbas' may be included in the Track Reference Box in order to refer to the non-tile track of the base layer, whereby a stream corresponding to each tile may be configured through such reference, 'trif included in 'sgpd' describes individual tile region information, and 'tsif' describes individual tile set information. In addition, the tile region track may include the above-described 'tdep', whereby it is possible to recognize that this tile region track has a reference relationship with the tile set track based on coding dependency between tile regions.

A tile track h250030 or h260030 of the enhancement layer describes VCL NAL units of the enhancement layer corresponding to respective tile regions or tile sets existing in the 'mdat' box as a track for a VCL NAL unit or sample data of the enhancement layer corresponding to a tile region or a tile set, as shown. 'lht1' may be used for sample description, and 'tbas' may be included in the Track Reference Box in order to refer to the non-tile track of the enhancement layer, whereby a stream corresponding to each tile may be configured through such reference. 'trif included in 'sgpd' describes individual tile region information, and 'tsif' describes individual tile set information. In addition, the tile region track may include the above-described 'tdep', whereby it is possible to recognize that this tile region track has a reference relationship with the tile set track based on coding dependency between tile regions.

In the embodiment of FIG. 25, the value of alternate_group of the 'tkhd' box is 1 for the tile region track and the tile set track of the base layer. This indicates that these tracks can be selectively reproduced. The 'tsel' box may exist in 'udta' below each 'trak' box in rank. The value of switch_group is 1 for the tile region track and the tile set track of the base layer. This indicates that these tracks can be switched during reproduction, and indicates that tracks belonging to the group are some regions or tiles of a full picture sequence through the value of 'tile' of attribute_list. The values of alternate_group and switch_group for the tile region track and the tile set track of the enhancement layer are '2' and '2', respectively. This indicates that these tracks can be selectively reproduced and that these tracks can be switched during reproduction. Usage of the value of 'tile' of attribute_list is identical to that for the base layer.

In the embodiment of FIG. 26, the case in which the values of track_group_id set in 'ttgr' for two base tile tracks and two enhancement tile tracks are 1 and 2, respectively, indicates that tracks having the same value can be selected for reproduction/streaming as a single track or a combination of tracks. The case in which the values of track_group_id set in 'ttgr' for two base tracks and two enhancement tracks are 1 and 2, respectively, indicates that tracks having the same value can be switched from a track to another track or from a combination of tracks to another combination of tracks during reproduction/streaming.

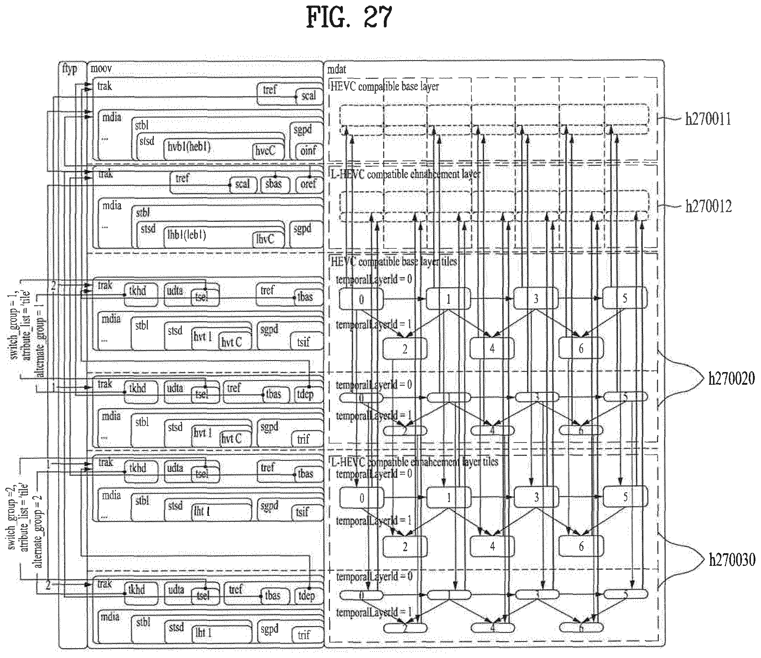

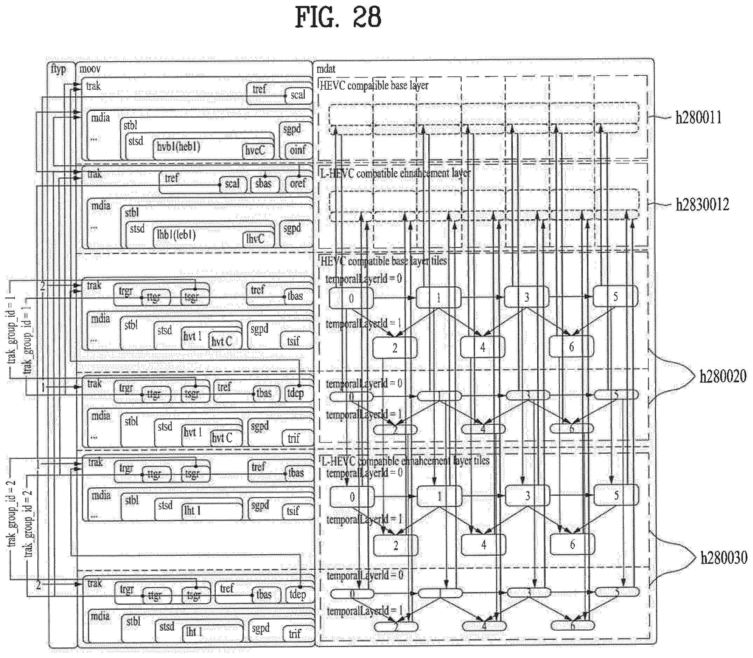

FIGs. 27 and 28 are views showing the structure of an ISO BMFF file in an embodiment in which 360-degree video includes a non-tile track, a tile region track, and a tile set track for a base layer and a non-tile track, a tile region track, and a tile set track for an enhancement layer and in which an extractor is used.

FIG. 27 shows an embodiment using the tkhd box and the tsel box, and FIG. 28 shows an embodiment using the ttgr box and the tsgr box.

The description made with reference to FIG. 20 may be applied to the configuration of a non-tile track h270011 or h280011 of the base layer and relevant description thereof. A non-tile track h270012 or h280012 of the enhancement layer stores configuration information of LHEVC corresponding to a full picture sequence of a target operating point. Sample description and the parameter set storage method in the track are identical to those of the base layer non-tile track of FIG. 25. Sample data or a VCL NAL unit described by this track may not exist in the 'mdat' box, and extractors may exist to refer to individual VCL NAL units or sample data. 'seal' may be included in a Track Reference Box in order to refer to a tile track. Consequently, the sample data may be copied through the extractors, whereby the extractors may be replaced in order to configure a full picture sequence stream. Usage of 'sbas' and 'oref' in the Track Reference Box and usage of the 'tdep' are identical to those of the embodiment of FIG. 25.

A tile track h270020 or h280020 of the base layer describes VCL NAL units of the base layer corresponding to respective tile regions or tile sets existing in the 'mdat' box as a track for a VCL NAL unit or sample data of the base layer corresponding to a tile region or a tile set, as shown.

A tile track h270030 or h280030 of the enhancement layer describes VCL NAL units of the enhancement layer corresponding to respective tile regions or tile sets existing in the 'mdat' box as a track for a VCL NAL unit or sample data of the enhancement layer corresponding to a tile region or a tile set, as shown.

The descriptions of the previous embodiment may be equally applied to the non-tile track, tile tracks, alternate_group, switch_group, and 'tile' attribute list, and only differences will be described.

In the embodiment of FIG. 27, the value of alternate_group of the 'tkhd' box is 1 for the tile region track and the tile set track of the base layer. This indicates that these tracks can be selectively reproduced. The 'tsel' box may exist in 'udta' below each 'trak' box in rank. The value of switch_group is 1 for the tile region track and the tile set track of the base layer. This indicates that these tracks can be switched during reproduction, and indicates that tracks belonging to the group are some regions or tiles of a full picture sequence through the value of 'tile' of attribute_list. The values of alternate_group and switch_group for the tile region track and the tile set track of the enhancement layer are '2' and '2', respectively. This indicates that these tracks can be selectively reproduced and that these tracks can be switched during reproduction. Usage of the value of 'tile' of attribute_list is identical to that for the base layer.

In the embodiment of FIG. 28, in the case in which the values of track_group_id set in 'ttgr' for two base tile tracks and two enhancement tile tracks are 1 and 2, respectively, this indicates that tracks having the same value can be selected for reproduction/streaming as a single track or a combination of tracks. In the case in which the values of track_group_id set in 'ttgr' for two base tile tracks and two enhancement tile tracks are 1 and 2, respectively, this indicates that tracks having the same value can be switched from a track to another track or from a combination of tracks to another combination of tracks during reproduction/streaming.

Hereinafter, a 360-degree video data selection, transmission, and reproduction method based on a user viewport according to an embodiment of the present invention will be described.

A 360-degree video data selection, transmission, and reproduction method based on a user viewport may be provided based on parameters defined in a 360-degree video acquisition space or a user viewport space. Signaling information may be provided for 360-degree video data selection, transmission, and reproduction based on a user viewport according to an embodiment of the present invention. Such signaling information may be called signaling information for 360-degree video data selection, transmission, and reproduction based on a user viewport, and may b e included in the concept of the 360-degree-video-related signaling information. Such signaling information may be provided at a video level or a file level. Meanwhile, signaling information for 360-degree video data selection, transmission, and reproduction based on a user viewport may include information about a mapping type in which 360-degree video is mapped and information about the relationship between a 360-degree video acquisition space or a user viewport space and a mapping space in which the 360-degree video is mapped. In an embodiment, the mapping space in which the 360-degree video is mapped may be a 2D frame. That is, a three-dimensional 360-degree video acquisition space or a user viewport space may be mapped in a 2D frame. Meanwhile, a process of mapping a 360-degree video acquisition space or a user viewport space in a 2D frame may be used to have the same meaning as the projection process. In addition, information about the relationship between a 360-degree video acquisition space or a user viewport space and a mapping space in which the 360-degree video is mapped may be mapping information between a parameter representing a 360-degree video acquisition space or a user viewport space and a parameter representing a mapping space in which the 360-degree video is mapped.

In an embodiment, a 360-degree video acquisition space and/or a user viewport space may be defined on a spherical surface. That is, a 3D model may be a spherical 3D model. This may mean that 360-degree video is rendered on a spherical 3D model from the aspect of the user viewport space.

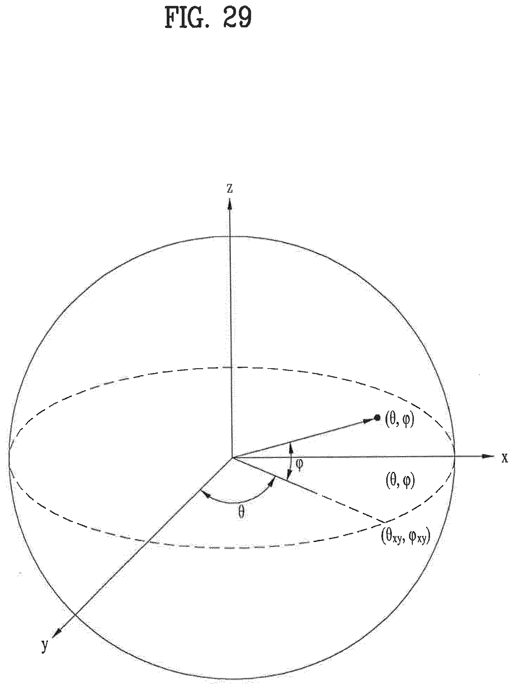

FIG. 29 is a view showing a 360-degree video acquisition space and/or a user viewport space.

An arbitrary point on a sphere having an arbitrary radius may be represented using theta (θ) and phi (ϕ). Here, theta may mean an angle between an y-axis, which is a reference axis, and vector [θxy, ϕxy] obtained by projecting vector [θ, ϕ] on an xy plane, which is a reference plane, and phi may mean an angle between vector [θ, ϕ] and vector [θ, ϕ], ϕxy]. θ may have a range of 0 to 360 degrees or -180 to 180 degrees, and ϕ may have a range of 0 to 180 degrees or -90 to 90 degrees. The y-axis, which is a reference axis, and the xy plane, which is a reference plane, may be defined as another arbitrary axis and another arbitrary plane, respectively. Here, theta and phi may correspond to yaw and pitch of the principal aircraft axes, respectively.

### VCL-level signaling

The provision of signaling information for data selection and reproduction based on a user viewport in a VCL (Video Coding Layer) may be achieved through an SEI (Supplemental Enhancement Information) message of vr_rect_region_mapping() and vr_tile_rect_region_mapping(), a description of which will follow.

Here, vr_rect_region_mapping() may be used irrespective of the type of a video codec, such as H.264/AVC or MPEG-2, and the concept of the tile may be used for vr_tile_rect_region_mapping(). In an embodiment, vr_tile_rect_region_mapping() may be used to have the same meaning as tile defined in HEVC.

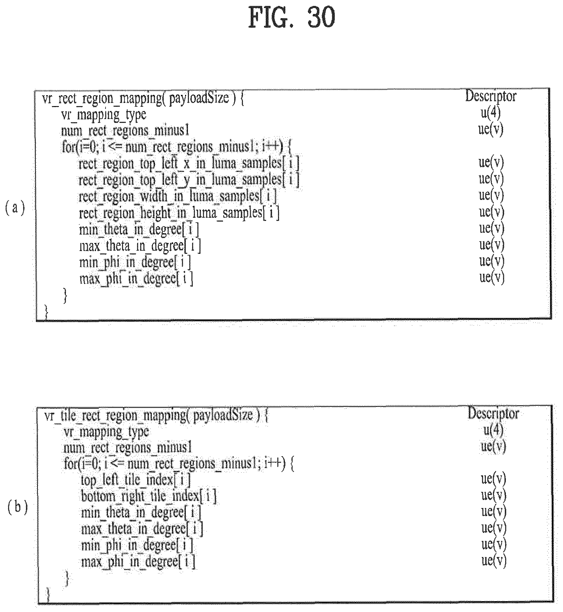

FIG. 30 is a view showing signaling information for 360-degree video data selection, transmission, and reproduction based on a user viewport according to an embodiment of the present invention.

FIG. 30(a) shows an embodiment of vr_rect_region_mapping(), and FIG. 30(b) shows an embodiment of vr_tile_rect_region_mapping(). The embodiment shown is an embodiment in which signaling information is included in an SEI message.

First, vr_rect_region_mapping() and vr_tile_rect_region_mapping() commonly include vr_mapping_type information and num_rect_regions_minus1 information.

The vr_mapping_type information may indicate information about a mapping type in which 360-degree video is mapped. In an embodiment, in the case in which the value of vr_mapping_type is 0, this may indicate an equirectangular mapping type. In the case in which the value of vr_mapping_type is 1, this may indicate a cubic mapping type. In the case in which the value of vr_mapping_type is 2, this may indicate a cylindrical or panoramic mapping type. In the case in which the value of vr_mapping_type is 3, this may indicate a pyramidal mapping type.

In other words, the vr_mapping_type information may indicate the projection scheme that is used when 360-degree video is mapped on a 2D image (frame). In the above embodiment, in the case in which the value of vr_mapping_type is 0, this may indicate that an equirectangular projection is used. In the case in which the value of vr_mapping_type is 1, this may indicate that a cubic projection is used. In the case in which the value of vr_mapping_type is 2, this may indicate that a cylindrical or panoramic projection is used. In the case in which the value of vr_mapping_type is 3, this may indicate that a pyramidal projection is used.

Here, the relationship between the cylindrical mapping and the panoramic mapping or between the cylindrical projection and the panoramic projection may be determined based on whether the top and bottom of the cylinder exist. That is, in the case in which the top and bottom of the cylinder do not exist, the cylindrical mapping may be treated as being identical to the panoramic mapping.

The num_rect_regions_minus1 information may indicate information about the number of rectangular regions included in the video stream. In other words, the num_rect_regions_minus1 information may indicate information about the number of rectangular regions included in a 2D frame. In an embodiment, the num_rect_regions_minus1 information may indicate the number of rectangular regions included in the video stream -1. Here, the rectangular regions may mean the above-described regions.
vr_rect_region_mapping() includes rect_region_top_left_x_in_luma_samples[i], rect_region_top_left_y_in_luma_samples[i], rect_region_width_in_luma_samples[i], rect_region_height_in_luma_samples[i], min_theta_in_degree[i], max_theta_in_degree[i], min_phi_in_degree[i], and max_phi_in_degree[i].
rect_region_top_left_x_in_luma_samples[i] may indicate an x coordinate of the top left of an i-th rectangular region in pixel units.
rect_region_top_left_y_in_luma_samples[i] may indicate a y coordinate of the top left of an i-th rectangular region in pixel units.
rect_region_width_in_luma_samples[i] may indicate the width of an i-th rectangular region in pixel units.
rect_region_height_in_luma_samples[i] may indicate the height of an i-th rectangular region in pixel units.

That is, rect_region_top_left_x_in_luma_samples[i] and rect_region_top_left_y_in_luma_samples[i] may indicate the position of the top left of an i-th rectangular region in pixel units, and rect_region_width_in_luma_samples[i] and rect_region_height_in_luma_samples[i] may indicate the size of an i-th rectangular region.

Consequently, rect_region_top_left_x_in_luma_samples[i], rect_region_top_left_y_in_luma_samples[i], rect_region_width_in_luma_samples[i], and rect_region_height_in_luma_samples[i] may indicate information about the position and the size of an i-th rectangular region included in the 2D frame.
min_theta_in_degree[i] may indicate the minimum value of theta for a 360-degree video acquisition space area or a user viewport space area corresponding to an i-th rectangular region included in the 2D frame.
max_theta_in_degree[i] may indicate the maximum value of theta for a 360-degree video acquisition space or a user viewport space corresponding to an i-th rectangular region included in the 2D frame.
min_phi_in_degree[i] may indicate the minimum value of phi for a 360-degree video acquisition space area or a user viewport space area corresponding to an i-th rectangular region included in the 2D frame.
max_phi_in_degree[i] may indicate the maximum value of phi for a 360-degree video acquisition space area or a user viewport space area corresponding to an i-th rectangular region included in the 2D frame.

That is, min_theta_in_degree[i], max_theta_in_degree[i], min_phi_in_degree[i], and max_phi_in_degree[i] may indicate information about a range of occupation of a 360-degree video acquisition space area or a user viewport space area corresponding to an i-th rectangular region included in the 2D frame.

Meanwhile, vr_tile_rect_region_mapping() includes top_left_tile_index[i], bottom_right_tile_index[i], min_theta_in_degree[i], max_theta_in_degree[i], min_phi_in_degree[i], and max_phi_in_degree[i].
top_left_tile_index[i] and bottom_right_tile_index[i] included in vr_tile_rect_regeion_mapping() indicate the indices of the top left tile and the bottom right tile corresponding to an i-th rectangular region, respectively. Here, indices may be marked in the raster scan sequence from the top left. That is, in this embodiment, information about the position and the size of an i-th rectangular region included in the 2D frame may be represented through the indices of tiles.
min_theta_in_degree[i], max_theta_in_degree[i], min_phi_in_degree[i], and max_phi_in_degree[i] may indicate information about the range of occupation of a 360-degree video acquisition space area or a user viewport space area corresponding to an i-th rectangular region included in the 2D frame. The detailed description given for vr_rect_region_mapping() may be equally applied thereto.

Meanwhile, detailed region information and coding attribute information of the tile may be delivered through an SPS (Sequence Parameter Set) and a Temporal motion constrained tile sets SEI message so as to be used while being associated with information delivered in the SEI message.
vr_rect_region_mapping() and vr_tile_rect_region_mapping() shown in the figure may be information for the case in which vr_mapping_type is 0 or 3, i.e. the case in which the mapping type is an equirectangular or pyramidal type.

Unlike this, in the case in which vr_mapping_type is 1 or 2, i.e. in the case in which the mapping type is a cubic or cylindrical (or panoramic) type, information other than the information shown in the figure may be further needed.

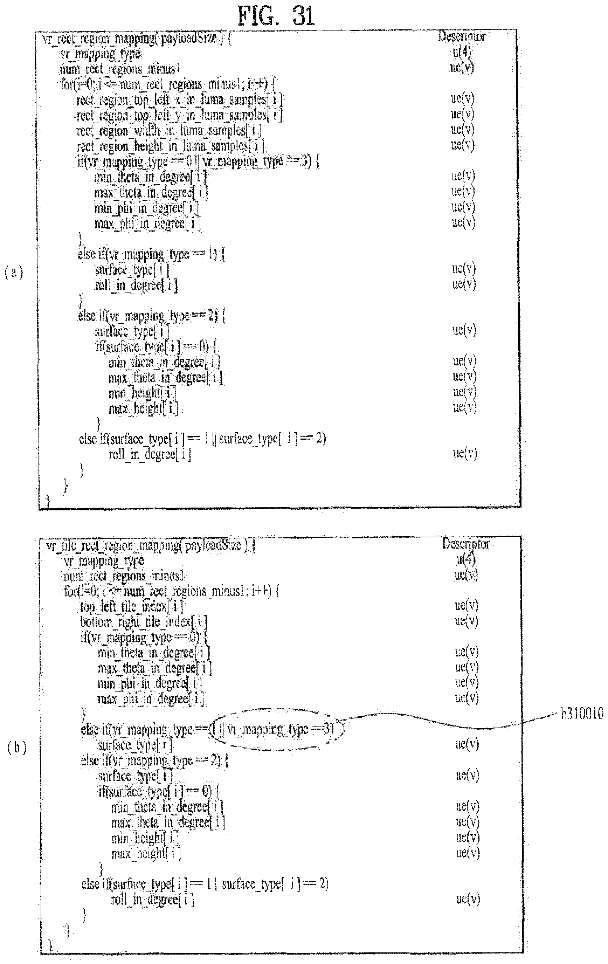

FIG. 31 is a view showing signaling information for 360-degree video data selection, transmission, and reproduction based on a user viewport according to another embodiment of the present invention.

FIG. 31(a) shows another embodiment of vr_rect_region_mapping(), and FIG. 31(b) shows another embodiment of vr_tile_rect_region_mapping(). The embodiment shown is an embodiment in which signaling information is included in an SEI message.

In this embodiment, in the case in which vr_mapping_type is 0 or 3, the information described with reference to FIG. 25 may be used without any change. Unlike this, in the case in which vr_mapping_type is 1 or 2, additional information may be further provided, in addition to the information described with reference to FIG. 25.

More specifically, in the case in which vr_mapping_type is 0, this indicates an equirectangular type. In the case in which vr_mapping_type is 3, this indicates a pyramidal type. In the case in which vr_mapping_type is 1, this indicates a cubic type. In the case in which vr_mapping_type is 2, this indicates a cylindrical type.

In the case in which vr_mapping_type indicates a cubic type or a cylindrical type, signaling information may further include information indicating the extent of rotation of each rectangular region and surface information related to the mapping type indicated by each rectangular region, as additional information.

In the embodiment shown in the figure, information indicating the extent of rotation of each rectangular region is represented using roll_in_degree[i], and surface information related to the mapping type indicated by each rectangular region is represented using surface_type[i].

Specifically, in the case in which vr_mapping_type is 1, which indicates cubic mapping, signaling information may have a surface_type[i] field. surface_type[i] may indicate one surface of a cube depending on the value thereof. For example, in the case in which surface_type[i] is 0, this may indicate that the rectangular region is the front of the cube. In the case in which surface _type[i] is 1, this may indicate that the rectangular region is the right of the cube. In the case in which surface_type[i] is 2, this may indicate that the rectangular region is the back of the cube. In the case in which surface_type[i] is 3, this may indicate that the rectangular region is the left of the cube. In the case in which surface_type[i] is 4, this may indicate that the rectangular region is the top of the cube. In the case in which surface_type[i] is 5, this may indicate that the rectangular region is the bottom of the cube.

In the case in which vr_mapping_type is 2, which indicates cylindrical or panoramic mapping, signaling information may have a surface_type[i] field. surface_type[i] may indicate one surface of a cylindrical user viewport area depending on the value thereof. For example, in the case in which surface_type[i] is 0, this may indicate that the rectangular region is the side of the cylinder. In the case in which surface_type[i] is 1, this may indicate that the rectangular region is the top of the cylinder. In the case in which surface_type[i] is 2, this may indicate that the rectangular region is the bottom of the cylinder.

Here, in the case in which surface_type[i] is 0, i.e. in the case in which the rectangular region is the side of the cylinder, a range of the user viewport area corresponding to the side may be represented through min_theta_in_degree[i] and max_theta_in_degree[i], similarly to the case of equirectangular mapping. Also, in the case in which surface_type[i] is 0, a height range of the side may be represented through min_height[i] and max_height[i]. Meanwhile, in the case in which surface_type corresponding to top and bottom does not exist, cylindrical mapping may be treated as panoramic mapping. In other words, in the case in which surface_type corresponding to top and bottom does not exist, panoramic mapping may be represented.

In an embodiment, even in the case in which vr_mapping_type is 3, i.e. a pyramidal type, surface_type[i] may be provided. In this case, signaling information may have surface_type[i] for a pyramid, and surface_type[i] may indicate one surface of the pyramid depending on the value thereof. For example, in the case in which surface_type[i] is 0, this may indicate that the rectangular region is the bottom of the pyramid. In the case in which surface_type[i] is one of 1 to 4, this may indicate that the rectangular region is each side of the pyramid. Details (h260010) related thereto are shown in vr_tile_rect_region_mapping() in the figure.

Hereinafter, information about the extent of rotation of each rectangular region will be described in more detail.

In the case in which vr_mapping_type indicates cubic mapping, information indicating the extent of rotation of each surface may be included in signaling information as additional information. In the case in which vr_mapping_type indicates cylindrical mapping and surface_type indicates top or bottom, information indicating the extent of rotation of the surface (top or bottom) may be included in signaling information as additional information.

That is, the extent of rotation of all surfaces for the cubic mapping or the extent of rotation of the top surface or the bottom surface for the cylindrical mapping may be represented through roll_in_degree[i].

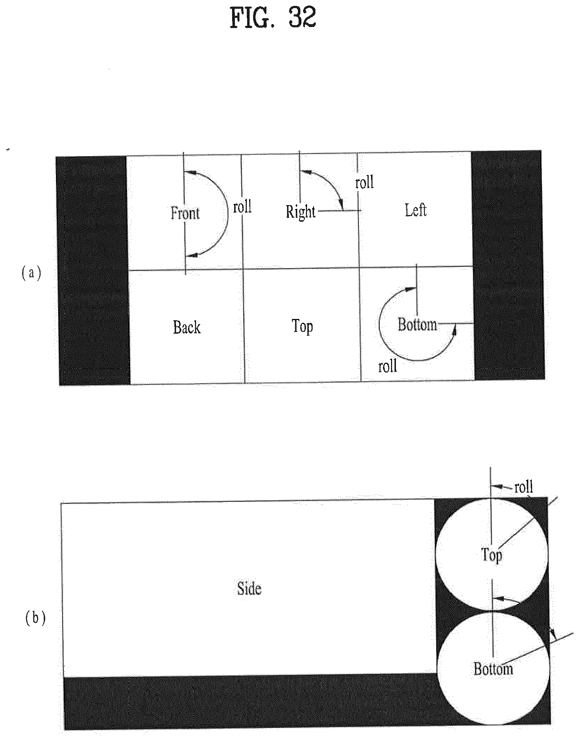

FIG. 32 is a view showing the state in which 360-degree video according to an embodiment of the present invention is mapped in a 2D frame.

FIG. 32(a) shows the state in which 360-degree video is mapped in a 2D frame according to a cubic projection scheme, and FIG. 32(b) shows the state in which 360-degree video is mapped in a 2D frame according to a cylindrical projection scheme.

In the embodiment shown, roll_in_degree[i] may represent the extent to which each surface is rotated in the clockwise direction on the basis of a vertical line interconnecting the middle point of each surface and the upper side of a picture (2D frame) as an angle having a range of 0 to 360 degrees.

For cubic projection, at least two surfaces may be arranged so as to abut each other such that the surfaces are mapped in a 2D frame. At this time, at least one of the at least two surfaces may be rotated by an angle of 90 degrees so as to be mapped in the 2D frame. The extent of rotation of the surface may be represented through roll_in_degree[i]. The border between the at least two surfaces arranged so as to abut each other is maintained at the time of projection, whereby compression efficiency may be improved at the time of encoding.

### File-format-level signaling

The provision of signaling information for data selection and reproduction based on a user viewport at a file format level may be achieved through VrVideoBox (vrvd) and VrSurfaceToRectRegionMappingBox (vsrm), a description of which will follow.

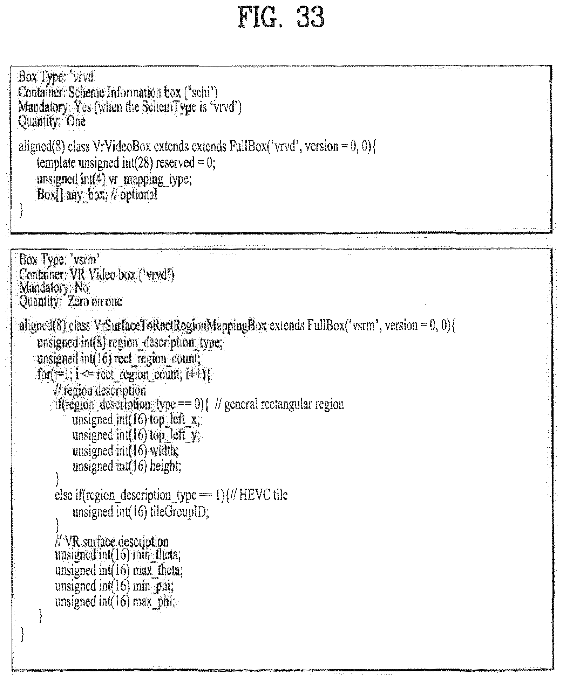

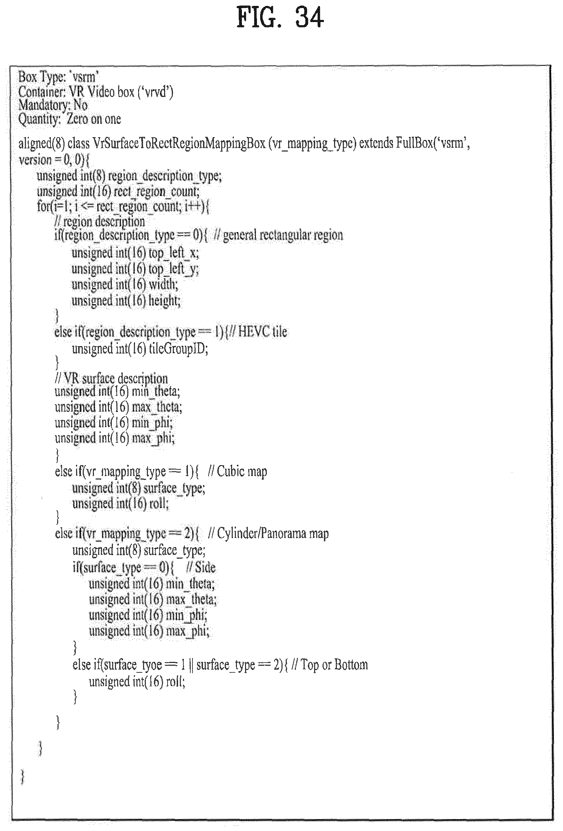

FIGs. 33 and 34 are views showing signaling information for 360-degree video data selection, transmission, and reproduction based on a user viewport according to another embodiment of the present invention.

The upper end of FIG. 33 shows the definition and syntax of vrvd according to an embodiment of the present invention, the lower end of FIG. 33 shows the definition and syntax of vsrm according to an embodiment of the present invention, and FIG. 34 shows the definition and syntax of vsrm according to another embodiment of the present invention. Meanwhile, the embodiment shown is an embodiment in which signaling information is included in a file box.
vrvd, which is a box for transmission of post-decoder requirement information for reproduction or rendering of media, may exist below SchemeInformationBox (schi) in rank. That is, the container of vrvd may be schi.

As shown, vrvd may include a vr_mapping_type field and optional low-ranking boxes. Here, vr_mapping_type may indicate each mapping type of 360-degree video. Details described in an embodiment in which signaling information is included in an SEI message may be applied to vr_mapping_type without any change. In an embodiment, in the case in which the value of vr_mapping_type is 0, this may indicate an equirectangular mapping type. In the case in which the value of vr_mapping_type is 1, this may indicate a cubic mapping type. In the case in which the value of vr_mapping_type is 2, this may indicate a cylindrical or panoramic mapping type. In the case in which the value of vr_mapping_type is 3, this may indicate a pyramidal mapping type.

A box indicating to which viewport range in an acquisition area or to which range of a user viewport in a projection space some regions constituting a VR video frame or the region corresponding to the entire frame corresponds may exist at the position of any_box, which is a low-ranking box of vrvd. In an embodiment, vsrm may exist at the position of any_box, as shown in the figure.

The vsrm box may include the following information.
region_description_type indicates a description type of a rectangular region. For example, in the case in which region_description_type is 0, the rectangular region is represented in pixel units irrespective of a codec. In the case in which region_description_type is 1, this indicates that the rectangular region is a region description type that depends on HEVC. At this time, each rectangular region may be represented in the form of an HEVC tile, and may include tileGroupID information.
rect_region_count information may indicate information about the number of rectangular regions described by a track including the vsrm. In other words, this information may indicate the number of rectangular regions included in a 2D frame. In an embodiment, rect_region_count information may indicate the number of rectangular regions included in the video stream.
top_left_x may indicate an x coordinate of the top left of the rectangular region in pixel units.
top_left_y may indicate a y coordinate of the top left of the rectangular region in pixel units.
width may indicate the width of the rectangular region in pixel units.
height may indicate the height of the rectangular region in pixel units.

Consequently, top_left_x, top_left_y, width, and height may indicate information about the position and the size of the rectangular region included in the 2D frame.
tileGroupID, which is a value for designating an HEVC tile or a tile region corresponding to a rectangular region, may be mapped with groupID or tileGroupID described in NaluMapEntry, TileRegionBox, or TileSetBox. In the case in which the rectangular region is a region description type that depends on HEVC, tileGroupID may be used to designate an HEVC tile or a tile region.
min_theta may indicate the minimum value of theta for a 360-degree video acquisition space area or a user viewport space area corresponding to the rectangular region included in the 2D frame.
max_theta may indicate the maximum value of theta for a 360-degree video acquisition space area or a user viewport space area corresponding to the rectangular region included in the 2D frame.
min_phi may indicate the minimum value of phi for a 360-degree video acquisition space area or a user viewport space area corresponding to the rectangular region included in the 2D frame.
max_phi may indicate the maximum value of phi for a 360-degree video acquisition space area or a user viewport space area corresponding to the rectangular region included in the 2D frame.

Meanwhile, vsrm according to another embodiment of the present invention may describe a 360-degree video acquisition space area or a user viewport area differently depending on vr_mapping_type described by vrvd.

In the case in which vr_mapping_type is 0 or 3, which indicates equirectangular or pyramidal mapping, an acquisition space area or a user viewport area may be indicated using min_theta, max_theta, min_phi, and max_phi, in the same manner as in the above description.

In the case in which vr_mapping_type is 1, which indicates cubic mapping, a surface_type field may be included. surface_type may indicate one surface of a cubic user viewport area depending on the value thereof. For example, in the case in which surface_type is 0, this may indicate that the rectangular region is the front of the cube. In the case in which surface_type is 1, this may indicate that the rectangular region is the right of the cube. In the case in which surface_type is 2, this may indicate that the rectangular region is the back of the cube. In the case in which surface_type is 3, this may indicate that the rectangular region is the left of the cube. In the case in which surface_type is 4, this may indicate that the rectangular region is the top of the cube. In the case in which surface_type is 5, this may indicate that the rectangular region is the bottom of the cube.

Also, in the case in which vr_mapping_type is 1, which indicates cubic mapping, a roll field may be further included. The roll field indicates information about the rotation of a surface. The detailed meaning of this field is substantially identical to that of roll_in_degree[] described above.

In the case in which vr_mapping_type is 2, which indicates cylindrical or panoramic mapping, a surface_type field may be included. surface_type may indicate one surface of a cylindrical user viewport area depending on the value thereof. For example, in the case in which surface_type is 0, this may indicate that the rectangular region is the side of the cylinder. In the case in which surface_type is 1, this may indicate that the rectangular region is the top of the cylinder. In the case in which surface_type is 2, this may indicate that the rectangular region is the bottom of the cylinder.

Here, in the case in which surface_type is 0, i.e. in the case in which the rectangular region is the side of the cylinder, a range of the user viewport area corresponding to the side may be represented through min_theta, max_theta, min_phi, and max_phi, similarly to the case of equirectangular mapping. Meanwhile, in the case in which surface_type corresponding to top and bottom does not exist, cylindrical mapping may be treated as panoramic mapping. In other words, in the case in which surface_type corresponding to top and bottom does not exist, panoramic mapping may be represented.

Also, in the case in which vr_mapping_type indicates cylindrical mapping and surface_type indicates top or bottom, a roll field for the surface (top or bottom) may be further included.

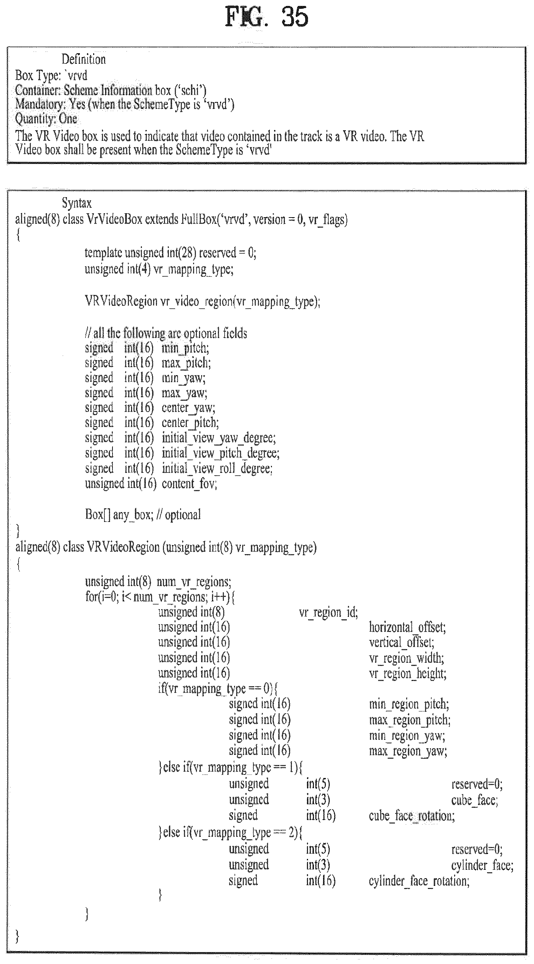

FIG. 35 is a view showing signaling information for 360-degree video data selection, transmission, and reproduction based on a user viewport according to another embodiment of the present invention.

In another aspect, FIG. 35 shows the definition and syntax of vrvd according to another embodiment of the present invention, and the embodiment shown is an embodiment in which signaling information is included in a file box.
vrvd, which is a box for transmission of post-decoder requirement information for reproduction or rendering of media, may exist below SchemeInformationBox (schi) in rank. That is, the container of vrvd may be schi.

As shown, vrvd may include a vr_mapping_type field and optional low-ranking boxes. Here, vr_mapping_type may indicate each mapping type of 360-degree video. In an embodiment, in the case in which the value of vr_mapping_type is 0, this may indicate an equirectangular mapping type. In the case in which the value of vr_mapping_type is 1, this may indicate a cubic mapping type. In the case in which the value of vr_mapping_type is 2, this may indicate a cylindrical or panoramic mapping type.
vr_flags is defined as follows.

0x000001 indicates whether an angle range of pitch is 180 degrees or less.

0x000002 indicates whether a min_pitch field exists.

0x000004 indicates whether a max_pitch field exists.

0x000010 indicates whether an angle range of yaw is 360 degrees or less.

0x000020 indicates whether a min_yaw field exists.

0x000040 indicates whether a max_yaw field exists.

0x000100 indicates whether a center pixel of a 2D image on which 360-degree video data are projected coincides with the middle point on a 3D space (a spherical surface).

0x000200 indicates whether a center_yaw field exists.

0x000400 indicates whether a center_pitch field exists.

0x001000 indicates whether an initial_view_yaw field exists.

0x002000 indicates whether an initial_view_pitch field exists.

0x004000 indicates whether an initial_view_roll field exists.

0x010000 indicates whether a content_fov field exists.

0x020000, which is motion-yaw-only, indicates whether only yaw can be changed.

Whether min_pitch, max_pitch, min_yaw, max_yaw, center_yaw, center_pitch, initial_view_yaw_degree, initial_view_pitch_degree, initial_view_roll_degree, and content_fov, which are optional fields, are included in vrvd may be determined based on vr_flags.

The min_pitch field, the max_pitch field, the min_yaw field, and the max_yaw field may indicate the area occupied in 3D space as the minimum value of pitch, the maximum value of pitch, the minimum value of yaw, and the maximum value of yaw, respectively. These fields may indicate the minimum value of the amount of rotation about the pitch axis, the maximum value of the amount of rotation about the pitch axis, the minimum value of the amount of rotation about the yaw axis, and the maximum value of the amount of rotation about the yaw axis, respectively.

The center_yaw field and the center_pitch field may provide information related to the center pixel of a 2D image on which 360-degree video data are projected and the middle point on a 3D space. In an embodiment, the center_yaw field and the center_pitch field may provide the extent of rotation of the middle point on the 3D space from the origin of a capture space coordinate system or the origin of a world coordinate system. In this case, these fields may indicate the extent of rotation using yaw and pitch values, respectively.

The initial_view_yaw_degree field, the initial_view_pitch_degree field, and the initial_view_roll_degree field may include information about a viewport at which a user views 360-degree video first when the 360-degree video is reproduced (initial viewport). More specifically, the initial_view_yaw_degree field, the initial_view_pitch_degree field, and the initial_view_roll_degree field may indicate the initial viewport when the 360-degree video is reproduced. That is, the right center point of a viewport that is viewed first at the time of reproduction may be indicated by these fields. The fields may indicate the position of the right center point as the rotational direction (symbol) and the extent of rotation (angle) about the yaw, pitch, and roll axes. At this time, the viewport that is viewed when the video is reproduced first according to the FOV (field of view) may be determined. The horizontal length and the vertical length (width and height) of an initial viewport based on the indicated initial viewport through the FOV may be determined. That is, the 360-degree video reception apparatus may provide the user with a predetermined area of the 360-degree video as an initial viewport using these three fields and the FOV information.

The content_fov field may indicate information about the FOV (field of view) of the 360-degree video intended at the time of production. The FOV may be a range of vision within which 360-degree video is simultaneously displayed when the video is reproduced.

VrVideoRegion may describe information about a region of a 2D frame corresponding to 360-degree video. VrVideoRegion may be included in vrvd in the form of a box (vrvr). That is, the container of vrvr may be vrvd.

VrVideoRegion may include num_vr_regions, vr_region_id, horizontal_offset, vertical_offset, vr_region_width, vr_region_height, max_region_pitch, min_region_yaw, max_region_yaw, cube_face, cube_face_rotation, cylinder_face, and cylinder_face_rotation fields.
num_vr_regions may indicate the number of regions included in a 2D frame.
vr_region_id may indicate information about the identification of each region.
horizontal_offset and vertical_offset may indicate the horizontal and vertical offsets of the region on the 2D frame. In an embodiment, horizontal_offset and vertical_offset may indicate x and y coordinates of the top left pixel of the region.
vr_region_width and vr_region_height may indicate the width and height, i.e. the horizontal length and the vertical length, of the region in pixel units.
min_region_pitch and max_region_pitch may respectively indicate the minimum value and the maximum value of pitch for a 360-degree video acquisition space area or a user viewport space area corresponding to the region. Here, pitch may have the same meaning as phi.
min_region_yaw and max_region_yaw may respectively indicate the minimum value and the maximum value of yaw for a 360-degree video acquisition space area or a user viewport space area corresponding to the region. Here, yaw may have the same meaning as theta.
cube_face may indicate to which face of the cube the region corresponds in the case in which the projection scheme of 360-degree video is a cube. Here, face may have the same meaning as the surface described above. In an embodiment, in the case in which cube_face is 0, this may indicate that the region is the front of the cube. In the case in which cube_face is 1, this may indicate that the region is the right of the cube. In the case in which cube_face is 2, this may indicate that the region is the back of the cube. In the case in which cube_face is 3, this may indicate that the region is the left of the cube. In the case in which cube_face is 4, this may indicate that the region is the top of the cube. In the case in which cube_face is 5, this may indicate that the region is the bottom of the cube.
cube_face_rotation indicates information about the rotation of each cube face. Here, cube_face_rotation may be used to have the same meaning as roll_in_degree described above.
cylinder_face may indicate to which face of the cylinder the region corresponds in the case in which the projection scheme of 360-degree video is a cylinder. Here, "face" may have the same meaning as "surface" described above. In an embodiment, in the case in which cylinder_face is 0, this may indicate that the region is the side of the cylinder. In the case in which cylinder_face is 1, this may indicate that the region is the top of the cylinder. In the case in which cylinder_face is 2, this may indicate that the region is the bottom of the cylinder.
cylinder_face_rotation indicates information about the rotation of each cylinder_face. Here, cylinder_face_rotation may be used to have the same meaning as roll_in_degree described above. In addition, cylinder_face_rotation may exist only in the case in which cylinder_face corresponds to the top or bottom of the cylinder.

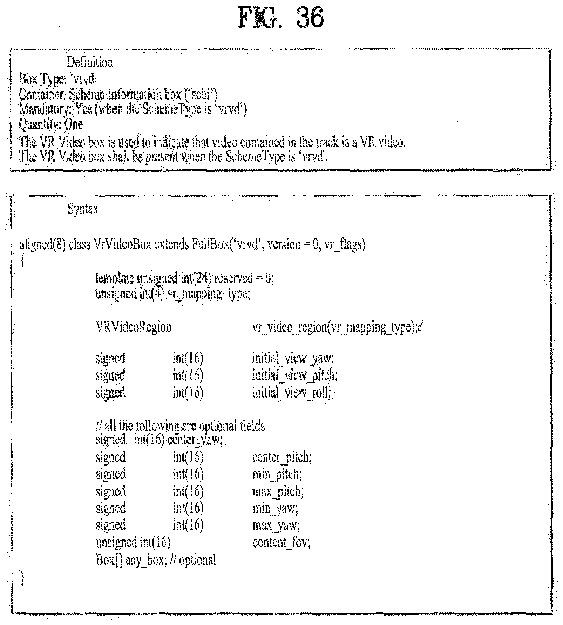

FIG. 36 is a view showing signaling information for 360-degree video data selection, transmission, and reproduction based on a user viewport according to another embodiment of the present invention.

In another aspect, FIG. 36 shows the definition and syntax of vrvd according to another embodiment of the present invention, and the embodiment shown is an embodiment in which signaling information is included in a file box.
vrvd, which is a box for transmission of post-decoder requirement information for reproduction or rendering of media, may exist below SchemeInformationBox (schi) in rank. That is, the container of vrvd may be schi.
vrvd may include a VR Video Region Box, and the VR Video Region Box may provide a detailed description of how a coded picture region is mapped on a three-dimensional space. The three-dimensional space may be called spherical video. In addition, the three-dimensional space may correspond to the 360-degree video acquisition space and/or the user viewport space, and the three-dimensional space and the 2D frame may be mapped through the medium of a projection scheme, vrvr will be described in detail with reference to the following figure.

As shown, vrvd may include a vr_mapping_type field and optional low-ranking boxes. Here, vr_mapping_type may indicate each mapping type of 360-degree video. In an embodiment, in the case in which the value of vr_mapping_type is 0, this may indicate an equirectangular mapping type. In the case in which the value of vr_mapping_type is 1, this may indicate a cubic mapping type. In the case in which the value of vr_mapping_type is 2, this may indicate a cylindrical or panoramic mapping type.

In this embodiment, initial_view_yaw, initial_view_pitch, and initial_view_roll may not be optional fields. initial_view_yaw, initial_view_pitch, and initial_view_roll may indicate angles of yaw, pitch, and roll, respectively. At this time, the angle indicated by the field may indicate the center of an initial viewport at which a coded picture is rendered.

In this embodiment, center_pitch, min_pitch, max_pitch, min_yaw, max_yaw, and content_fov may be optional fields.

Meanwhile, the number of optional fields may be determined based on the number of bits set in low-ranking bytes of vr_flags. Also, in the case in which the following fields do not exist, the following default values may be applied.

In the case in which min_pitch does not exist, the minimum pitch angle of VR video has a default value of -90.

In the case in which max_pitch does not exist, the maximum pitch angle of VR video has a default value of +90.

In the case in which min_yaw does not exist, the minimum yaw angle of VR video has a default value of -180.

In the case in which max_yaw does not exist, the maximum yaw angle of VR video has a default value of +180.

Whether center-yaw-present, center-pitch-present, min-pitch-present, max-pitch-present, min-yaw-present, max-yaw-present, content-fov-present, and motion-yaw-only, which are optional fields, are included in vrvd may be determined based on vr_flags.
vr_flags is defined as follows.

0x000001, which is center-yaw-present, indicates whether a center_yaw field exists. Specifically, center_yaw provides the following information.

In the case in which vr_mapping_type is equirectangular, the field indicates the yaw angle to the center pixel of the coded picture projected on the spherical surface.

In the case in which vr_mapping_type is cubic, the field indicates the yaw angle to the center pixel of the region corresponding to the front surface of the cube, as the region projected on the spherical surface.

In the case in which vr_mapping_type is cylindrical, the field indicates the yaw angle to the center pixel of the region corresponding to the side of the cylinder, as the region projected on the spherical surface.

0x000002, which is center-pitch-present, indicates whether a center_pitch field exists. Specifically, center_pitch provides the following information.

In the case in which vr_mapping_type is equirectangular, the field indicates the pitch angle to the center pixel of the coded picture projected on the spherical surface.

In the case in which vr_mapping_type is cubic, the field indicates the pitch angle to the center pixel of the region corresponding to the front surface of the cube, as the region projected on the spherical surface.

In the case in which vr_mapping_type is cylindrical, the field indicates the pitch angle to the center pixel of the region corresponding to the side of the cylinder, as the region projected on the spherical surface.

0x000010, which is min-pitch-present, indicates whether a min_pitch field exists. Specifically, min_pitch indicates the minimum pitch angle to points on the spherical surface on which the coded picture is projected.

0x000020, which is max-pitch-present, indicates whether a max_pitch field exists. Specifically, max_pitch indicates the maximum pitch angle to points on the spherical surface on which the coded picture is projected.

0x000040, which is min-yaw-present, indicates whether a min_yaw field exists. Specifically, min_yaw indicates the minimum yaw angle to points on the spherical surface on which the coded picture is projected.

0x000080, which is max-yaw-present, indicates whether a max_yaw field exists. Specifically, max_yaw indicates the maximum yaw angle to points on the spherical surface on which the coded picture is projected.

0x010000, which is content-fov-present, indicates whether a content_fov field exists. Specifically, content-fov indicates an appropriate view field for content intended by a content author/provider.

0x020000, which is motion-yaw-only, indicates whether the motion of VR video is restricted only by yaw.

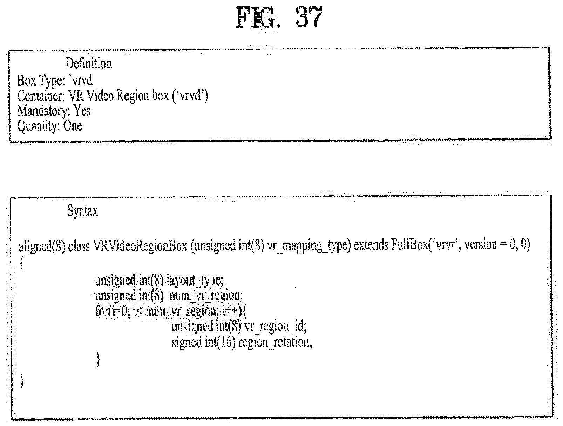

FIG. 37 is a view showing a VR video region box according to another embodiment of the present invention.

FIG. 37 shows the definition and syntax of a VR video region (vrvr) box.

The VR video region box may provide a detailed description of how a coded picture region in a track is mapped on a spherical space. Such information may be used at the time of projection from a 2D frame to spherical video.
vrvr according to another embodiment of the present invention may include layout_type, num_vr_region, vr_region_id, and face_rotation fields. Selectively, vrvr may further include horizontal_offset, vertical_offset, vr_region_width, vr_region_height, min_region_pitch, max_region_pitch, min_region_yaw, max_region_yaw, cube_face_id, cube_face_rotation, cylinder_face_id, and cylinder_face_rotation fields described in the vrvr described above.
layout_type may indicate the layout of a 2D frame to which VR video is projected.

First, in the case in which the projection type is cubic, layout_type may indicate a layout in which VR video is mapped in the 2D frame by 3*2 or a layout in which VR video is mapped in the 2D frame by 4*3. More specifically, in the case of a 3*2 layout, six surfaces corresponding to six regions may be mapped in the 2D frame configured by 3*2 one to one (1:1). In the case of a 4*3 layout, six surfaces corresponding to six regions may occupy half of the 2D frame configured by 4*3. That is, six surfaces corresponding to six regions may be mapped on half of the 2D frame that is partitioned into 12 parts (4*3), and the other half may be processed as empty space.

Next, in the case in which the projection type is cylindrical, layout_type may indicate a layout related to the position of the side of a cylinder. For example, the side of the cylinder may be mapped on the top, the bottom, or the middle of the 2D frame depending on layout_type. In another aspect, the side of the cylinder may be mapped on the left, the right, or the middle of the 2D frame depending on layout_type.
num_vr_regions may indicate information about the number of regions included in the 2D frame. Since the regions included in the 2D frame correspond one to one (1:1) to faces (or surfaces) depending on the projection type, num_vr_regions may indicate information about the number of faces (or surfaces). Consequently, num_vr_regions may be represented as num_faces.
vr_region_id may indicate information about the identification of each region. Since respective regions correspond one to one (1:1) to surfaces depending on the projection type, vr_region_id may indicate information about the identification of each face (or surface). Consequently, vr_region_id may be represented as face_id.
region rotation may indicate the rotational angle of a region mapped on the 2D frame. The region may be rotated any angle, such as +90, +180, -90, or -180 degrees. In the case in which the rotational angle is 0, this may indicate that the region has not been rotated. Since the regions correspond to faces (or surfaces) depending on projection type one to one (1:1), region_rotation may indicate the rotational angle of each face (or surface). Consequently, region_rotation may be represented as face_rotation.

In an embodiment, the projection type may be cubic. In the case in which the projection type is cubic, vr_region id may indicate regions matched on the surfaces of a cube. In an embodiment, the surfaces of the cube corresponding to the value of vr_region id may be as follows.
0x00 : reserved
0x01 : cube_front
0x02 : cube_top
0x03 : cube_bottom
0x04 : cube_left
0x05 : cube_right
0x06 : cube_back
0x07-0x08 : reserved

In another embodiment, the projection type may be cylindrical. In the case in which the projection type is cylindrical, vr_region id may indicate regions matched on the surfaces of a cylinder. In an embodiment, the surfaces of the cylinder corresponding to the value of vr_region id may be as follows.
0x00 : reserved
0x01 : cylinder_top
0x02 : cylinder_side
0x03 : cylinder_bottom
0x04-0x08 : reserved

In the case in which layout_type and vr_region_id, among information provided by the vrvr box, are used, the position of the region mapped in the 2D frame may be specified. That is, the position of the face (or the surface) depending on the projection scheme may be specified in the 2D frame. In an embodiment, the position and rotational angle of two adjacent surfaces may be set so as to coincide with the border therebetween at the time of projection. In this embodiment, compression efficiency may be improved at the time of encoding.

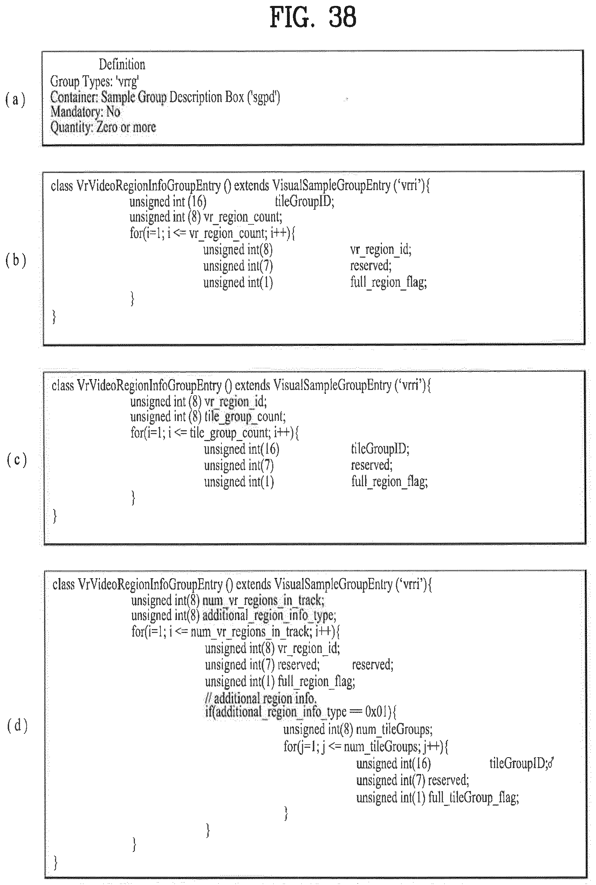

FIG. 38 is a view showing signaling information for 360-degree video data selection, transmission, and reproduction based on a user viewport according to another embodiment of the present invention.

FIG. 38(a) shows the definition of a VR video region group box (vrrg) according to an embodiment of the present invention, FIG. 38(b) shows VR video region info group entry according to an embodiment of the present invention, FIG. 38(c) shows vr video region info group entry according to another embodiment of the present invention, and FIG. 38(d) shows vr video region info group entry according to a further embodiment of the present invention. The embodiment shown is an embodiment in which signaling information is included in a file box.

Signaling information described with reference to this figure may be information used to map a region of a 2D frame and an HEVC tile. As previously described, a region of the 2D frame may be used to have the same meaning as a tile. Since the region and the tile are basically distinguished from each other, however, mapping information about the region and the tile may be needed. vrrg, a description of which will follow, is a file box that provides mapping information about the region and the tile, and may include VR video region info group entry.
vrrg is included in a sample group description box (sgpd).
vr video region info group entry may include tileGroupID, vr_region_count, vr_region_id, and full_region_flags.
tileGroupID may indicate a tile region group ID or a tile set group ID. Here, the tile region group ID or tile set group ID may be defined in TileRegionGroupEntry or TileSetGroupEntry. In an embodiment, tileGroupID may indicate a single tile ID.
vr_region_count may provide information about the number of vr_region related to a tile region or a tile set indicated by tilegroupID. In an embodiment, vr_region_count may provide information about the number of vr_region related to a single tile indicated by tilegroupID.
vr_region_id indicates information about the identification of a 2D frame region corresponding to 360-degree video. vr_region_id may indicate vr_region_id defined in the vrvd described above. As previously described, vr_region_id may be replaced by face_id indicating faces (or surfaces) depending on the projection scheme.
full_region_flag may indicate whether the tile region or the tile set indicated by tilegroupID completely includes the region indicated by vr_region_id. In an embodiment, in the case in which full_region_flag is 1, this indicates that the tile region or the tile set indicated by tilegroupID completely includes the region indicated by vr_region_id. In an embodiment, full_region_flag may indicate whether a single tile indicated by tilegroupID completely includes the region indicated by vr_region_id.

FIG. 38(b) shows an embodiment in which a region related to a tile region or a tile set is described based on tileGroupID, and FIG. 38(c) shows an embodiment in which a tile region or a tile set related to a region is described based on vr_region_id.

The embodiment shown in FIG. 38(d) further provides additional information.
num_vr_regions_in_track provides information about the number of VR video regions stored in the track.
additional_region_info_type provides information about the type of additional region information. In an embodiment, type information corresponding to the value of additional_region_info_type may be as follows.
0x00 : non
0x01 : HEVC tile association information
0x02-0x08 : reserved

num_vr_regions_in_track may provide information about the number of VR video regions stored in the track.
vr_region_id indicates information about the identification of a 2D frame region corresponding to 360-degree video. vr_region_id may indicate vr_region_id defined in the vrvd described above.

In the case in which full_region_flag is set to 1, this indicates that the track includes a complete VR video region indicated by vr_region_id.
num_tileGroups may provide information about the number of tile regions or tile sets indicated by the tileGroupID field related to the VR video region indicated by vr_region_id.

In the case in which full_tileGroup_flag is set to 1, this indicates that the VR tile region indicated by vr_region_id includes a complete tile region or tile set indicated by tileGroupID.

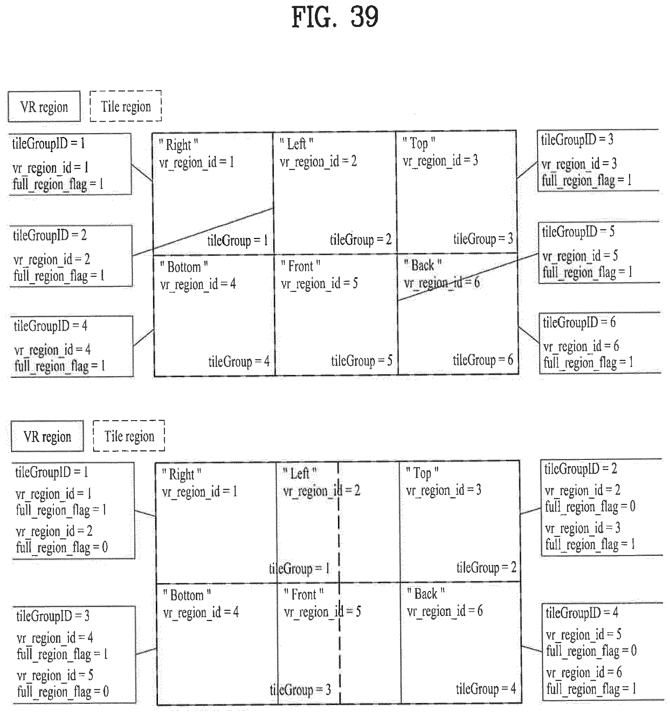

FIG. 39 is a view showing the relationship between regions and tile regions using vr video region info group entry.

FIG. 39 shows two embodiments. The upper end of FIG. 39 shows an embodiment in which regions and tile regions coincide with each other, and the lower end of FIG. 39 shows an embodiment in which regions and tile regions are different from each other.

In the embodiment shown in the upper end of the figure, six regions are mapped on a 2D frame through cubic type projection, and the regions correspond to the right, left, top, bottom, front, and back of a cubic projection space. Six tile regions are provided, and coincide with the regions at the border thereof.

As shown, six VrVideoRegionInfoGroupEntry may exist in order to describe the relationship between the tile regions and the regions. tileGroupId and vr_region_id may be mapped with each other one to one in order to indicate that the region belongs to the tile region. Here, each tile region includes the entire area of the VR region, and therefore full_region_flag of each VrVideoRegionInfoGroupEntry is set to 1.

In comparison between the embodiment shown in the lower end of the figure and the embodiment shown in the upper end of the figure, region configurations are identical to each other, but tile region configuration are different from each other. As shown, a 2D frame includes four equally divided tile regions, i.e. left, right, top, and bottom tile regions.

Four VrVideoRegionInfoGroupEntry may exist in order to describe the relationship between the tile regions and the regions. Tile regions corresponding to tileGroupId=1, 2, 3, and 4 include the entire areas of regions corresponding to vr_region_id=1, 3, 4, and 6. Consequently, full_region_flag corresponding to tileGroupId=1, 2, 3, and 4 is set to 1, and the mapping relationship between vr_region_id and tileGroupId is described in each VrVideoRegionInfoGroupEntry. A region corresponding to vr_region_id=2 includes some regions of the tile regions corresponding to tileGroupId=1 and 2, and a region corresponding to vr_region_id=5 includes some regions of the tile regions corresponding to tileGroupId=3 and 4. Consequently, full_region_flag corresponding to vr_region_id=2 and 5 is set to 0, and the mapping relationship between vr_region_id and tileGroupId is described in each VrVideoRegionInfoGroupEntry.

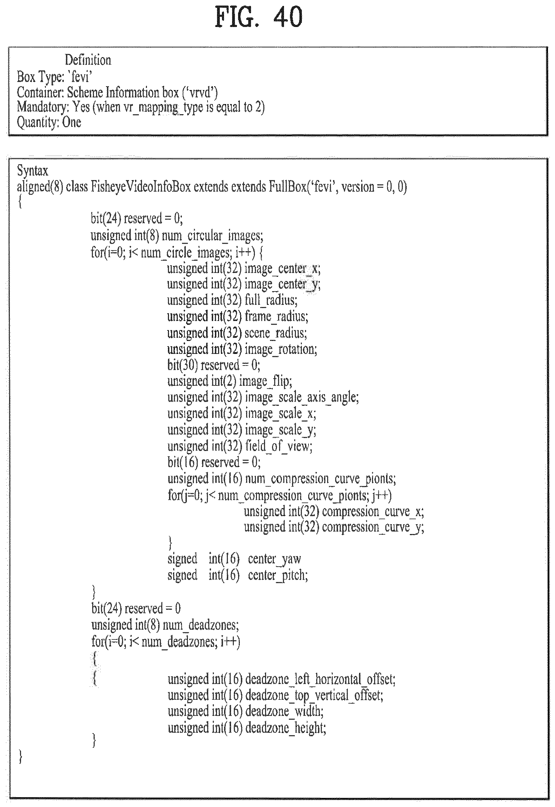

FIG. 40 is a view showing signaling information for 360-degree video data selection, transmission, and reproduction based on a user viewport according to a further embodiment of the present invention.

FIG. 40 shows the definition and syntax of FisheyeVideoInfoBox (fevi) according to an embodiment of the present invention, and the embodiment shown is an embodiment in which signaling information is included in a file box.
fevi may exist below the vrvd box in rank. That is, the container of fevi may be vrvd. Meanwhile, in the case in which vr_mapping_type of vrvd is 2, i.e. in the case in which the mapping type is cylindrical, fevi may be set so as to essentially exist.
fevi may be used to indicate the format of fisheye video included in a track. Such format information may be used to render the fisheye video. Here, the fisheye video may be video generated from images acquired by sensors of a spherical camera or a fisheye camera. In an embodiment, the spherical camera may have two sensors, one of which may have a range of theta or phi between about -90 and 90 degrees. That is, a major portion in all directions may be covered using two sensors.
fevi may include num_circular_images, image_center_x, image_center_y, full_radius, frame_radius, scene_radius, image_rotation, image_flip, image_scale_axis_angle, image_scale_x, image_scale_y, field_of_view, num_compression_curve_points, compression_curve_x, compression_curve_y, center_yaw, center_pitch, num_deadzones, deadzone_left_horizontal_offset, deadzone_top_vertical_offset, deadzone_width, and deadzone_height.
num_circular_images may indicate information about the number of fisheye images. In an embodiment, fisheye images may be acquired using two sensors of the spherical camera. In this case, the number of fisheye images may be 2, and num_circular_images may be 1.
image_center_x may indicate an x coordinate of the center of the fisheye image in pixel units.
image_center_y may indicate a y coordinate of the center of the fisheye image in pixel units.

Meanwhile, center_pitch may indicate the pitch value on the spherical surface matched with image_center_x and image_center_y pixels.
center_yaw may indicate the pitch value on the spherical surface matched with image_center_x and image_center_y pixels.

In the case in which the values of center_pitch and center_yaw are used, it is possible to analogize the position of an image acquired through each fisheye sensor on the spherical surface. Also, in the case in which the values of center_pitch and center_yaw are used, it is possible to analogize the position of the fisheye camera on the spherical surface. In the case in which the receiver performs re-projection, the position of the image on the spherical surface may be analogized in order to appropriately perform re-projection.

### Signaling in unicast environment

The selection and reproduction of transmission data according to a user viewport in a unicast environment may be achieved by adding VR video signaling information to information for delivery attribute representation. For example, additional information may be defined in MPD in order to transmit VR video using DASH.

EssentialProperty or SupplementalProperty may be used in order to identify the mapping type of VR video transmitted through DASH. EssentialProperty or SupplementalProperty may exist below AdpatationSet, Representation, and Sub-Representation in ranking. An inherent scheme identifier, such as @schemeIdUri = "urn:mpeg:dash:vr-map:2016", may be given in order to indicate that EssentialProperty or SupplementalProperty is used to describe VR mapping type. An inherent string or integer value for identifying the mapping type of current VR video may be assigned to @value. For example, "equirectangular", "cubic", "pyramidal", "cylindrical", or "panoramic" may be assigned to @value to indicate the mapping type. @id, which is an identifier of EssentialProperty or SupplementalProperty, may indicate that EssentialProperty or SupplementalProperty having the same value of @id are closely associated with each other. For example, since two AdpatationSet corresponding to some regions of the same VR video have the same VR mapping type, the same @id may be given to describe the mapping type without duplication, instead of describing the mapping type in a duplicate manner using @value.

In addition, EssentialProperty or SupplementalProperty may be used in order to identify an area range or a user viewport support range in an acquisition space of VR video transmitted through DASH. EssentialProperty or SupplementalProperty may exist below AdpatationSet, Representation, and Sub-Representation in ranking. An inherent scheme identifier, such as @schemeIdUri = "urn:mpeg:dash:vr-srd:2016", may be given in order to indicate that EssentialProperty or SupplementalProperty is used to describe VR mapping type. @value may have syntax in the form that will be described below with reference to the drawings, and respective parameters may be delimited using comma (,).

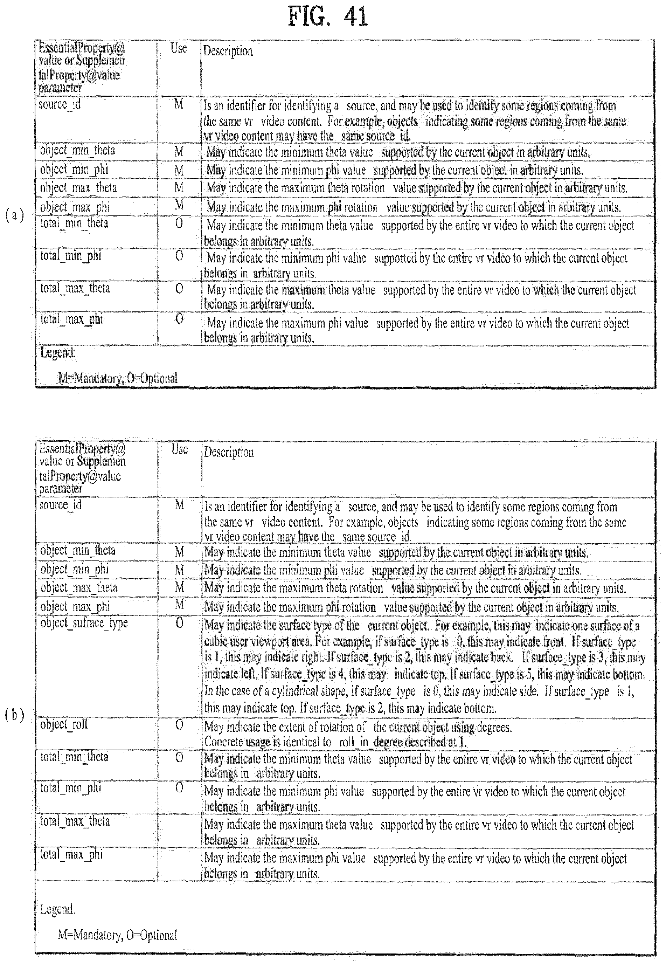

FIG. 41 is a view showing the syntax of @value for indicating an area range or a user viewport support range in an acquisition space of VR video transmitted through DASH.

FIG. 41(a) shows the syntax of @value according to an embodiment of the present invention, and FIG. 41(b) shows the syntax of @value according to another embodiment of the present invention. The syntax of @value according to the embodiment of the present invention shown in FIG. 41(b) is different from the syntax of @value according to the embodiment of the present invention shown in FIG. 41(a) in that information about surface type and information about roll are further included.

An embodiment in which MPD is configured using EssentialProperty or SupplementalProperty for the VR mapping and VR region description, previously described, may be as follows.

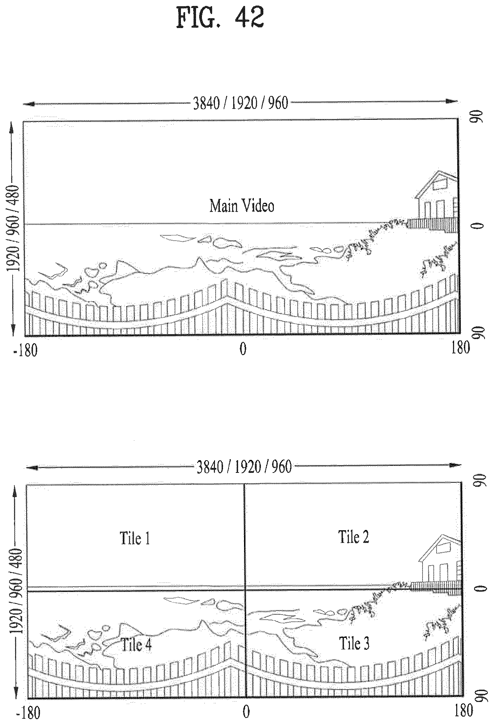

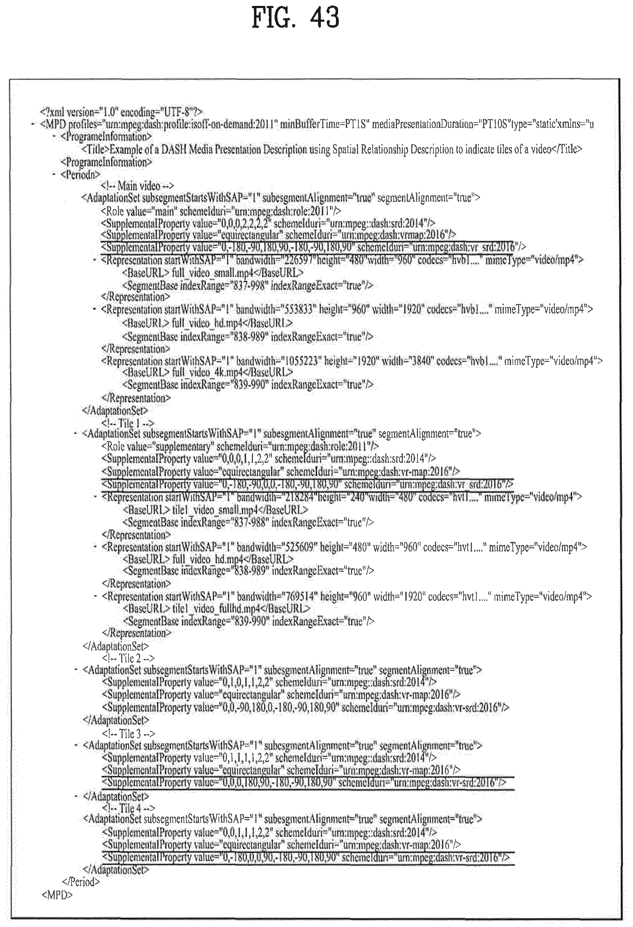

FIG. 42 is a view showing a full picture frame and a full picture frame partitioned into regions, and FIG. 43 is a view showing MPD including signaling information related to FIG. 42.

The embodiment shown is an embodiment in which main video is partitioned into four regions, namely a top left region, a top right region, a bottom right region, and a bottom left region. In this embodiment, the regions are used to have the same meaning as tiles.

The main video supports a viewport range or a user viewport range in an acquisition space ranging from -180 to 180 degrees in the horizontal direction and from -90 to 90 degrees in the vertical direction.

The top left region (Tile 1) supports a viewport range or a user viewport range in an acquisition space ranging from -180 to 0 degrees in the horizontal direction, and supports a viewport range or a user viewport range in an acquisition space ranging from -90 to 0 degrees in the vertical direction. The top right region (Tile 2) supports a viewport range or a user viewport range in an acquisition space ranging from 0 to 180 degrees in the horizontal direction, and supports a viewport range or a user viewport range in an acquisition space ranging from -90 to 0 degrees in the vertical direction. The bottom right region (Tile 3) supports a viewport range or a user viewport range in an acquisition space ranging from 0 to 180 degrees in the horizontal direction, and supports a viewport range or a user viewport range in an acquisition space ranging from 0 to 90 degrees in the vertical direction. The bottom left region (Tile 4) supports a viewport range or a user viewport range in an acquisition space ranging from -180 to 0 degrees in the horizontal direction, and supports a viewport range or a user viewport range in an acquisition space ranging from 0 to 90 degrees in the vertical direction. The main video provides content having three quality levels corresponding to resolutions of 960*480, 1920*960, and 3840*1920, and each of the regions (Tile 1 to Tile 4) supports quality corresponding to horizontal and vertical halves thereof. In this embodiment, the main video frame is divided into four HEVC tiles. However, a rectangular region corresponding to each tile and video corresponding to the main video may be independently encoded. At this time, encoding may be performed using an existing codec, such as AVC/H.264.

The following embodiment is configured such that main video is divided into four rectangular regions in an overlapping state.

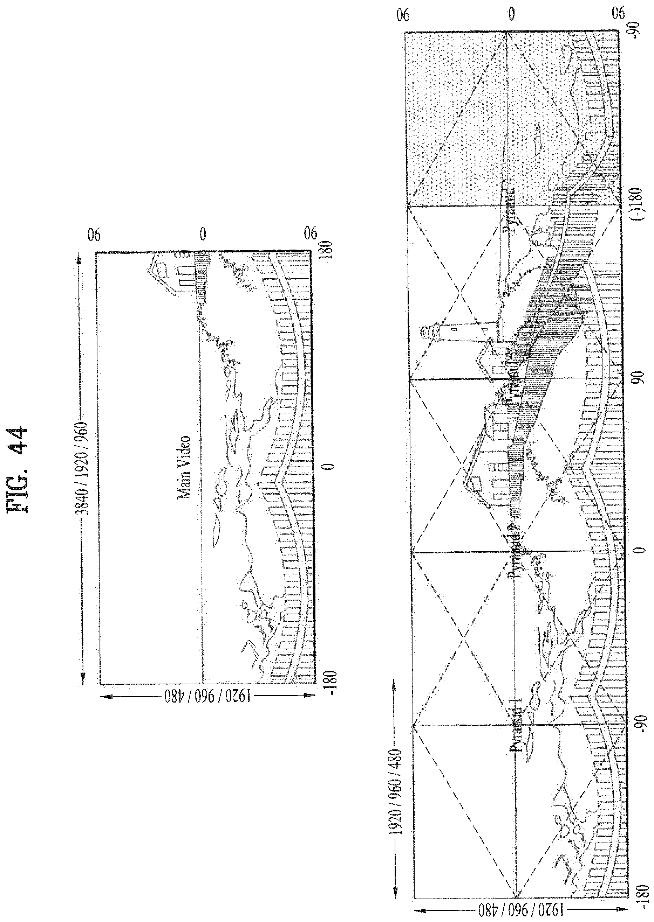

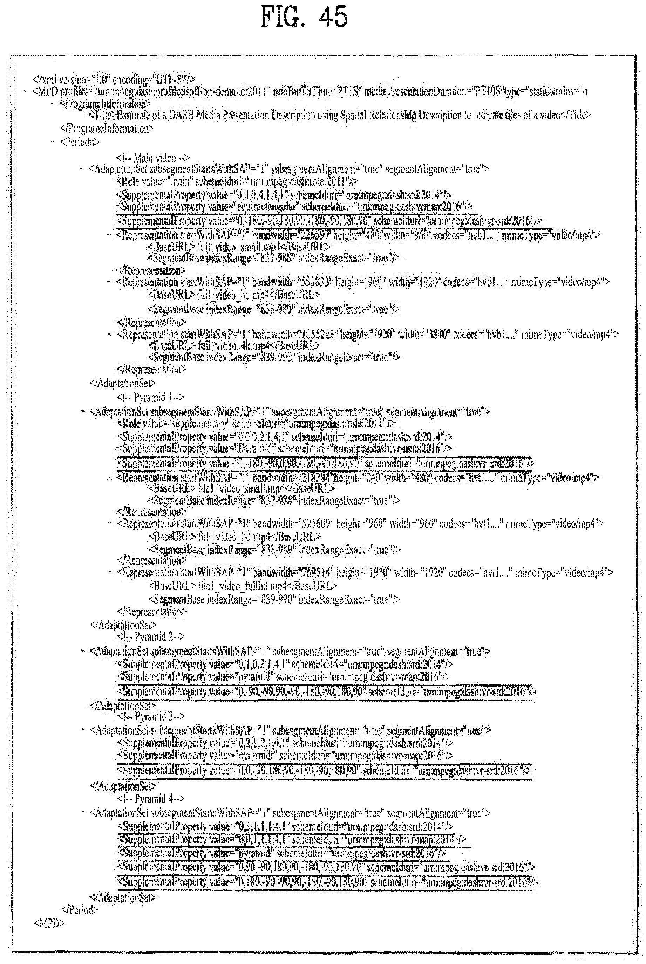

FIG. 44 is a view showing a full picture frame and a full picture frame partitioned into regions, and FIG. 45 is a view showing MPD including signaling information related to FIG. 44.

Main video supports a viewport range or a user viewport range in an acquisition space ranging from -180 to 180 degrees in the horizontal direction, and supports a viewport range or a user viewport range in an acquisition space ranging from -90 to 90 degrees in the vertical direction.

A full picture frame is partitioned into four regions, each of which may be mapped on a pyramid or an equirectangle. In the embodiment shown, each region is mapped on the pyramid.

A first rectangular region, Pyramid 1, supports a user viewport ranging from - 180 to 0 degrees in the horizontal direction, and supports a user viewport ranging from -90 to 90 degrees in the vertical direction. A second rectangular region, Pyramid 2, supports a viewport range or a user viewport range in an acquisition space ranging from -90 to 90 degrees in the horizontal direction, and supports a viewport range or a user viewport range in an acquisition space ranging from -90 to 90 degrees in the vertical direction. A third rectangular region, Pyramid 3, supports a viewport range or a user viewport range in an acquisition space ranging from 0 to 180 degrees in the horizontal direction, and supports a viewport range or a user viewport range in an acquisition space ranging from -90 to 90 degrees in the vertical direction. A fourth rectangular region, Pyramid 4, supports a viewport range or a user viewport range in an acquisition space ranging from 90 to 180 degrees and from -180 to -90 degrees in the horizontal direction, and supports a viewport range or a user viewport range in an acquisition space ranging from -90 to 90 degrees in the vertical direction. Particularly, in the fourth case, signaling is necessary to indicate two rectangular regions that are not adjacent to each other and two VR user viewport areas. To this end, the embodiment shown describes regions that are not adjacent to each other using two srds and two vr-srds. In the embodiment shown, the second value to the fifth value, 90, -90, 180, and 90, of supplementalProperty value = "0,90,-90,180,90,-180,-90,180,90" of the first vr-srd indicate the minimum value of the horizontal viewport range, the minimum value of the vertical viewport range, the maximum value of the horizontal viewport range, and the maximum value of the vertical viewport range, respectively. That is, the first srd and vr-srd may provide information about the left rectangle of the fourth region (Pyramid 4). In addition, the second value to the fifth value, -180, 0, 0, and 90, of supplementalProperty value = "0,-180,0,0,90,-180,-90,180,90" of the vr-srd indicate the minimum value of the horizontal viewport range, the minimum value of the vertical viewport range, the maximum value of the horizontal viewport range, and the maximum value of the vertical viewport range, respectively. That is, the first srd and vr-srd may provide information about the right rectangle of the fourth region (Pyramid 4). Here, information included in the right rectangle of the fourth region (Pyramid 4) may be identical to information included in the left rectangle of the first region (Pyramid 1).

This method may be used to describe a spatial region and a user viewport support range of a non-rectangular region. Main video provides content having three quality levels corresponding to resolutions of 960*480, 1920*960, and 3840*1920, and each rectangle supports three resolutions of 480*480, 960*960, and 1920*1920. In this embodiment, the main video frame is divided into four HEVC tiles. However, a rectangular region corresponding to each tile and video corresponding to the main video may be independently encoded using an existing codec, such as AVC/H.264.

### Operation of receiver

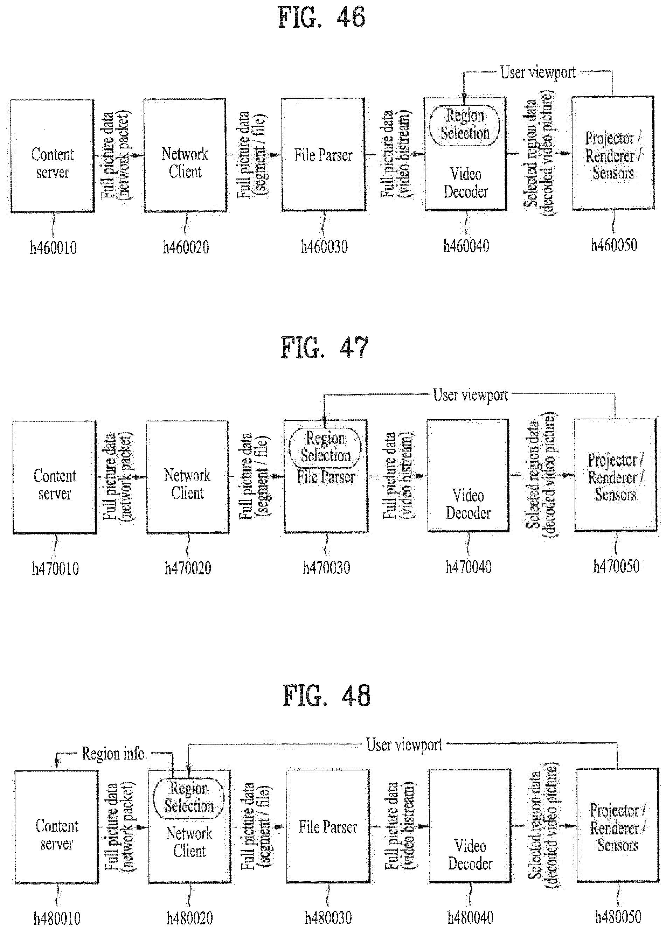

FIG. 46 is a view showing the operation of a receiver according to an embodiment of the present invention.

FIG. 46 shows the operation of the receiver for selecting/reproducing transmission data according to a user viewport in a VCL (Video Coding Layer).

The operation of the receiver using the data selection and reproduction method according to the user viewport in the VCL described above may be as follows.

First, media data including VR content, i.e. 360-degree video, may be provided from a content server h460010.

Subsequently, a network client h460020 in the receiver may generate VR content files or segments from packets received from the content server h460010. In an alternative embodiment, the files or segments may be delivered to the receiver through other storage media.

Subsequently, a file parser h460030 may parse the received files or segments, and may deliver a video bitstream corresponding to a full picture to a video decoder h460040.

Subsequently, the video decoder h460040 may decode the video stream corresponding to the full picture, or may decode data of the region corresponding to an initial user viewport through proposed vr_rect_region_mapping() and vr_tile_rect_region_mapping() SEI messages, and may deliver the decoded data to a projector/renderer/sensors h460050. At this time, the initial viewport may be a viewport in which the intention of a content author is reflected. The initial viewport is not limited to an initial start point of the entire content, and may exist in every sequence unit or in every scene unit. That is, the initial viewport may be a viewport in which the intention of a content author is reflected, and may be distinguished from a user viewport, which is a viewport in which the intention of a user is reflected.

Meanwhile, in the case in which there is feedback to the user viewport, the video decoder h460040 may decode data of the region corresponding to the user viewport (feedback user viewport), and may deliver the decoded data to the projector/renderer/sensors h460050.

Subsequently, the projector/renderer/sensors h460050 project the received full picture or region data according to the projection scheme, render the same on a 3D model, and output the region corresponding to the initial viewport or the user viewport through a user display. The user viewport may be continuously monitored through the sensors, and may be delivered to the video decoder h460040. The video decoder h460040 may select and decode the region using the received user viewport. The decoded region may be projected, rendered, and output to the user display. The above processes may be repeated.

FIG. 47 is a view showing the operation of a receiver according to another embodiment of the present invention.

FIG. 47 shows the operation of the receiver for selecting/reproducing transmission data according to a user viewport at a file format level.

The operation of the receiver using the data selection and reproduction method according to the user viewport at the file format level described above may be as follows.

First, media data including VR content, i.e. 360-degree video, may be provided from a content server h470010.

Subsequently, a network client h470020 in the receiver may generate VR content files or segments from packets received from the content server h470010. In an alternative embodiment, the files or segments may be delivered to the receiver through other storage media.

Subsequently, a file parser h470030 may parse the received files or segments to extract a video bitstream, and may deliver the extracted video bitstream to a video decoder h470040. At this time, the file parser h470030 may extract a video bitstream corresponding to a full picture, or may extract data of the region corresponding to an initial user viewport through the 'vrvd' and 'vsrm' information described above, and may deliver the extracted data to the video decoder h470040. At this time, the initial viewport may be a viewport in which the intention of a 360-degree content author is reflected. The initial viewport is not limited to an initial start point of the entire content, and may exist in every sequence unit or in every scene unit. That is, the initial viewport may be a viewport in which the intention of a content author is reflected, and may be distinguished from a user viewport, which is a viewport in which the intention of a user is reflected.

Meanwhile, in the case in which there is feedback to the user viewport, the file parser h470030 may extract data of the region corresponding to the user viewport (feedback user viewport), and may deliver the extracted data to the video decoder h470040.

Subsequently, the video decoder h470040 decodes the received video bitstream, and delivers the decoded video bitstream to a projector/renderer/sensors h470050.

Subsequently, the projector/renderer/sensors h470050 project the received full picture or region data according to the projection scheme, render the same on a 3D model, and output the region corresponding to the initial viewport or the user viewport through a user display. The user viewport may be continuously monitored through the sensors, and may be delivered to the file parser h470030. The file parser h470030 may extract the region using the received user viewport. The extracted region may be decoded by the video decoder, projected, rendered, and output to the user display. The above processes may be repeated.

FIG. 48 is a view showing the operation of a receiver according to a further embodiment of the present invention.

FIG. 48 shows the operation of the receiver for selecting/reproducing transmission data according to a user viewport in a unicast environment.

The operation of the receiver using the data selection and reproduction method according to the user viewport in the unicast environment described above may be as follows.

First, media data including VR content, i.e. 360-degree video, may be provided from a content server h480010.

Subsequently, a network client h480020 in the receiver may generate VR content files or segments from packets received from the content server h480010. In an alternative embodiment, the files or segments may be delivered to the receiver through other storage media. At this time, the network client h480020 may receive data corresponding to a full picture, or may receive data of the region corresponding to an initial user viewport. At this time, the initial viewport may be a viewport in which the intention of a 360-degree content author is reflected. The initial viewport is not limited to an initial start point of the entire content, and may exist in every sequence unit or in every scene unit. That is, the initial viewport may be a viewport in which the intention of a content author is reflected, and may be distinguished from a user viewport, which is a viewport in which the intention of a user is reflected.

Meanwhile, in the case in which there is feedback to the user viewport, the network client h480020 may receive data of the region corresponding to the user viewport (feedback user viewport).

In an embodiment, the network client h480020 may be a DASH client. The DASH client may select AdaptationSet/Representation corresponding to the user viewport using information such as vr-map, vr-srd, and srd, described above, and may request segments corresponding thereto from a content server (DASH server) in order to receive the segments.

Subsequently, a file parser h480030 may parse the received files or segments to extract a video bitstream, and may deliver the extracted video bitstream to a video decoder h480040.

Subsequently, the video decoder h480040 decodes the received video bitstream, and delivers the decoded video bitstream to a projector/renderer/sensors h480050.

Subsequently, the projector/renderer/sensors h480050 projects the received full picture or region data according to the projection scheme, renders the same on a 3D model, and outputs the region corresponding to the user viewport through a user display. The user viewport may be continuously monitored through the sensors, and may be delivered to the network client h480020. The network client h480020 may receive data of the region using the received user viewport. The received region data may be decoded by the video decoder h480040. The extracted region data may be decoded by the video decoder h480040, projected, rendered, and output to the user display. The above processes may be repeated.

In an aspect of the present invention, a 360-degree video transmission method is disclosed.

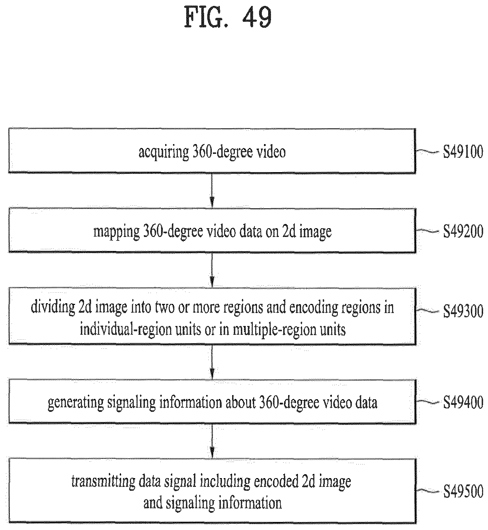

FIG. 49 is a view showing a 360-degree video transmission method according to an embodiment of the present invention.

A 360-degree video transmission method according to an embodiment of the present invention may include a step of acquiring 360-degree video data (S49100), a step of mapping the 360-degree video data on a 2D image (S49200), a step of dividing the 2D image into two or more regions and encoding the regions in individual-region units or in multiple-region units (S49300), a step of generating signaling information about the 360-degree video data (S49400), and a step of transmitting a data signal including the encoded 2D image and the signaling information (S49500). Here, the signaling information may include grouping information enabling grouping of the two or more regions.

At the step of acquiring the 360-degree video data (S49100), the 360-degree video data may be acquired. As previously described with reference to FIGs. 1, 2, 4, and 12, the 360-degree video data may be acquired by capturing 360-degree video using a 360-degree camera (VR camera), or may be acquired by generating data corresponding to the 360-degree video.

The step of mapping the 360-degree video data on the 2D image (S49200) may be a step of mapping three-dimensional 360-degree video in two dimensions. The step of mapping the 360-degree video data on the 2D image (S49200) may be performed after the three-dimensional 360-degree video is stitched and projected according to a predetermined projection scheme, as described with reference to FIGs. 1, 2, 4, and 12. Here, the projection scheme may be variously provided. The description made with reference to FIGs. 6, 8, 30, 31, 32, 33, 34, and 35 may be applied to the projection scheme.

The step of dividing the 2D image into the two or more regions and encoding the regions in individual-region units or in multiple-region units (S49300) may be a step of encoding the 2D image for each region or for each set of regions. Here, the description made with reference to FIGs. 1, 4, 12 to 28, and 30 to 48 may be applied to the region. That is, in some embodiments, the region may be used to have the same meaning as a tile or an HEVC tile. In addition, an individual region may be a single unit region, and multiple regions may be a set of individual regions. In addition, in an embodiment in which a region and a tile are identical to each other, a tile set or a tile region may correspond to multiple regions.

The step of generating the signaling information about the 360-degree video data (S49400) may be a step of generating signaling information required to provide 360-degree video. Such signaling information may be called 360-degree-video-related metadata or 360-degree-video-related signaling information, as described with reference to FIG. 8. As described with reference to FIGs. 1 to 4, the signaling information may be generated at each step performed to provide 360-degree video. In addition, the signaling information may be included at a video level, a file format level, and/or a system level. An embodiment in which signaling information is included in an SEI message is provided as video-level signaling. An embodiment in which signaling information is included in a file box of ISO BMFF is provided as file-format-level signaling. An embodiment in which signaling information is included in DASH MPD is provided as system-level signaling. These embodiments were described previously.

The step of transmitting the data signal including the encoded 2D image and the signaling information (S49500) may be a step of transmitting the data signal to a reception apparatus. In an embodiment, a step of processing the encoded 2D image and the signaling information for transmission may be further performed before the step of transmitting the data signal including the encoded 2D image and the signaling information (S49500). The step of performing processing for transmission may correspond to the step of configuring the data in the transmission format, described with reference to FIG. 12. That is, this step may be a step of encapsulating the 2D image corresponding to the 360-degree video data in a file format. The file format may be an ISO BMFF file format. In addition, the step of transmitting the data signal may be a step of transmitting the data signal through a broadcast network and/or a broadband connection.

Meanwhile, the signaling information may include grouping information enabling grouping of the two or more regions. The description made with reference to FIGs. 12 to 28 may be applied to signaling related to grouping. Specifically, the grouping information may include first group information and second group information.

Here, the first group information may provide grouping information about an individual region or multiple regions that can be selectively reproduced or streamed. For example, in the case in which an individual region is stored in a track or in the case in which multiple regions are stored in a track, the first group information may provide grouping information about tracks that can be selectively reproduced or streamed, among a plurality of tracks. A concrete embodiment of the first group information includes the alternate_group field of the tkhd box and the track_group_id field of the ttgr box, described with reference to FIGs. 13 to 15.

In addition, the second group information may provide grouping information about an individual region or multiple regions that can be switched. For example, in the case in which an individual region is stored in a track or in the case in which multiple regions are stored in a track, the second group information may provide grouping information about tracks that can be switched, among a plurality of tracks. Since grouping about whether switching is possible is based on the premise that selective reproduction or streaming is possible, there may be a restriction in which the group according to the second group information must be included in the group according to the first group information. A concrete embodiment of the second group information includes the alternate_group field of the tsel box and the track_group_id field of the tsgr box, described with reference to FIGs. 14 and 15.

Meanwhile, the signaling information may further include coding dependency information between individual regions, between multiple regions, or between an individual region and multiple regions. The description made with reference to FIGs. 15 to 28 may be applied to the coding dependency information.

Meanwhile, the signaling information may further include projection scheme information indicating the projection scheme used to project the 360-degree video data on the 2D image and/or mapping information between the 2D image and 360-degree video included in the 360-degree video data. The projection scheme information may mean vr_mapping_type of FIGs. 24 to 37. In addition, the mapping information may mean the mapping information between the 2D frame or the 360-degree video acquisition space or the user viewport space, described with reference to FIGs. 24 to 37.

Meanwhile, the signaling information may further include rotation information indicating the rotational angle when at least one of the individual regions of the 2D image is rotated by a predetermined angle so as to be mapped on the 2D image. Here, the rotation information may mean roll_in_degree[i], described with reference to FIGs. 29 to 45.

In another aspect of the present invention, a 360-degree video transmission apparatus is disclosed.

A 360-degree video transmission apparatus according to another aspect of the present invention may include a data input unit (not shown) for allowing 360-degree video data to be input, a mapping-processing unit (not shown) for mapping the 360-degree video data on a 2D image, a data encoder (not shown) for dividing the 2D image into two or more regions and encoding the regions in individual-region units or in multiple-region units, a signaling generation unit (not shown) for generating signaling information about the 360-degree video data, a data signal generation unit (not shown) for generating a data signal including the encoded 2D image and the signaling information, and a transmission unit (not shown) for transmitting the generated data signal to a reception apparatus. The description of the signaling information in the 360-degree video transmission method described with reference to FIG. 49 may be equally applied to the signaling information.

In another aspect of the present invention, a 360-degree video reception apparatus is disclosed.

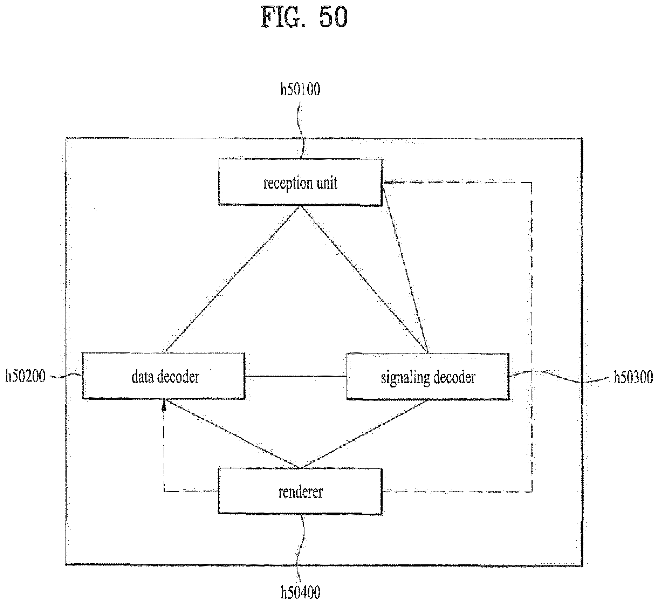

FIG. 50 is a view showing a 360-degree video reception apparatus according to an embodiment of the present invention.

A 360-degree video reception apparatus according to an embodiment of the present invention may include a reception unit h50100 for receiving a data signal including a 2D image including 360-degree video data and signaling information about the 360-degree video data, a data decoder h50200 for decoding the 2D image included in the data signal, a signaling decoder h50300 for decoding the signaling information included in the data signal, and a renderer h50400 for processing the 2D image to render the 360-degree video data in a 3D space. Here, the 2D image received by the 360-degree video reception apparatus may be divided into two or more regions so as to be encoded in individual-region units or in multiple-region units, and the signaling information may include grouping information enabling grouping of the two or more regions.

The reception unit h50100 may receive a data signal including a 2D image including 360-degree video data and signaling information about the 360-degree video data. The reception unit h50100 may receive the data signal through a broadcast network and/or a broadband connection. The reception unit h50100 may deliver the received data signal to the data decoder h50200 and/or the signaling decoder h50300. In an embodiment, the 360-degree video reception apparatus may further include a file parser (not shown). In this case, the reception unit may deliver the data signal to the file parser. The file parser may parse or decapsulate a file format included in the data signal, may deliver the 2D image to the data decoder h50200, and may deliver the signaling information to the signaling decoder h50300. In an embodiment, the reception unit h50100 may receive feedback information from the renderer h50400, and may deliver data corresponding to the region related to the feedback information to the file parser or the data decoder h50200. More specifically, the feedback information may include user viewport information, and the reception unit h50100 may deliver data corresponding to at least one region included in the user viewport information, received from the renderer h50400, to the file parser (not shown) or the data decoder h50200. The detailed description of this embodiment is identical to the description made with reference to FIG. 48. In addition, the reception unit h50100 may deliver system-level signaling information to the signaling decoder h50300.

In the above-described embodiment, the 360-degree video reception apparatus may further include a file parser (not shown). The file parser may process the data signal received by the reception unit h50100 to extract the 2D image and the signaling information. In an embodiment, processing of the data signal performed by the file parser may be processing of data formatted in a file format. The file format may be an ISO BMFF file format. The file format may include a 2D image and signaling information about 360-degree video. The file parser may extract the 2D image and/or the signaling information about the 360-degree video from the file format. In an embodiment, the file parser may receive feedback information from the renderer h50400, and may deliver data corresponding to the region related to the feedback information to the data decoder h50200. More specifically, the feedback information may include user viewport information, and the file parser may deliver data corresponding to at least one region included in the user viewport information, received from the renderer h50400, to the data decoder h50200. The detailed description of this embodiment is identical to the description made with reference to FIG. 47.

The data decoder h50200 may decode data included in the data signal received by the reception unit h50100 or data extracted by the file parser. The data decoder h50200 may decode the 2D image including the 360-degree video data, and may deliver the decoded 2D image to the renderer h50400. In an embodiment, the 2D image may include video-level signaling information. In the case in which the video-level signaling information is included in the 2D image, the data decoder h50200 may deliver the signaling information to the signaling decoder h50300. In an embodiment, the data decoder h50200 may receive feedback information from the renderer h50400, and may deliver data corresponding to the region related to the feedback information to the renderer h50400. More specifically, the feedback information may include user viewport information, and the data decoder h50200 may deliver data corresponding to at least one region included in the user viewport information, received from the renderer h50400, to the renderer h50400. The detailed description of this embodiment is identical to the description made with reference to FIG. 46.

The signaling decoder h50300 may parse the signaling information included in the data signal. The signaling information may include system-level signaling information, file-format-level signaling information, and/or video-level signaling information.

The renderer h50400 may render the 360-degree video data using the 2D image decoded by the data decoder h50200 and the signaling information decoded by the signaling decoder h50300. The renderer h50400 may render the 360-degree video on a 3D model in order to provide a user with an omnidirectional visual experience. In an embodiment, the renderer h50400 may generate user viewport information. The user viewport information may be generated by sensing a user viewport or via user input. The user viewport information may be included in the feedback information so as to be fed back to the data decoder h50200, the file parser (not shown), and/or the reception unit h50100. The detailed description of the feedback to the user viewport information is identical to the description made with reference to FIGs. 46 to 48.

As previously described, the signaling information may be called 360-degree-video-related metadata or 360-degree-video-related signaling information. In addition, the signaling information may be included at a video level, a file format level, and/or a system level. An embodiment in which signaling information is included in an SEI message is provided as video-level signaling. An embodiment in which signaling information is included in a file box of ISO BMFF is provided as file-format-level signaling. An embodiment in which signaling information is included in DASH MPD is provided as system-level signaling.

In addition, the signaling information may include grouping information enabling grouping of the two or more regions. The description made with reference to FIGs. 12 to 28 may be applied to signaling related to grouping. Specifically, the grouping information may include first group information and second group information.

Here, the first group information may provide grouping information about an individual region or multiple regions that can be selectively reproduced or streamed. For example, in the case in which an individual region is stored in a track or in the case in which multiple regions are stored in a track, the first group information may provide grouping information about tracks that can be selectively reproduced or streamed, among a plurality of tracks. A concrete embodiment of the first group information includes the alternate_group field of the tkhd box and the track_group_id field of the ttgr box, described with reference to FIGs. 13 to 15.

In addition, the second group information may provide grouping information about an individual region or multiple regions that can be switched. For example, in the case in which an individual region is stored in a track or in the case in which multiple regions are stored in a track, the second group information may provide grouping information about tracks that can be switched, among a plurality of tracks. Since grouping about whether switching is possible is based on the premise that selective reproduction or streaming is possible, there may be a restriction in which the group according to the second group information must be included in the group according to the first group information. A concrete embodiment of the second group information includes the alternate_group field of the tsel box and the track_group_id field of the tsgr box, described with reference to FIGs. 14 and 15.

Meanwhile, the signaling information may further include coding dependency information between individual regions, between multiple regions, or between an individual region and multiple regions. The description made with reference to FIGs. 15 to 28 may be applied to the coding dependency information.

Meanwhile, the signaling information may further include projection scheme information indicating the projection scheme used to project the 360-degree video data on the 2D image and/or mapping information between the 2D image and 360-degree video included in the 360-degree video data. The projection scheme information may mean vr_mapping_type of FIGs. 24 to 45. In addition, the mapping information may mean the mapping information between the 2D frame or the 360-degree video acquisition space or the user viewport space, described with reference to FIGs. 24 to 45.

Meanwhile, the signaling information may further include rotation information indicating the rotational angle when at least one of the individual regions of the 2D image is rotated by a predetermined angle so as to be mapped on the 2D image. Here, the rotation information may mean roll_in_degree[i], described with reference to FIGs. 29 to 45.

In a further aspect of the present invention, a 360-degree video reception method is disclosed. A 360-degree video reception method according to a further aspect of the present invention may include a series of processes performed by the structural elements of the 360-degree video reception apparatus described above.

A 360-degree video reception method according to an embodiment of the present invention may include a step of receiving a data signal including a 2D image including 360-degree video data and signaling information about the 360-degree video data, a step of decoding the signaling information included in the data signal, a step of decoding the 2D image included in the data signal, and a step of processing the 2D image to render the 360-degree video data in a 3D space. Here, the 2D image received at the step of receiving the data signal may be divided into two or more regions so as to be encoded in individual-region units or in multiple-region units, and the signaling information may include grouping information enabling grouping of the two or more regions. The description of the signaling information in the 360-degree video transmission method and the 360-degree video reception apparatus described with reference to FIGs. 49 and 50 may be equally applied to the signaling information.

The internal components of the apparatus may be processors that execute consecutive processes stored in a memory or other hardware components. These may be located inside/outside the apparatus.

In some embodiments, the above-described modules may be omitted, or may be replaced by other modules that perform the same or similar operations.

The above-described parts, modules, or units may be processors or hardware parts that execute consecutive processes stored in a memory (or a storage unit). The steps described in the above-described embodiments can be performed by processors or hardware parts. The modules/blocks/units described in the above-described embodiments can operate as hardware/processors. In addition, the methods proposed by the present invention can be executed as code. Such code can be written on a processor-readable storage medium and thus can be read by a processor provided by an apparatus.

While the present invention has been described with reference to separate drawings for the convenience of description, new embodiments may be implemented by combining embodiments illustrated in the respective drawings. As needed by those skilled in the art, designing a computer-readable recording medium, in which a program for implementing the above-described embodiments is recorded, falls within the scope of the present invention.

The apparatus and method according to the present invention is not limitedly applied to the constructions and methods of the embodiments as previously described; rather, all or some of the embodiments may be selectively combined to achieve various modifications.

Meanwhile, the method proposed by the present invention may be implemented as code that can be written on a processor-readable recording medium and thus read by a processor provided in a network device. The processor-readable recording medium may be any type of recording device in which data are stored in a processor-readable manner. The processor-readable recording medium may include, for example, read only memory (ROM), random access memory (RAM), compact disc read only memory (CD-ROM), magnetic tape, a floppy disk, and an optical data storage device, and may be implemented in the form of a carrier wave transmitted over the Internet. In addition, the processor-readable recording medium may be distributed over a plurality of computer systems connected to a network such that processor-readable code is written thereto and executed therefrom in a decentralized manner.

In addition, it will be apparent that, although the preferred embodiments have been shown and described above, the present specification is not limited to the above-described specific embodiments, and various modifications and variations can be made by those skilled in the art to which the present invention pertains without departing from the gist of the appended claims. Thus, it is intended that the modifications and variations should not be understood independently of the technical spirit or prospect of the present specification.

Those skilled in the art will appreciate that the present invention may be carried out in other specific ways than those set forth herein without departing from the spirit and essential characteristics of the present invention. Therefore, the scope of the invention should be determined by the appended claims and their legal equivalents, rather than by the above description, and all changes that fall within the meaning and equivalency range of the appended claims are intended to be embraced therein.

In addition, the present specification describes both a product invention and a method invention, and descriptions of the two inventions may be complementarily applied as needed.

### [Mode for Invention]

Various embodiments have been described in the best mode for carrying out the invention.

### [Industrial Applicability]

The present invention is used in a series of VR-related fields.

Those skilled in the art will appreciate that the present invention may be carried out in other specific ways than those set forth herein without departing from the spirit and essential characteristics of the present invention. Therefore, the scope of the invention should be determined by the appended claims and their legal equivalents, rather than by the above description, and all changes that fall within the meaning and equivalency range of the appended claims are intended to be embraced therein.

## Claims

1. A 360-degree video reception apparatus comprising:
a reception unit for receiving a data signal comprising a 2D image comprising 360-degree video data and signaling information about the 360-degree video data,
the 2D image being divided into two or more regions so as to be encoded in individual-region units or in multiple-region units;
a data decoder for decoding the 2D image contained in the data signal;
a signaling decoder for decoding the signaling information contained in the data signal; and
a renderer for processing the 2D image to render the 360-degree video data in a 3D space, wherein
the signaling information comprises grouping information enabling grouping of the two or more regions.

2. The 360-degree video reception apparatus according to claim 1, wherein the grouping information comprises first group information providing grouping information about the individual region or the multiple regions that can be reproduced.

3. The 360-degree video reception apparatus according to claim 2, wherein the grouping information further comprises second group information providing grouping information about the individual region or the multiple regions that can be switched during reproduction.

4. The 360-degree video reception apparatus according to claim 1, wherein the signaling information further comprises coding dependency information between individual regions, between multiple regions, or between the individual regions and the multiple regions.

5. The 360-degree video reception apparatus according to claim 1, wherein the signaling information further comprises projection scheme information indicating a projection scheme used to project the 360-degree video data on the 2D image.

6. The 360-degree video reception apparatus according to claim 5, wherein the signaling information further comprises mapping information between the 2D image and a 360-degree image contained in the 360-degree video data.

7. The 360-degree video reception apparatus according to claim 6, wherein the signaling information further comprises rotation information indicating a rotational angle when at least one of the individual regions of the 2D image is rotated by a predetermined angle so as to be mapped on the 2D image.

8. The 360-degree video reception apparatus according to claim 1, wherein the renderer generates and outputs user viewport information comprising at least one region.

9. The 360-degree video reception apparatus according to claim 8, wherein the data decoder decodes data corresponding to the at least one region contained in the user viewport information received from the renderer.

10. The 360-degree video reception apparatus according to claim 8, further comprising:
a file parser for decapsulating a file format contained in the data signal, wherein
the file parser extracts data corresponding to the at least one region contained in the user viewport information received from the renderer.

11. The 360-degree video reception apparatus according to claim 8, wherein the reception unit receives data corresponding to the at least one region contained in the user viewport information received from the renderer.

12. A 360-degree video transmission method comprising:
acquiring 360-degree video data;
mapping the 360-degree video data on a 2D image;
dividing the 2D image into two or more regions and encoding the regions in individual-region units or in multiple-region units;
generating signaling information about the 360-degree video data; and
transmitting a data signal comprising the encoded 2D image and the signaling information, wherein
the signaling information comprises grouping information enabling grouping of the two or more regions.

13. The 360-degree video transmission method according to claim 12, wherein the grouping information comprises first group information providing grouping information about the individual region or the multiple regions that can be reproduced.

14. The 360-degree video transmission method according to claim 13, wherein the grouping information further comprises second group information providing grouping information about the individual region or the multiple regions that can be switched.

15. The 360-degree video transmission method according to claim 12, wherein the signaling information further comprises coding dependency information between individual regions, between multiple regions, or between the individual regions and the multiple regions.

16. The 360-degree video transmission method according to claim 12, wherein the signaling information further comprises projection scheme information indicating a projection scheme used to project the 360-degree video data on the 2D image.

17. The 360-degree video transmission method according to claim 16, wherein the signaling information further comprises mapping information between the 2D image and a 360-degree image contained in the 360-degree video data.

18. The 360-degree video transmission method according to claim 17, wherein the signaling information further comprises rotation information indicating a rotational angle when at least one of the individual regions of the 2D image is rotated by a predetermined angle so as to be mapped on the 2D image.
